(19)

Europäisches
Patentamt
European
Patent Office
Office européen
des brevets

(11)  **EP 3 264 152 A1**

(12)  **EUROPEAN PATENT APPLICATION**
published in accordance with Art. 153(4) EPC

(43) Date of publication:
**03.01.2018 Bulletin 2018/01**

(21) Application number: **16755352.8**

(22) Date of filing: **19.02.2016**

(51) Int Cl.:
**G02B 15/20** (2006.01)

(86) International application number:
**PCT/JP2016/054823**

(87) International publication number:
**WO 2016/136606 (01.09.2016 Gazette 2016/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.02.2015 JP 2015034373**
**24.02.2015 JP 2015034375**

(71) Applicant: **Nikon Corporation**
**Tokyo 108-6290 (JP)**

(72) Inventors:
• **NISHI, Yasufumi**
**Tokyo 108-6290 (JP)**
• **ISHIKAWA, Takahiro**
**Tokyo 108-6290 (JP)**

(74) Representative: **Hoffmann Eitle**
**Patent- und Rechtsanwälte PartmbB**
**Arabellastraße 30**
**81925 München (DE)**

(54)  **ZOOM LENS, OPTICAL DEVICE AND METHOD FOR MANUFACTURING ZOOM LENS**

(57)  A zoom lens comprises a first lens group (G1), a second lens group (G2), a third lens group (G3), a fourth lens group (G4), and a fifth lens group (G5) having positive refractive power. Upon zooming, the first lens group (G1), the second lens group (G2), the third lens group (G3), the fourth lens group (G4), and the fifth lens group (G5) are moved along an optical axis to change a distance between the first lens group (G1) and the second lens group (G2), a distance between the second lens group (G2) and the third lens group (G3), a distance between the third lens group (G3) and the fourth lens group (G4), and a distance between the fourth lens group (G4) and the fifth lens group (G5), in such a manner that the following conditional expression is satisfied.

$$2.30 < f5/d4w < 3.60$$

**FIG.1**

**Description**

TECHNICAL FIELD

The present invention relates to a zoom lens, an optical apparatus and a method for manufacturing a zoom lens.

TECHNICAL BACKGROUND

A zoom lens suitable for photographic cameras, electronic still cameras, video cameras, and the like has conventionally been proposed (see, for example, Patent Document 1) . A zoom lens including: a first lens group having positive refractive power; a second lens group having negative refractive power; a third lens group having positive refractive power; a fourth lens group having negative refractive power; and a fifth lens group having positive refractive power which are disposed in order from an object, and performing zooming by moving the lens groups has conventionally been proposed (see, for example, Patent Document 2) .

PRIOR ARTS LIST

PATENT DOCUMENT

Patent Document 1: Japanese Laid-Open Patent Publication No. 2013-140307 (A)
Patent Document 2 : Japanese Laid-Open Patent Publication No. 2012-247564 (A)

SUMMARY OF THE INVENTION

PROBLEMS TO BE SOLVED BY THE INVENTION

The conventional zoom lens has an exit pupil close to an image surface especially in a wide angle end state, involving a risk of what is known as shading that is optical vignetting on the image surface. Zoom lenses have recently been required to have higher optical performance.

MEANS TO SOLVE THE PROBLEMS

To achieve the object described above, a zoom lens according to a first zoom lens invention comprises: a first lens group having positive refractive power; a second lens group having negative refractive power; a third lens group having positive refractive power; a fourth lens group having negative refractive power; and a fifth lens group having positive refractive power which are disposed in order from an object, wherein upon zooming from a wide angle end state to a telephoto end state, the first lens group, the second lens group, the third lens group, the fourth lens group, and the fifth lens group are moved along an optical axis to change a distance between the first lens group and the second lens group, a distance between the second lens group and the third lens group, a distance between the third lens group and the fourth lens group, and a distance between the fourth lens group and the fifth lens group, and wherein a following conditional expression is satisfied.

$$2.30 < f5/d4w < 3.60$$

where,

f5 denotes a focal length of the fifth lens group, and
d4W denotes a distance between the fourth lens group and the fifth lens group in the wide angle end state.

A zoom lens according to a second zoom lens invention comprises: a first lens group having positive refractive power; a second lens group having negative refractive power; a third lens group having positive refractive power; a fourth lens group having negative refractive power; and a fifth lens group having positive refractive power which are disposed in order from an object, wherein the fifth lens group is moved toward an image side upon zooming from a wide angle end state to a telephoto end state, and wherein a following conditional expression is satisfied.

$$1.96 < f1/(fw \times ft)^{1/2} < 2.80$$

$$0.67 < f4/(fw \times ft)^{1/2} < 2.10$$

where,

f1 denotes a focal length of the first lens group,
f4 denotes a focal length of the fourth lens group,
fw denotes a focal length of the zoom lens in the wide angle end state, and
ft denotes a focal length of the zoom lens in the telephoto end state.

An optical apparatus according to a first apparatus invention comprises the zoom lens according to the first invention described above. An optical apparatus according to a second apparatus invention comprises the zoom lens according to the second invention described above.

A method for manufacturing a zoom lens according to a first method invention including: a first lens group having positive refractive power; a second lens group having negative refractive power; a third lens group having positive refractive power; a fourth lens group having negative refractive power; and a fifth lens group having positive refractive power which are disposed in order from an object, upon zooming from a wide angle end state to a telephoto end state, the first lens group, the second lens group, the third lens group, the fourth lens group, and the fifth lens group moving along an optical axis to change a distance between the first lens group and the second lens group, a distance between the second lens group and the third lens group, a distance between the third lens group and the fourth lens group, and a distance between the fourth lens group and the fifth lens group, according to the first invention comprises arranging the lenses in a lens barrel with a following conditional expression satisfied.

$$2.30 < f5/d4w < 3.60$$

where,

f5 denotes a focal length of the fifth lens group, and
d4W denotes a distance between the fourth lens group and the fifth lens group in the wide angle end state.

A method for manufacturing a zoom lens according to a second method invention including: a first lens group having positive refractive power; a second lens group having negative refractive power; a third lens group having positive refractive power; a fourth lens group having negative refractive power; and a fifth lens group having positive refractive power which are disposed in order from an object, the fifth lens group moving toward an image side upon zooming from a wide angle end state to a telephoto end state, according to a second invention comprises arranging the lenses in a lens barrel with a following conditional expression satisfied.

$$1.96 < f1/(fw \times ft)^{1/2} < 2.80$$

$$0.67 < f4/(fw \times ft)^{1/2} < 2.10$$

where,

f1 denotes a focal length of the first lens group,
f4 denotes a focal length of the fourth lens group,
fw denotes a focal length of the zoom lens in the wide angle end state, and
ft denotes a focal length of the zoom lens in the telephoto end state.

BRIEF DESCRIPTION OF THE DRAWINGS

FIG. 1 is a cross-sectional view with sections (W), (M), and (T) showing a configuration of a zoom lens according to Example 1 respectively in a wide angle end state, an intermediate focal length state, and a telephoto end state.
FIGS. 2A, 2B, and 2C are graphs showing various aberrations of the zoom lens according to Example 1 upon focusing on infinity respectively in the wide angle end state, the intermediate focal length state, and the telephoto end state.

FIG. 3 is a cross-sectional view with sections (W), (M), and (T) showing a configuration of a zoom lens according to Example 2 respectively in the wide angle end state, the intermediate focal length state, and the telephoto end state.
FIGS. 4A, 4B, and 4C are graphs showing various aberrations of the zoom lens according to Example 2 upon focusing on infinity respectively in the wide angle end state, the intermediate focal length state, and the telephoto end state.

FIG. 5 is a cross-sectional view with sections (W), (M), and (T) showing a configuration of a zoom lens according to Example 3 respectively in the wide angle end state, the intermediate focal length state, and the telephoto end state.
FIGS. 6A, 6B, and 6C are graphs showing various aberrations of the zoom lens according to Example 3 upon focusing on infinity respectively in the wide angle end state, the intermediate focal length state, and the telephoto end state.

FIG. 7 is a cross-sectional view with sections (W), (M), and (T) showing a configuration of a zoom lens according to Example 4 respectively in the wide angle end state, the intermediate focal length state, and the telephoto end state.
FIGS. 8A, 8B, and 8C are graphs showing various aberrations of the zoom lens according to Example 4 upon focusing on infinity respectively in the wide angle end state, the intermediate focal length state, and the telephoto end state.

FIGS. 9A and 9B are respectively a front view and a rear view of a digital still camera according to 1st embodiment.
FIG. 10 is a cross-sectional view taken along a line indicated by arrows A-A' in FIG. 9A.
FIG. 11 is a flowchart illustrating a method for manufacturing the zoom lens according to the 1st embodiment.
FIG. 12 is a cross-sectional view with sections (W), and (T) showing a conf iguration of a zoom lens according to Example 5 respectively in the wide angle end state, and the telephoto end state.
FIGS. 13A, 13B, and 13C are graphs showing various aberrations of the zoom lens according to Example 5 upon focusing on infinity respectively in the wide angle end state, the intermediate focal length state, and the telephoto end state.

FIG. 14 is a cross-sectional view with sections (W), and (T) showing a conf iguration of a zoom lens according to Example 6 respectively in the wide angle end state, and the telephoto end state.
FIGS. 15A, 15B, and 15C are graphs showing various aberrations of the zoom lens according to Example 6 upon focusing on infinity respectively in the wide angle end state, the intermediate focal length state, and the telephoto end state.

FIG. 16 is a cross-sectional view with sections (W), and (T) showing a configuration of a zoom lens according to Example 7 respectively in the wide angle end state, and the telephoto end state.
FIGS. 17A, 17B, and 17C are graphs showing various aberrations of the zoom lens according to Example 7 upon focusing on infinity respectively in the wide angle end state, the intermediate focal length state, and the telephoto end state.

FIG. 18 is a cross-sectional view with sections (W), and (T) showing a conf iguration of a zoom lens according to Example 8 respectively in the wide angle end state, and the telephoto end state.
FIGS. 19A, 19B, and 19C are graphs showing various aberrations of the zoom lens according to Example 8 upon focusing on infinity respectively in the wide angle end state, the intermediate focal length state, and the telephoto end state.

FIGS. 20A and 20B are respectively a front view and a rear view of a digital still camera according to 2nd embodiment.
FIG. 21 is a cross-sectional view taken along a line indicated by arrows A-A' in FIG. 20A.
FIG. 22 is a flowchart illustrating a method for manufacturing the zoom lens according to the 2nd embodiment.

DESCRIPTION OF THE EMBODIMENTS (1st EMBODIMENT)

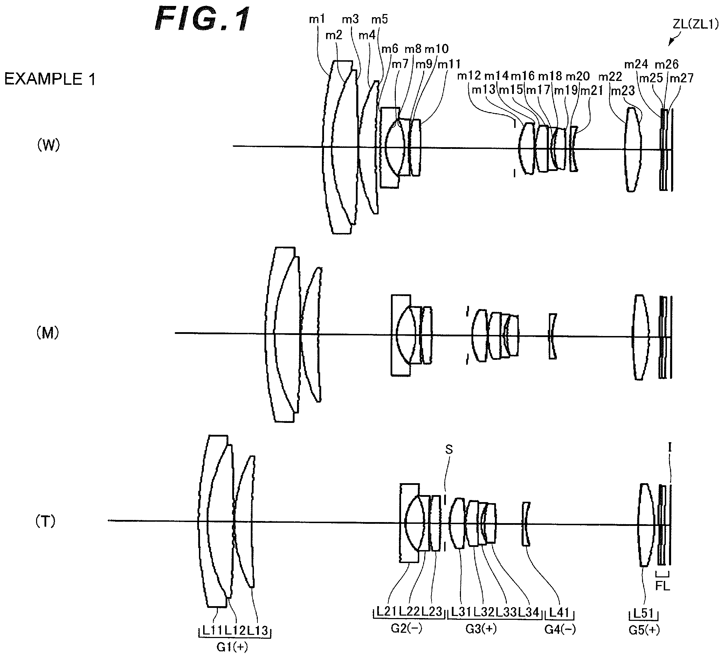

In the description below, 1st embodiment is described with reference to drawings. A zoom lens ZL according to the 1st embodiment includes, as illustrated in FIG. 1, a first lens group G1 having positive refractive power, a second lens group G2 having negative refractive power, a third lens group G3 having positive refractive power, a fourth lens group G4 having negative refractive power, and a fifth lens group G5 having positive refractive power that are disposed in order from an object. Upon zooming from a wide angle end state to a telephoto end state, the first lens group G1, the second lens group G2, the third lens group G3, the fourth lens group G4, and the fifth lens group G5 are moved along the optical axis to change a distance between the first lens group G1 and the second lens group G2, a distance between the second lens group G2 and the third lens group G3, a distance between the third lens group G3 and the fourth lens group G4, and a distance between the fourth lens group G4 and the fifth lens group G5, in such a manner that the following conditional expression (1) is satisfied.

$$2.30 < f5/d4w < 3.60 \ldots (1)$$

where,

f5 denotes a focal length of the fifth lens group G5, and
d4W denotes the distance between the fourth lens group G4 and the fifth lens group G5 in the wide angle end state.

The configuration can achieve a zoom lens having a small size with an exit pupil position sufficiently distant from the image surface, and having high optical performance.

The conditional expression (1) is for setting the focal length of the fifth lens group G5 relative to the distance between the fourth lens group G4 and the fifth lens group G5 in the wide angle end state. The zoom lens ZL according to the 1st embodiment can have the exit pupil position sufficiently distant from the image surface in the wide angle end state, when the conditional expression (1) is satisfied.

A value higher than the upper limit value of the conditional expression (1) results in the exit pupil position too close to the image surface in the wide angle end state, resulting in what is known as shading that is optical vignetting on the image surface, and thus is not preferable. When the exit pupil position is sufficiently distant from the image surface in the wide angle end state with a corresponding value of the conditional expression (1) being at the upper limit, large positive curvature of field occurs over the entire focal length.

To guarantee the effects of the 1st embodiment, the upper limit value of the conditional expression (1) is preferably set to be 3.40.

A value lower than the lower limit value of the conditional expression (1) results in the exit pupil position being too close to the image surface in the telephoto end state, and thus is not preferable. When the exit pupil position is sufficiently distant from the image surface in the telephoto end state with a corresponding value of the conditional expression (1) being at the lower limit, large negative curvature of field occurs over the entire focal length.

To guarantee the effects of the 1st embodiment, the lower limit value of the conditional expression (1) is preferably set to be 2.50.

The zoom lens ZL according to the 1st embodiment preferably satisfies the following conditional expression (2).

$$0.110 < TLt \times f3/(ft \times ft) < 0.134 \ldots (2)$$

where,

TLt denotes the total length of the whole zoom lens in the telephoto end state,
f3 denotes the focal length of the third lens group G3, and
ft denotes the focal length of the whole zoom lens in the telephoto end state.

The conditional expression (2) is for setting relationship between the total length of the whole zoom lens in the telephoto end state and the focal length of the third lens group G3. A short total length of the whole zoom lens ZL according to the 1st embodiment in the telephoto end state can be achieved, when the conditional expression (2) is satisfied.

A value higher than the upper limit value of the conditional expression (2) results in large positive spherical aberration over the entire focal length, and thus is not preferable.

To guarantee the effects of the 1st embodiment, the upper limit value of the conditional expression (2) is preferably set to be 0.130.

A value lower than the lower limit value of the conditional expression (2) results in large negative spherical aberration over the entire focal length, and thus is not preferable.

To guarantee the effects of the 1st embodiment, the lower limit value of the conditional expression (2) is preferably set to be 0.120.

Preferably, upon focusing from infinity to a short-distant object, the zoom lens ZL according to the 1st embodiment has the fourth lens group moved toward the image side as a focusing lens group with the following conditional expression (3) satisfied.

$$32.96 < ft \times ft/\{(-f4) \times d3t\} < 59.21 \ldots (3)$$

where,

ft denotes the focal length of the whole zoom lens in the telephoto end state,
f4 denotes a focal length of the fourth lens group G4, and
d3t denotes the distance between the third lens group G3 and the fourth lens group G4 in the telephoto end state.

The conditional expression (3) is for setting a focal length of the fourth lens group G4 and the distance between the third lens group G3 and the fourth lens group G4 in the telephoto end state. In the zoom lens ZL according to the 1st embodiment, an image surface movement coefficient of the fourth lens group G4 (a ratio of the movement amount of the image surface to the movement amount of the focusing lens group) can be set as appropriate, when the conditional expression (3) is satisfied.

A value higher than the upper limit value of the conditional expression (3) results in large positive spherical aberration in the fourth lens group G4, and thus is not preferable.

To guarantee the effects of the 1st embodiment, the upper limit value of the conditional expression (3) is preferably set to be 50.00.

A value lower than the lower limit value of the conditional expression (3) leads a large movement amount of the fourth lens group G4 upon focusing, resulting in a large total length of the whole zoom lens, and thus is not preferable.

To guarantee the effects of the 1st embodiment, the lower limit value of the conditional expression (3) is preferably set to be 30.00.

The zoom lens ZL according to the 1st embodiment preferably satisfies the following conditional expression (4).

$$1.00° < \omega t < 7.50° \ldots (4)$$

where,
$\omega t$ denotes a half angle of view in the telephoto end state.

The conditional expression (4) is for setting an optimum value of an angle of view in the telephoto end state. Various aberrations, such as a coma aberration, distortion, and curvature of field, can be successfully corrected, when the conditional expression (4) is satisfied.

To guarantee the effects of the 1st embodiment, the upper limit value of the conditional expression (4) is preferably set to be 7.00°. To more effectively guarantee the effects of the 1st embodiment, the upper limit value of the conditional expression (4) is preferably set to be 6.00°.

To guarantee the effects of the 1st embodiment, the lower limit value of the conditional expression (4) is preferably set to be 2.00°.

The zoom lens ZL according to the 1st embodiment preferably satisfies the following conditional expression (5).

$$32.00° < \omega w < 47.00° \ldots (5)$$

where,
$\omega w$ denotes a half angle of view in the wide angle end state.

The conditional expression (5) is for setting an optimum value of an angle of view in the wide angle end state. Various aberrations, such as a coma aberration, distortion, and curvature of field, can be successfully corrected while guaranteeing a wide angle of view, when the conditional expression (5) is satisfied.

To guarantee the effects of the 1st embodiment, the upper limit value of the conditional expression (5) is preferably set to be 45.00°.

To guarantee the effects of the 1st embodiment, the lower limit value of the conditional expression (5) is preferably set to be 33.00° . To more effectively guarantee the effects of the 1st embodiment, the lower limit value of the conditional expression (5) is preferably set to be 34.00°.

The zoom lens ZL according to the 1st embodiment preferably satisfies the following conditional expression (6).

$$1.70 < f1/(fw \times ft)^{1/2} < 2.80 \ldots (6)$$

where,

f1 denotes a focal length of the first lens group G1,
fw denotes a focal length of the zoom lens ZL in the wide angle end state, and
ft denotes a focal length of the zoom lens ZL in the telephoto end state.

The conditional expression (6) is for setting a focal length of the first lens group G1. A spherical aberration and variation of aberration due to zooming can be reduced, when the conditional expression (6) is satisfied.

A value higher than the upper limit value of the conditional expression (6) leads to small refractive power of the first lens group G1, resulting in a large lens movement amount upon zooming and thus a large total length. Furthermore, the refractive power of the other lens groups increases, rendering various aberrations, such as curvature of field, in the telephoto end state difficult to correct.

To guarantee the effects of the 1st embodiment, the upper limit value of the conditional expression (6) is preferably set to be 2.50.

A value lower than the lower limit value of the conditional expression (6) leads to large refractive power of the first lens group G1, rendering various aberrations, such as spherical aberration and curvature of field, in the telephoto end state difficult to correct.

The zoom lens ZL according to the 1st embodiment preferably satisfies the following conditional expression (7).

$$0.67 < f4/(fw \times ft)^{1/2} < 2.10 \ \dots \ (7)$$

where,

f4 denotes a focal length of the fourth lens group G4, and
fw denotes a focal length of the zoom lens ZL in the wide angle end state, and
ft denotes a focal length of the zoom lens ZL in the telephoto end state.

The conditional expression (7) is for setting a focal length of the fourth lens group G4.

A value higher than the upper limit value of the conditional expression (7) renders various aberrations, such as curvature of field, difficult to correct.

To guarantee the effects of the 1st embodiment, the upper limit value of the conditional expression (7) is preferably set to be 1.70.

A value lower than the lower limit value of the conditional expression (7) renders various aberrations, such as curvature of field, difficult to correct.

To guarantee the effects of the 1st embodiment, the lower limit value of the conditional expression (7) is preferably set to be 0.75.

The zoom lens ZL according to the 1st embodiment preferably satisfies the following conditional expression (8).

$$0.100 < Dm5/(fw \times ft)^{1/2} < 0.270 \ \dots \ (8)$$

where,

Dm5 denotes a difference in the position of the fifth lens group G5 on the optical axis between the wide angle end state and the telephoto end state (with a value increasing in accordance with displacement toward the image side),
fw denotes a focal length of the zoom lens ZL in the wide angle end state, and
ft denotes a focal length of the zoom lens ZL in the telephoto end state.

The conditional expression (8) is for setting a movement amount of the fifth lens group G5.

A value higher than the upper limit value of the conditional expression (8) renders various aberrations, such as curvature of field, in the wide angle end state difficult to correct.

To guarantee the effects of the 1st embodiment, the upper limit value of the conditional expression (8) is preferably set to be 0.24.

A value lower than the lower limit value of the conditional expression (8) renders various aberrations, such as curvature of field, difficult to correct.

To guarantee the effects of the 1st embodiment, the lower limit value of the conditional expression (8) is preferably set to be 0.12. To more effectively guarantee the effects of the 1st embodiment, the lower limit value of the conditional expression (8) is preferably set to be 0.16.

The zoom lens ZL according to the 1st embodiment preferably satisfies the following conditional expression (9).

$$0.052 < (-f2)/ft < 0.150 \dots (9)$$

where,

f2 denotes a focal length of the second lens group G2, and
ft denotes a focal length of the zoom lens ZL in the telephoto end state.

The conditional expression (9) is for setting relationship between the focal length of the second lens group G2 and the focal length of the zoom lens ZL in the telephoto end state. A spherical aberration and variation of aberration due to zooming can be reduced, when the conditional expression (9) is satisfied.

A value higher than the upper limit value of the conditional expression (9) leads to excessively small refractive power of the second lens group G2, resulting in larger refractive power of the other lens groups, rendering various aberrations, such as spherical aberration and curvature of field, difficult to correct. Furthermore, the movement amount of the second lens group G2 increases, leading to a larger optical total length and a large front lens diameter, rendering downsizing difficult.

A value lower than the lower limit value of the conditional expression (9) leads to excessively large refractive power of the second lens group G2, rendering various aberrations, such as astigmatism and curvature of field, difficult to correct.

The zoom lens ZL according to the 1st embodiment preferably satisfies the following conditional expression (10).

$$0.020 < D5/ft < 0.050 \dots (10)$$

where,

D5 denotes a thickness of the fifth lens group G5 on the optical axis, and
ft denotes a focal length of the zoom lens ZL in the telephoto end state.

The conditional expression (10) is for setting relationship between the thickness of the fifth lens group G5 on the optical axis and the focal length of the zoom lens ZL in the telephoto end state.

A value higher than the upper limit value of the conditional expression (10) results in an increase in the thickness of the fifth lens group G5 on the optical axis. An attempt to maintain distances among the groups renders various aberrations, such as a coma aberration, difficult to correct.

To guarantee the effects of the 1st embodiment, the upper limit value of the conditional expression (10) is preferably set to be 0.041.

A value lower than the lower limit value of the conditional expression (10) leads to a small thickness of the fifth lens group G5 on the optical axis and small refractive power of the fifth lens group G5, rendering various aberrations, such as curvature of field, difficult to correct.

To guarantee the effects of the 1st embodiment, the lower limit value of the conditional expression (10) is preferably set to be 0.025.

The zoom lens ZL according to the 1st embodiment preferably satisfies the following conditional expression (11).

$$0.005 < (-Dm4)/ft < 0.100 \dots (11)$$

where,

Dm4 denotes a difference in a position of the fourth lens group G4 on the optical axis between the wide angle end state and the telephoto end state (with a value increasing in accordance with displacement toward the image side), and
ft denotes a focal length of the zoom lens ZL in the telephoto end state.

The conditional expression (11) is for setting a movement amount of the fourth lens group G4.

A value higher than the upper limit value of the conditional expression (11) renders various aberrations, such as curvature of field and lateral chromatic aberration, difficult to correct, when the refractive power of the other lens groups is increased to maintain the optical total length.

To guarantee the effects of the 1st embodiment, the upper limit value of the conditional expression (11) is preferably set to be 0.080. To more effectively guarantee the effects of the 1st embodiment, the upper limit value of the conditional expression (11) is preferably set to be 0.075. To more effectively guarantee the effects of the 1st embodiment, the upper limit value of the conditional expression (11) is preferably set to be 0.070.

A value lower than the lower limit value of the conditional expression (11) renders various aberrations, such as spherical aberration and on-axis chromatic aberration, difficult to correct.

With the zoom lens ZL according to the 1st embodiment having the configuration described above, a zoom lens having a small size with an exit pupil position sufficiently distant from the image surface, and having high optical performance can be achieved.

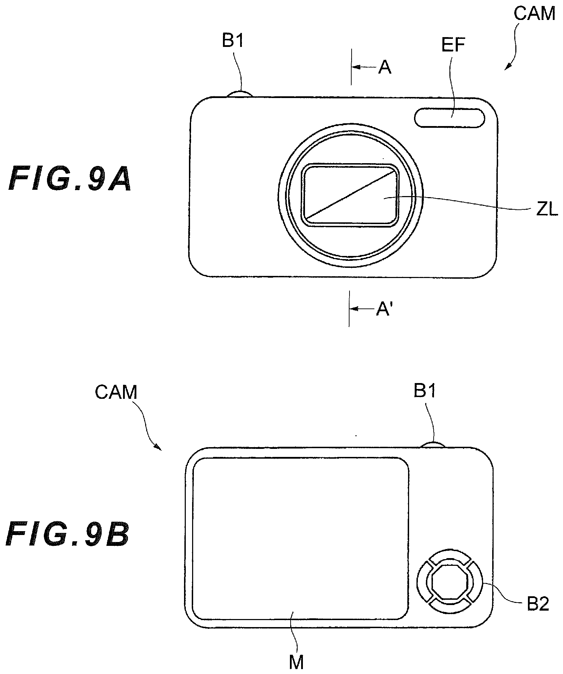

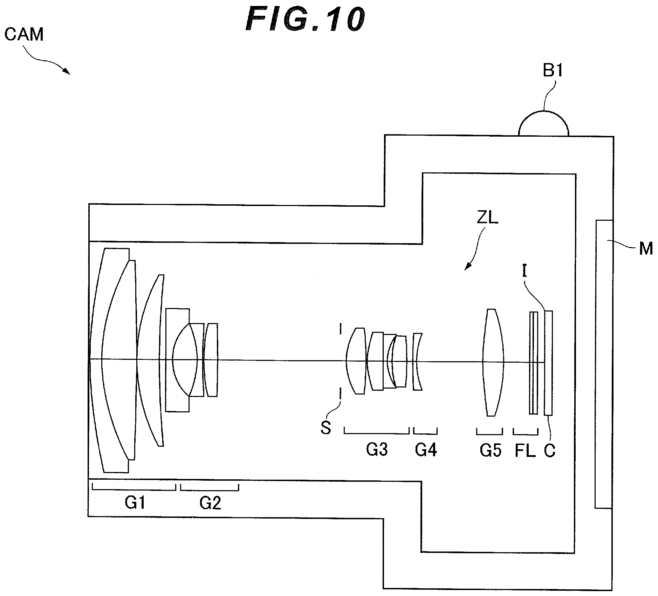

FIGS. 9A and 9B, and FIG. 10 illustrate a configuration of a digital still camera CAM (optical apparatus) that is an optical apparatus including the zoom lens ZL according to the 1st embodiment. When a power button (not illustrated) is pressed, in the digital still camera CAM, a shutter (not illustrated) of an imaging lens (the zoom lens ZL) opens. Thus, light from a subject (object) is focused by the zoom lens ZL and formed on an image sensor C (such as a CCD or a CMOS for example) disposed on an image surface I (see FIG. 1) . A subject image thus formed on the image sensor C is displayed on a liquid crystal monitor M provided on a back side of the digital still camera CAM. A photographer determines a composition of the subject image while viewing the liquid crystal monitor M, and thus presses down a release button B1 to capture the subject image with the image sensor C. The image is recorded and stored in a memory (not illustrated) . The photographer can capture an image of a subject with the camera CAM in the manner described above.

The camera CAM further includes: an auxiliary light emitting unit EF that emits auxiliary light when a subject is dark; and a function button B2 used for setting various conditions of the digital still camera CAM.

In this example, a compact type camera with the camera CAM and the zoom lens ZL integrally formed is described. The optical apparatus may also be a single-lens reflex camera with a lens barrel including the zoom lens ZL and a camera body that can be detachably attached to each other.

With the camera CAM according to the 1st embodiment having the configuration described above including the zoom lens ZL serving as the imaging lens, a camera having a small size with an exit pupil position sufficiently distant from the image surface, and having high optical performance can be achieved.

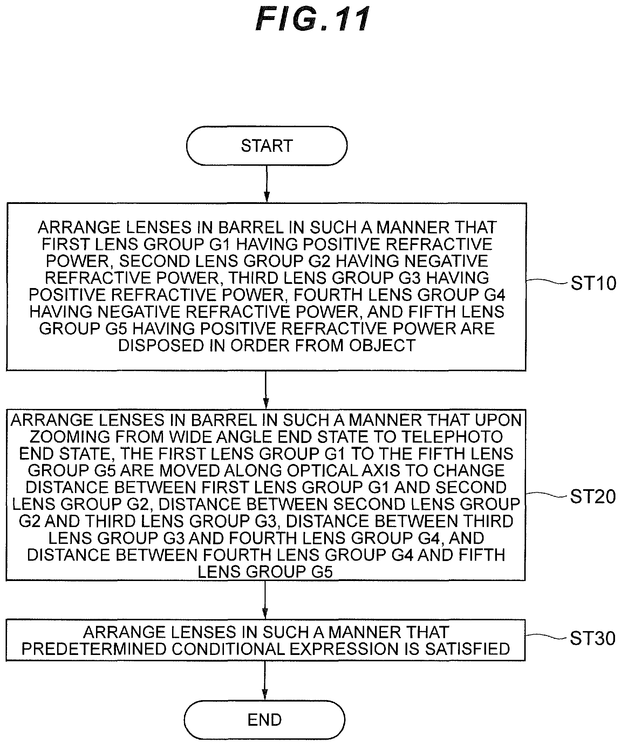

Next, a method for manufacturing the zoom lens ZL according to the 1st embodiment is described with reference to FIG. 11. First of all, the lenses are arranged in a barrel in such a manner that the first lens group G1 having positive refractive power, the second lens group G2 having negative refractive power, the third lens group G3 having positive refractive power, the fourth lens group G4 having negative refractive power, and the fifth lens group G5 having positive refractive power are disposed in order from the object (step ST10). The lenses are arranged in such a manner that upon zooming from the wide angle end state to the telephoto end state, the first lens group G1, the second lens group G2, the third lens group G3, the fourth lens group G4, and the fifth lens group G5 are moved along the optical axis to change a distance between the first lens group G1 and the second lens group G2, a distance between the second lens group G2 and the third lens group G3, a distance between the third lens group G3 and the fourth lens group G4, and a distance between the fourth lens group G4 and the fifth lens group G5 (step ST20). The lenses are arranged in such a manner that the following conditional expression (1) is satisfied (step ST30).

$$2.30 < f5/d4w < 3.60 \ldots (1)$$

where,

f5 denotes the focal length of the fifth lens group G5, and
d4W denotes the distance between the fourth lens group G4 and the fifth lens group G5 in the wide angle end state.

An example of the lens arrangement according to the 1st embodiment is described. Specifically, as illustrated in FIG. 1, the first to the fifth lens groups G1 - G5 are disposed in order from the object. The first lens group G1 includes: a cemented lens including a negative meniscus lens L11 having a concave surface facing the image side and a biconvex lens L12; and a positive meniscus lens L13 having a convex surface facing the object side, disposed in order from the object. The second lens group G2 includes: a negative meniscus lens L21 having a concave surface facing the image side; a biconcave lens L22; and a biconvex lens L23, disposed in order from the object. The third lens group G3 includes: a biconvex lens L31; a cemented lens including a positive meniscus lens L32 having a convex surface facing the object side and a negative meniscus lens L33 having a concave surface facing the image side; and a biconvex lens L34 disposed in order from the object. The fourth lens group G4 includes a negative meniscus lens L41 having a concave surface facing the image side. The fifth lens group G5 includes a biconvex lens L51. The zoom lens ZL is manufactured by arranging lens groups thus prepared in the manner described above.

With the manufacturing method according to the 1st embodiment described above, a zoom lens ZL having a small size with an exit pupil position sufficiently distant from the image surface, and having high optical performance can be manufactured.

Example according to 1st embodiment

Examples according to the 1st embodiment are described with reference to the drawings. FIGS. 1, 3, 5, and 7 are cross-sectional views illustrating configurations and refractive power distributions of zoom lenses ZL (ZL1 to ZL4) according to Examples. Each cross-sectional view illustrates the positions of the lens groups in a process of zooming from the wide angle end state (W) to the telephoto end state (T) via the intermediate focal length state (M).

Reference signs in FIG. 1 corresponding to Example 1 are independently provided for each Example, to avoid complication of description due to increase in the number of digits of the reference signs. Thus, reference signs that are the same as those in a drawing corresponding to another Example do not necessarily indicate a configuration that is the same as that in the other Example.

Table 1 to Table 4 described below are specification tables of Examples 1 to 4.

In Examples, d-line (wavelength 587.6 nm) and g-line (wavelength 435.8 nm) are selected as calculation targets of the aberration characteristics.

In [Lens specifications] in the tables, a surface number represents an order of an optical surface from the object side in a traveling direction of a light beam, R represents a radius of curvature of each optical surface, D represents a distance between each optical surface and the next optical surface (or the image surface) on the optical axis, vd represents Abbe number of the material of the optical member based on the d-line, and nd represents a refractive index of a material of an optical member with respect to the d-line. Furthermore, Di represents a distance between an ith surface and an (i + 1) th surface, a radius of curvature of "0.0000" represents an aperture or a planer surface, (stop S) represents the aperture stop S, and Bf represents back focus (a distance between a lens last surface and a paraxial image surface on the optical axis). The refractive index "1.000000" of air is omitted. An aspherical optical surface has a * mark in the field of surface number and has a paraxial radius of curvature in the field of radius of curvature R.

In the tables, [Aspherical surface data] has the following formula (a) indicating the shape of an aspherical surface in [Lens specifications]. In the formula, X(y) represents a distance between the tangent plane at the vertex of the aspherical surface and a position on the aspherical surface at a height y along the optical axis direction, R represents a radius of curvature (paraxial radius of curvature) of a reference spherical surface, $\kappa$ represents a conical coefficient, and Ai represents an ith aspherical coefficient. In the formula, "E-n" represents "x $10^{-n}$". For example, 1.234E-05 = 1.234 $\times$ $10^{-5}$. A secondary aspherical coefficient A2 is 0, and thus is omitted.

$$X(y) = (y^2/R)/\{1 + (1 - \kappa \times y^2/R^2)^{1/2}\} + A4 \times y^4 + A6 \times y^6 + A8 \times y^8 \ldots (a)$$

In the tables, [Various data] includes data on states such as the wide angle end state, the intermediate focal length state, and the telephoto end state upon focusing on infinity. Specifically, f represents a focal length of the whole zoom lens, FNO represents an F number, $\omega$ represents a half angle of view (unit: °), Di represents a distance between an ith surface and an (i + 1) th surface, Bf represents the distance between a lens last surface and a paraxial image surface on the optical axis, and TL represents the length of the whole zoom lens (a value obtained by adding Bf to the distance between the lens forefront surface and the lens last surface on the optical axis). Furthermore, values of an exit pupil position (the distance from the image surface) and the image surface movement coefficient of the fourth lens group G4 upon focusing on infinity are described.

In [Lens group data] in the tables, the starting surface and the focal length of each of the lens groups are described.

In [Conditional expression corresponding value] in the tables, values corresponding to the conditional expressions (1) to (11) are described.

The focal length f, the radius of curvature R, the surface distance D and the other units of length described below as all the specification values, which are generally described with "mm" unless otherwise noted should not be construed in a limiting sense because the optical system proportionally expanded or reduced can have a similar or the same optical performance. The unit is not limited to "mm", and other appropriate units may be used.

The description on the tables described above commonly applies to all Examples 1 to 4, and thus will not be described below.

(Example 1)

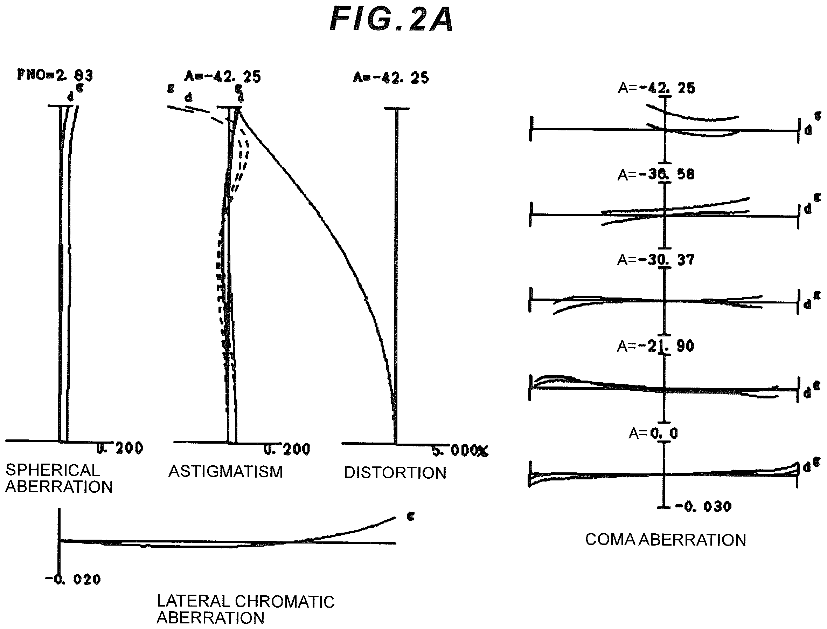

Next, Example 1 is described with reference to FIG. 1, FIGs. 2A-2C, and Table 1. As illustrated in FIG. 1, the zoom lens ZL (ZL1) according to Example 1 includes: a first lens group G1 having positive refractive power; a second lens group G2 having negative refractive power; a third lens group G3 having positive refractive power; a fourth lens group G4 having negative refractive power; and a fifth lens group G5 having positive refractive power which are disposed in order from an object.

The first lens group G1 includes: a cemented lens including a negative meniscus lens L11 having a concave surface facing the image side and a biconvex lens L12; and a positive meniscus lens L13 having a convex surface facing the object side, which are disposed in order from the object.

The second lens group G2 includes: a negative meniscus lens L21 having a concave surface facing the image side; a biconcave lens L22; and a biconvex lens L23, which are disposed in order from the object. The negative meniscus lens L21 has an aspherical surface on the image side.

The third lens group G3 includes: a biconvex lens L31; a cemented lens including a positive meniscus lens L32 having a convex surface facing the object side and a negative meniscus lens L33 having a concave surface facing the image side; and a biconvex lens L34 disposed in order from the object. The biconvex lens L31 has aspherical surfaces on both sides.

The fourth lens group G4 includes a negative meniscus lens L41 having a concave surface facing the image side. The negative meniscus lens L41 has an aspherical surface on the image side.

The fifth lens group G5 includes a biconvex lens L51. The biconvex lens L51 has aspherical surfaces on the object side.

An aperture stop S, for adjusting the amount of light, is disposed adjacent to and more on the object side than the third lens group G3.

A filter FL is disposed adjacent to and more on the image side than the fifth lens group G5. The filter FL includes a lowpass filter and an infrared cut filter for cutting the spatial frequency overwhelming the resolution limit of a solid-state image sensor such as a CCD provided on the image surface I.

The zoom lens ZL1 according to the present example performs zooming by changing the distances among the lens groups. Specifically, upon zooming from the wide angle end state to the telephoto end state, the first lens group G1 is moved toward the object side, the second lens group G2 is moved toward the image side, the third lens group G3 is moved toward the object side, the fourth lens group G4 is moved toward the object side, and the fifth lens group G5 is moved toward the image side. The aperture stop S integrally moves with the third lens group G3 toward the object side.

In Table 1 below, specification values in Example 1 are listed. Surface numbers 1 to 27 in Table 1 respectively correspond to the optical surfaces m1 to m27 in FIG. 1.

(Table 1)

[Lens specifications]

| Surface number | R | D | νd | nd |
|---|---|---|---|---|
| 1 | 80.5818 | 2.0000 | 33.34 | 1.806100 |
| 2 | 35.3732 | 5.8000 | 81.73 | 1.497000 |
| 3 | -310.9288 | 0.2000 | | |
| 4 | 32.6650 | 3.8000 | 65.44 | 1.603000 |
| 5 | 172.0246 | (D5=Variable) | | |
| 6 | 395.3632 | 1.2000 | 47.18 | 1.773770 |
| *7 | 8.8758 | 4.1783 | | |
| 8 | -14.9127 | 1.0000 | 47.35 | 1.788000 |
| 9 | 84.6771 | 0.2000 | | |
| 10 | 29.3689 | 2.4000 | 17.98 | 1.945950 |
| 11 | -97.0100 | (D11=Variable) | | |
| 12 | 0.0000 | 1.0000 | (Aperture stop S) | |
| *13 | 10.6750 | 3.4000 | 63.86 | 1.618810 |
| *14 | -37.8678 | 0.2000 | | |
| 15 | 14.7458 | 2.7000 | 61.22 | 1.589130 |
| 16 | 247.2379 | 0.8000 | 31.27 | 1.903660 |

(continued)

[Lens specifications]

| Surface number | R | D | νd | nd |
|---|---|---|---|---|
| 17 | 8.2544 | 0.7000 | | |
| 18 | 14.1122 | 2.5000 | 63.34 | 1.618000 |
| 19 | -48.5262 | (D19=Variable) | | |
| 20 | 93.6140 | 0.7000 | 81.49 | 1.497100 |
| *21 | 13.9237 | (D21=Variable) | | |
| *22 | 47.3733 | 3.6000 | 63.86 | 1.618810 |
| 23 | -28.0497 | (D23=Variable) | | |
| 24 | 0.0000 | 0.4700 | 63.88 | 1.516800 |
| 25 | 0.0000 | 0.1500 | | |
| 26 | 0.0000 | 0.7000 | 63.88 | 1.516800 |
| 27 | 0.0000 | (Bf) | | |

[Aspherical surface data]

7th surface

$\kappa$ = 1.2984

A4 = -6.14616E-05

A6 = -8.09197E-07

A8 = 0.00000E+00

13th surface

$\kappa$ = 0.3130

A4 = -1.02252E-05

A6 = 2.40979E-07

A8 = -1.38343E-09

14th surface

$\kappa$ = 1.0000

A4 = 5.84552E-05

A6 = -3.91089E-08

A8 = 0.00000E+00

21th surface

$\kappa$ = 1.0000

A4 = 2.76226E-05

A6 = -3.81969E-07

A8 = 0.00000E+00

22th surface

$\kappa$ = 1.0000

A4 = -4.54093E-05

A6 = 2.41061E-07

A8 = 0.00000E+00

[Various data]

Zooming rate 11.90

| | Wide angle | Intermediate | Telephoto |
|---|---|---|---|
| f | 9.05000 | 31.22000 | 107.62999 |
| FNO | 2.83 | 4.79 | 5.63 |
| ω | 42.25 | 13.99 | 4.16 |

(continued)

[Various data]
Zooming rate 11.90

|  | Wide angle | Intermediate | Telephoto |
| --- | --- | --- | --- |
| D5 | 0.99990 | 16.26217 | 33.03140 |
| D11 | 20.95447 | 7.95083 | 0.99914 |
| D19 | 1.00045 | 6.84062 | 6.00045 |
| D21 | 11.50000 | 17.92550 | 24.98447 |
| D23 | 4.36297 | 2.40885 | 1.00573 |
| Bf | 1.28000 | 1.28000 | 1.28000 |
| TL | 77.79608 | 90.36626 | 104.99947 |
| Exit pupil position | -72.66071 | 1357.75462 | 140.36196 |
| G4 image surface movement coefficient | -1.03009 | -1.44686 | -2.04673 |

(Upon focusing on infinity)

[Lens group data]

| Group number | Group starting surface | Group focal length |
| --- | --- | --- |
| G1 | 1 | 56.14511 |
| G2 | 6 | -9.37374 |
| G3 | 13 | 14.04617 |
| G4 | 20 | -33.00000 |
| G5 | 22 | 29.00000 |

[Conditional expression corresponding value]

Conditional expression (1) $f5/d4w = 2.522$

Conditional expression (2) $TLt \times f3/(ft \times ft) = 0.127$

Conditional expression (3) $ft \times ft/\{(-f4) \times d3t\} = 58.502$

Conditional expression (4) $\omega t = 4.16$

Conditional expression (5) $\omega w = 42.25$

Conditional expression (6) $f1/(fw \times ft)^{1/2} = 1.799$

Conditional expression (7) $f4/(fw \times ft)^{1/2} = 1.057$

Conditional expression (8) $Dm5/(fw \times ft)^{1/2} = 0.108$

Conditional expression (9) $-f2/ft = 0.087$

Conditional expression (10) $D5/ft = 0.033$

Conditional expression (11) $(-Dm4)/ft = 0.094$

It can be seen in Table 1 that the zoom lens ZL1 according to Example 1 satisfies the conditional expressions (1) to (11).

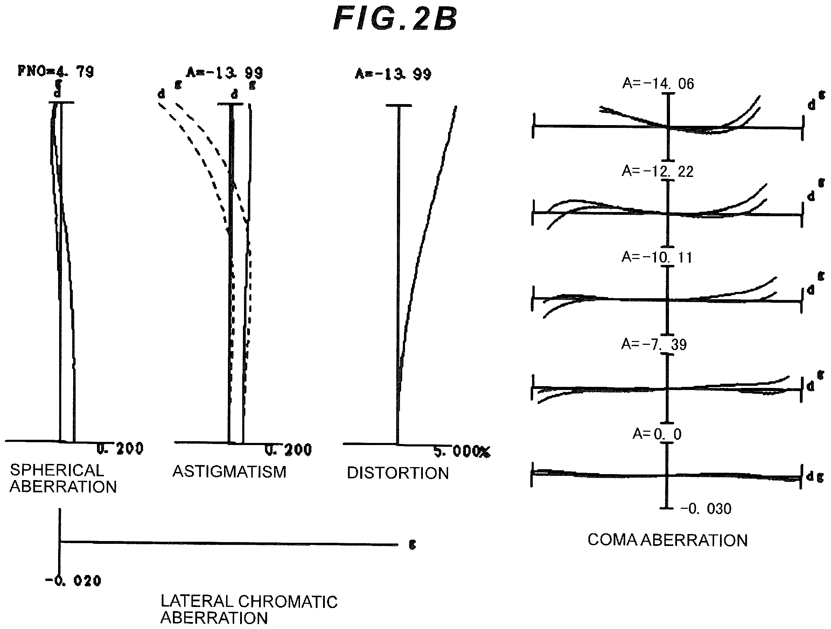

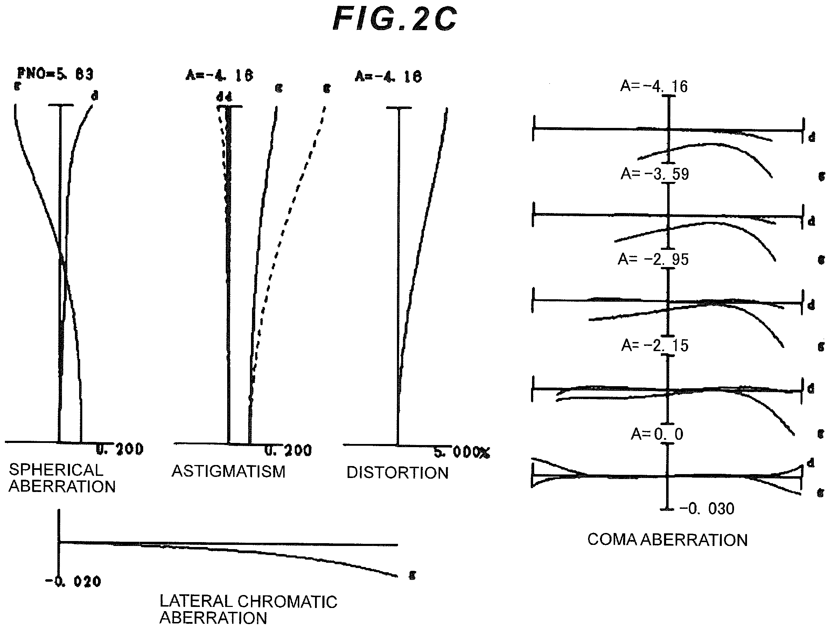

FIGs. 2A, 2B, and 2C are various aberration graphs (a spherical aberration graph, an astigmatism graph, a distortion graph, a coma aberration graph, and a lateral chromatic aberration graph) of the zoom lens ZL1 according to Example 1 upon focusing on infinity with FIG. 2A corresponding to the wide angle end state, FIG. 2B corresponding to the intermediate focal length state, and FIG. 2C corresponding to the telephoto end state.

In the aberration graphs, FNO represents an F number, A represents a half angle of view at each image height (unit: °), and d and g respectively represent aberrations on the d-line and the g-line. Those denoted with none of the above represent aberrations on the d-line. In an astigmatism graph, a solid line represents a sagittal image surface, and a broken line represents a meridional image surface. The lateral chromatic aberration graph is illustrated based on the d-line. In aberration graphs in Examples described below, the same reference signs as in this Example are used.

It can be seen in the aberration graphs in FIGs. 2A, 2B, and 2C that the zoom lens ZL1 according to Example 1 can achieve an excellent imaging performance with various aberrations successfully corrected from the wide angle end state to the telephoto end state.

(Example 2)

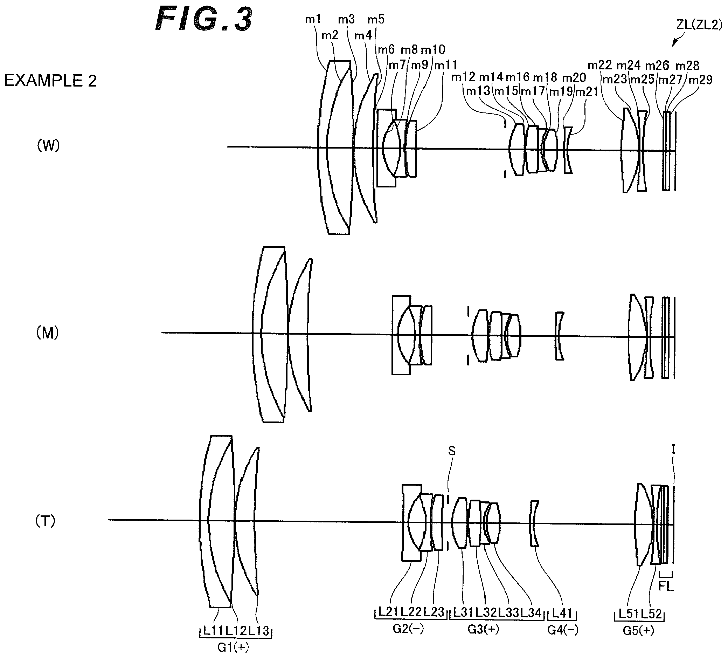

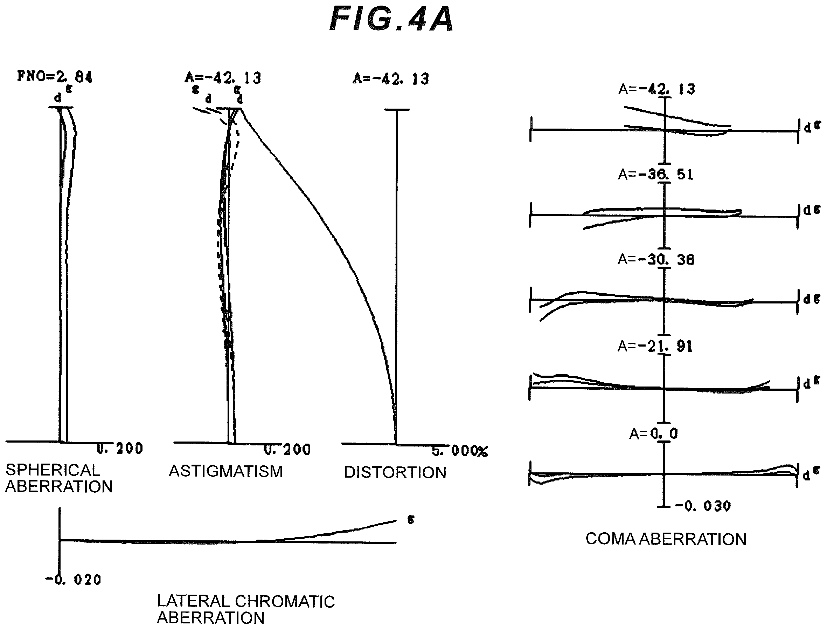

Example 2 is described with reference to FIG. 3, FIGs. 4A-4C, and Table 2. As illustrated in FIG. 3, a zoom lens ZL (ZL2) according to Example 2 includes: a first lens group G1 having positive refractive power; a second lens group G2 having negative refractive power; a third lens group G3 having positive refractive power; a fourth lens group G4 having negative refractive power; and a fifth lens group G5 having positive refractive power which are disposed in order from an object.

The first lens group G1 includes: a cemented lens including a negative meniscus lens L11 having a concave surface facing the image side and a biconvex lens L12; and a positive meniscus lens L13 having a convex surface facing the object side, which are disposed in order from the object.

The second lens group G2 includes: a biconcave lens L21; a biconcave lens L22; and a positive meniscus lens L23 having a convex surface facing the object side which are arranged in order from an object. The biconcave lens L21 has an aspherical surface on the image side.

The third lens group G3 includes: a biconvex lens L31; a cemented lens including a biconvex lens L32 and a biconcave lens L33; and a biconvex lens L34, which are disposed in order from an object. The biconvex lens L31 has aspherical surfaces on both sides.

The fourth lens group G4 includes a negative meniscus lens L41 having a concave surface facing the image side. The negative meniscus lens L41 has an aspherical surface on the image side.

The fifth lens group G5 includes a biconvex lens L51 and a biconcave lens L52, which are disposed in order from an object. The biconvex lens L51 has aspherical surfaces on the object side.

An aperture stop S, for adjusting the amount of light, is provided adjacent to and more on the object side than the third lens group G3.

A filter FL is disposed adjacent to and more on the image side than the fifth lens group G5. The filter FL includes a lowpass filter and an infrared cut filter for cutting the spatial frequency overwhelming the resolution limit of a solid-state image sensor such as a CCD provided on the image surface I.

The zoom lens ZL2 according to the present example performs zooming by changing the distances among the lens groups. Specifically, upon zooming from the wide angle end state to the telephoto end state, the first lens group G1 is moved toward the object side, the second lens group G2 is moved toward the image side, the third lens group G3 is moved toward the object side, the fourth lens group G4 is moved toward the object side, and the fifth lens group G5 is moved toward the image side. The aperture stop S integrally moves with the third lens group G3 toward the object side.

In Table 2 below, specification values in Example 2 are listed. Surface numbers 1 to 29 in Table 2 respectively correspond to the optical surfaces m1 to m29 in FIG. 3.

(Table 2)

[Lens specifications]

| Surface number | R | D | νd | nd |
|---|---|---|---|---|
| 1 | 76.2344 | 2.0000 | 32.35 | 1.850260 |
| 2 | 35.7754 | 5.8000 | 81.73 | 1.497000 |
| 3 | -251.4384 | 0.2000 | | |
| 4 | 32.4653 | 4.2000 | 63.34 | 1.618000 |
| 5 | 162.8377 | (D5=Variable) | | |
| 6 | -498.3647 | 1.2000 | 42.71 | 1.820800 |
| *7 | 8.9882 | 3.8302 | | |
| 8 | -14.5008 | 1.0000 | 63.34 | 1.618000 |
| 9 | 40.7175 | 0.2000 | | |
| 10 | 23.0595 | 2.4000 | 17.98 | 1.945950 |
| 11 | 371.2358 | (D11=Variable) | | |
| 12 | 0.0000 | 1.0000 | (Aperture stop S) | |
| *13 | 10.7088 | 3.4000 | 63.86 | 1.618810 |
| *14 | -32.1510 | 0.2000 | | |
| 15 | 22.6681 | 2.7000 | 81.73 | 1.497000 |
| 16 | -286.2185 | 0.8000 | 35.73 | 1.902650 |
| 17 | 8.8334 | 0.5000 | | |
| 18 | 10.4942 | 3.0000 | 70.31 | 1.487490 |
| 19 | -17.3199 | (D19=Variable) | | |

(continued)

[Lens specifications]

| Surface number | R | D | νd | nd |
|---|---|---|---|---|
| 20 | 80.0181 | 0.7000 | 81.49 | 1.497100 |
| *21 | 13.1218 | (D21=Variable) | | |
| *22 | 36.0879 | 4.0000 | 55.48 | 1.696800 |
| 23 | -17.6361 | 0.2000 | | |
| 24 | -73.2519 | 0.7000 | 25.64 | 1.784720 |
| 25 | 53.4182 | (D25=Variable) | | |
| 26 | 0.0000 | 0.4700 | 63.88 | 1.516800 |
| 27 | 0.0000 | 0.1500 | | |
| 28 | 0.0000 | 0.7000 | 63.88 | 1.516800 |
| 29 | 0.0000 | (Bf) | | |

[Aspherical surface data]

7th surface

$\kappa$ = 1.2687

A4 = -5.90233E-05

A6 = -7.28217E-07

A8 = 0.00000E+00

13th surface

$\kappa$ = 1.6811

A4 = -1.43502E-04

A6 = -4.95404E-07

A8 = -1.90765E-08

14th surface

$\kappa$ = 1.0000

A4 = 1.11413E-04

A6 = 9.30435E-08

A8 = 0.00000E+00

21th surface

$\kappa$ = 1.0000

A4 = 1.75131E-05

A6 = 6.80438E-07

A8 = 0.00000E+00

22th surface

$\kappa$ = 1.0000

A4 = -8.71678E-05

A6 = 8.78795E-08

A8 = 0.00000E+00

[Various data]

Zooming rate 11.90

| | Wide angle | Intermediate | Telephoto |
|---|---|---|---|
| f | 9.05000 | 31.22000 | 107.62999 |
| FNO | 2.84 | 4.34 | 5.05 |
| $\omega$ | 42.13 | 13.73 | 4.16 |
| D5 | 0.99994 | 18.84504 | 32.91964 |

(continued)

[Various data]
Zooming rate 11.90

| | Wide angle | Intermediate | Telephoto |
|---|---|---|---|
| D11 | 19.61599 | 8.15978 | 1.22688 |
| D19 | 1.50025 | 7.72395 | 6.80025 |
| D21 | 11.90013 | 15.39404 | 22.42393 |
| D25 | 4.52290 | 2.74031 | 0.99909 |
| Bf | 1.28000 | 1.28000 | 1.28000 |
| TL | 79.16940 | 93.49332 | 104.99999 |

| | | | |
|---|---|---|---|
| Exit pupil position | -76.83374 | -305.41689 | 255.51496 |
| G4 image surface movement coefficient | -1.09833 | -1.30211 | -1.84275 |

(Upon focusing on infinity)

[Lens group data]

| Group number | Group starting surface | Group focal length |
|---|---|---|
| G1 | 1 | 53.99261 |
| G2 | 6 | -8.61000 |
| G3 | 13 | 14.19468 |
| G4 | 20 | -31.68441 |
| G5 | 22 | 30.00000 |

[Conditional expression corresponding value]

Conditional expression (1) $f5/d4w = 2.521$

Conditional expression (2) $TLtxf3/(ftxft) = 0.129$

Conditional expression (3) $ft\times ft/\{(-f4)\times d3t\} = 53.765$

Conditional expression (4) $\omega t = 4.16$

Conditional expression (5) $\omega w = 42.13$

Conditional expression (6) $f1/(fw\times ft)^{1/2} = 1.730$

Conditional expression (7) $f4/(fw\times ft)^{1/2} = 1.015$

Conditional expression (8) $Dm5/(fw\times ft)^{1/2} = 0.113$

Conditional expression (9) $-f2/ft = 0.080$

Conditional expression (10) $D5/ft = 0.046$

Conditional expression (11) $(-Dm4)/ft = 0.065$

It can be seen in Table 2 that the zoom lens ZL2 according to Example 2 satisfies the conditional expressions (1) to (11).

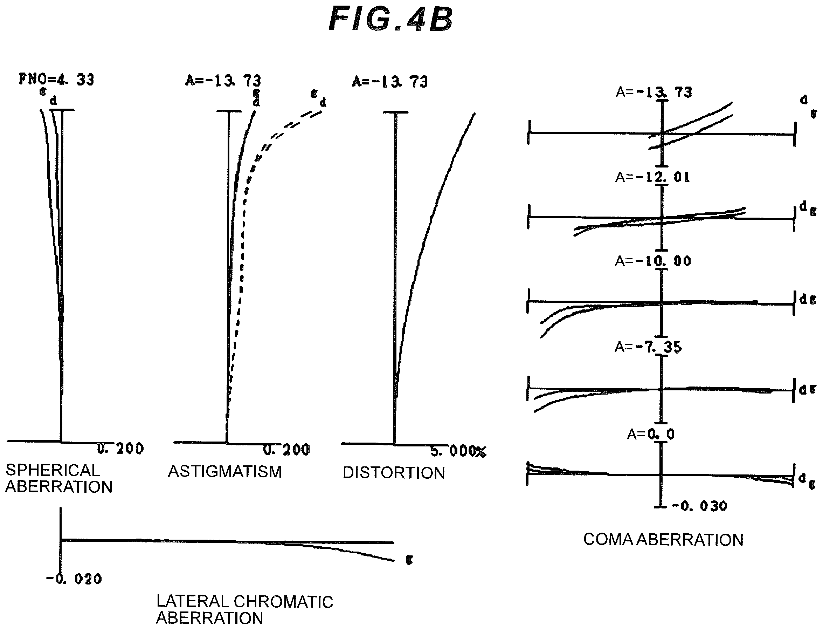

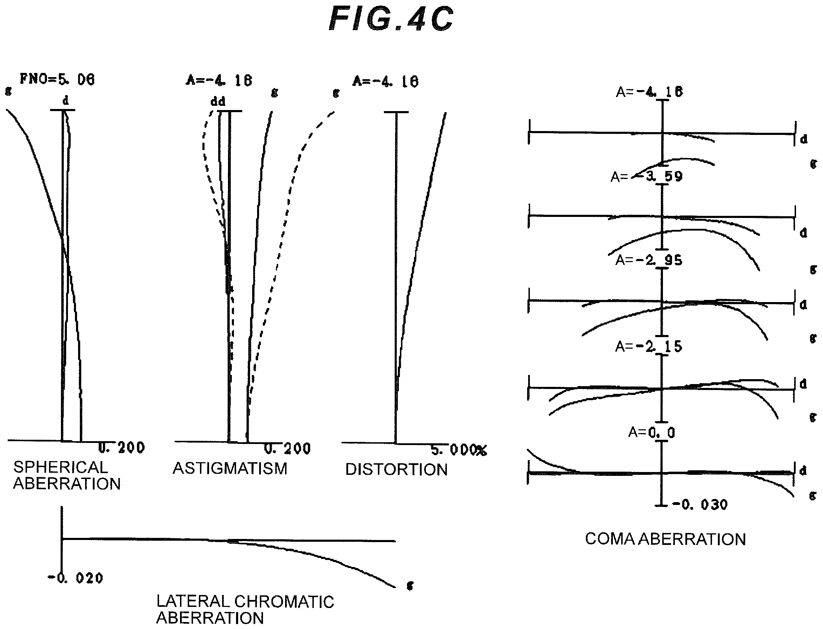

FIGs. 4A, 4B, and 4C are various aberration graphs (a spherical aberration graph, an astigmatism graph, a distortion graph, a coma aberration graph, and a lateral chromatic aberration graph) of the zoom lens ZL2 according to Example 2 upon focusing on infinity with FIG. 4A corresponding to the wide angle end state, FIG. 4B corresponding to the intermediate focal length state, and FIG. 4C corresponding to the telephoto end state.

It can be seen in the aberration graphs in FIGs. 4A, 4B, and 4C that the zoom lens ZL2 according to Example 2 can achieve an excellent imaging performance with various aberrations successfully corrected from the wide angle end state to the telephoto end state.

(Example 3)

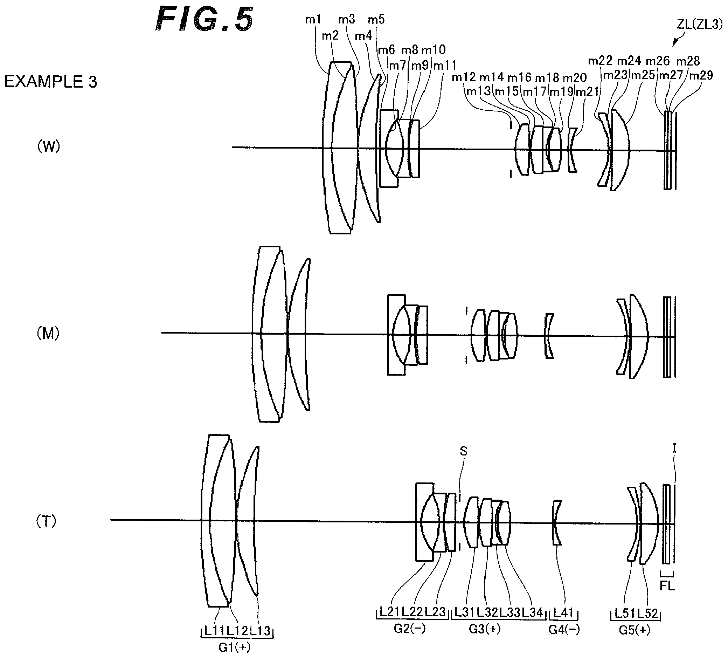

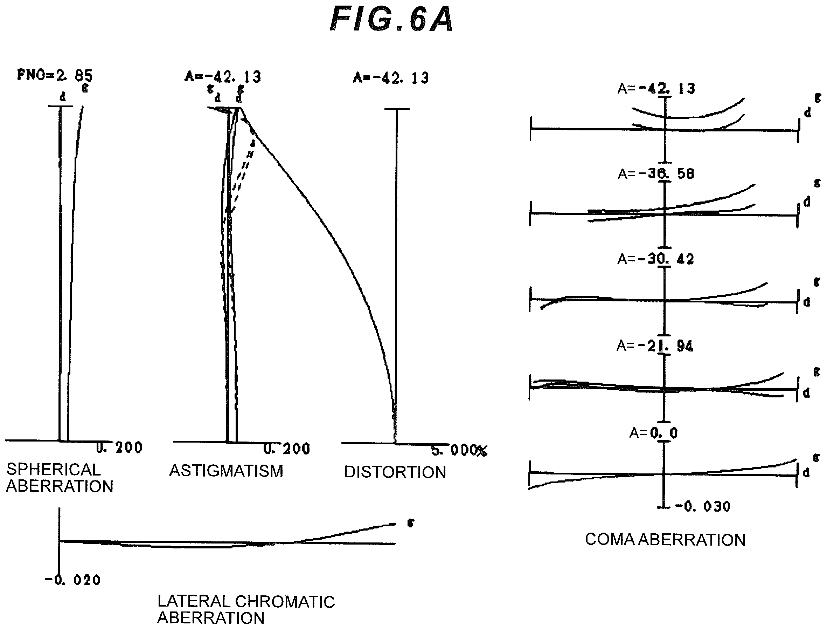

Example 3 is described with reference to FIG. 5, FIGs. 6A-6C, and Table 3. As illustrated in FIG. 5, an zoom lens ZL (ZL3) according to Example 3 includes: a first lens group G1 having positive refractive power; a second lens group G2 having negative refractive power; a third lens group G3 having positive refractive power; a fourth lens group G4 having negative refractive power; and a fifth lens group G5 having positive refractive power which are disposed in order from an object.

The first lens group G1 includes: a cemented lens including a negative meniscus lens L11 having a concave surface facing the image side and a biconvex lens L12; and a positive meniscus lens L13 having a convex surface facing the object side, which are disposed in order from the object.

The second lens group G2 includes: a negative meniscus lens L21 having a concave surface facing the image side; a biconcave lens L22; and a positive meniscus lens L23 having a convex surface facing the object side, which are disposed in order from an object. The negative meniscus lens L21 has an aspherical surface on the image side.

The third lens group G3 includes: a biconvex lens L31; a cemented lens including a biconvex lens L32 and a biconcave lens L33; and a biconvex lens L34, which are disposed in order from an object. The biconvex lens L31 has aspherical surfaces on both sides.

The fourth lens group G4 includes a negative meniscus lens L41 having a concave surface facing the image side. The negative meniscus lens L41 has an aspherical surface on the image side.

The fifth lens group G5 includes a negative meniscus lens L51 having a concave surface facing the object side and a positive meniscus lens L52 having a convex surface facing the image side which are arranged in order from an object. The negative meniscus lens L51 has an aspherical surface on the object side.

An aperture stop S, for adjusting the amount of light, is provided adjacent to and more on the object side than the third lens group G3.

A filter FL is disposed adjacent to and more on the image side than the fifth lens group G5. The filter FL includes a lowpass filter and an infrared cut filter for cutting the spatial frequency overwhelming the resolution limit of a solid-state image sensor such as a CCD provided on the image surface I.

The zoom lens ZL3 according to the present example performs zooming by changing the distances among the lens groups. Specifically, upon zooming from the wide angle end state to the telephoto end state, the first lens group G1 is moved toward the object side, the second lens group G2 is moved toward the image side, the third lens group G3 is moved toward the object side, the fourth lens group G4 is moved toward the object side and then moved toward the image side, and the fifth lens group G5 is moved toward the image side. The aperture stop S integrally moves with the third lens group G3 toward the object side.

In Table 3 below, specificationvalues in Example 3 are listed. Surface numbers 1 to 29 in Table 3 respectively correspond to the optical surfaces m1 to m29 in FIG. 5.

(Table 3)

[Lens specifications]

| Surface number | R | D | νd | nd |
|---|---|---|---|---|
| 1 | 103.1998 | 2.0000 | 32.35 | 1.850260 |
| 2 | 42.2142 | 5.8000 | 81.73 | 1.497000 |
| 3 | -144.7935 | 0.2000 | | |
| 4 | 35.2068 | 3.8000 | 65.44 | 1.603000 |
| 5 | 156.5989 | (D5=Variable) | | |
| 6 | 8344.1451 | 1.2000 | 42.71 | 1.820800 |
| *7 | 9.9754 | 3.8697 | | |
| 8 | -14.8375 | 1.0000 | 63.34 | 1.618000 |
| 9 | 34.6118 | 0.2000 | | |
| 10 | 24.3454 | 2.4000 | 17.98 | 1.945950 |
| 11 | 3333.2226 | (D11=Variable) | | |
| 12 | 0.0000 | 1.0000 | | |
| *13 | 11.0527 | 3.2000 | 63.86 | 1.618810 |
| *14 | -41.7350 | 0.2000 | | |
| 15 | 15.7222 | 2.7000 | 81.73 | 1.497000 |
| 16- | 1000.0000 | 0.8000 | 35.25 | 1.910820 |
| 17 | 8.9784 | 0.5000 | | |
| 18 | 11.4409 | 2.8000 | 70.31 | 1.487490 |
| 19 | -17.8506 | (D19=Variable) | | |
| 20 | 39.0430 | 0.7000 | 81.49 | 1.497100 |
| *21 | 10.7269 | (D21=Variable) | | |
| *22 | -14.9604 | 0.7000 | 24.06 | 1.821150 |
| 23 | -21.9912 | 0.2000 | | |
| 24 | -206.5968 | 3.8000 | 52.34 | 1.755000 |
| 25 | -14.6758 | (D25=Variable) | | |

(continued)

[Lens specifications]

| Surface number | R | D | νd | nd |
|---|---|---|---|---|
| 26 | 0.0000 | 0.4700 | 63.88 | 1.516800 |
| 27 | 0.0000 | 0.1500 | | |
| 28 | 0.0000 | 0.7000 | 63.88 | 1.516800 |
| 29 | 0.0000 | (Bf) | | |

[Aspherical surface data]

7th surface

$\kappa$ = 1.4093

A4 = -5.27382E-05

A6 = -7.28271E-07

A8 = 0.00000E+00

13th surface

$\kappa$ = 0.4203

A4 = -7.50100E-06

A6 = 3.99816E-07

A8 = 1.35754E-09

14th surface

$\kappa$ = 1.0000

A4 = 9.24271E-05

A6 = 9.04859E-08

A8 = 0.00000E+00

21th surface

$\kappa$ = 1.0000

A4 = 3.92026E-05

A6 = -2.03642E-07

A8 = 0.00000E+00

22th surface

$\kappa$ = 1.0000

A4 = 6.47188E-05

A6 = 0.00000E+00

A8 = 0.00000E+00

[Various data]

Zooming rate 11.90

| | Wide angle | Intermediate | Telephoto |
|---|---|---|---|
| f | 9.05000 | 31.22000 | 107.63000 |
| FNO | 2.85 | 4.41 | 5.05 |
| ω | 42.13 | 14.06 | 4.16 |
| D5 | 0.99975 | 18.25533 | 35.86199 |
| D11 | 20.19099 | 8.81696 | 0.97403 |
| D19 | 1.51084 | 6.17130 | 9.31125 |
| D21 | 8.20011 | 17.35028 | 18.17086 |
| D25 | 7.76782 | 3.56874 | 0.99666 |
| Bf | 1.28000 | 1.28000 | 1.28000 |
| TL | 78.33927 | 93.83236 | 104.98453 |

(continued)

| [Various data] Zooming rate 11.90 | Wide angle | Intermediate | Telephoto |
|---|---|---|---|
| Exit pupil position | -76.93680 | 323.54769 | 198.91556 |
| G4 image surface movement coefficient | -1.14189 | -1.87267 | -2.02072 |

(Upon focusing on infinity)

[Lens group data]

| Group number | Group starting surface | Group focal length |
|---|---|---|
| G1 | 1 | 59.93130 |
| G2 | 6 | -9.36319 |
| G3 | 13 | 13.93321 |
| G4 | 20 | -30.00000 |
| G5 | 22 | 29.00000 |

[Conditional expression corresponding value]

Conditional expression (1) $f5/d4w = 3.537$

Conditional expression (2) $TLt \times f3/(ft \times ft) = 0.126$

Conditional expression (3) $ft \times ft/\{(-f4) \times d3t\} = 41.517$

Conditional expression (4) $\omega t = 4.16$

Conditional expression (5) $\omega w = 42.13$

Conditional expression (6) $f1/(fw \times ft)^{1/2} = 1.920$

Conditional expression (7) $f4/(fw \times ft)^{1/2} = 0.961$

Conditional expression (8) $Dm5/ (fw \times ft)^{1/2} = 0.217$

Conditional expression (9) $-f2/ft = 0.087$

Conditional expression (10) $D5/ft = 0.044$

Conditional expression (11) $(-Dm4)/ft = 0.094$

It can be seen in Table 3 that the zoom lens ZL3 according to Example 3 satisfies the conditional expressions (1) to (11).

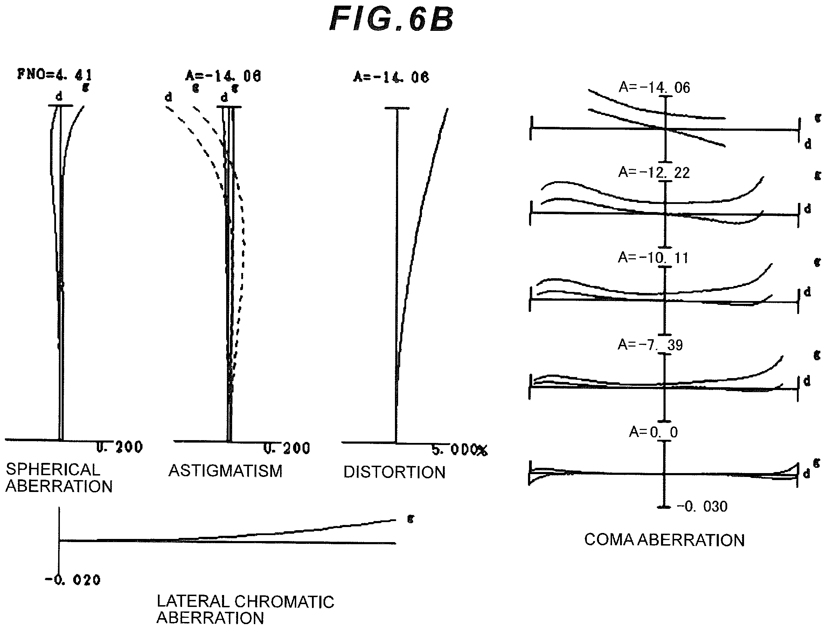

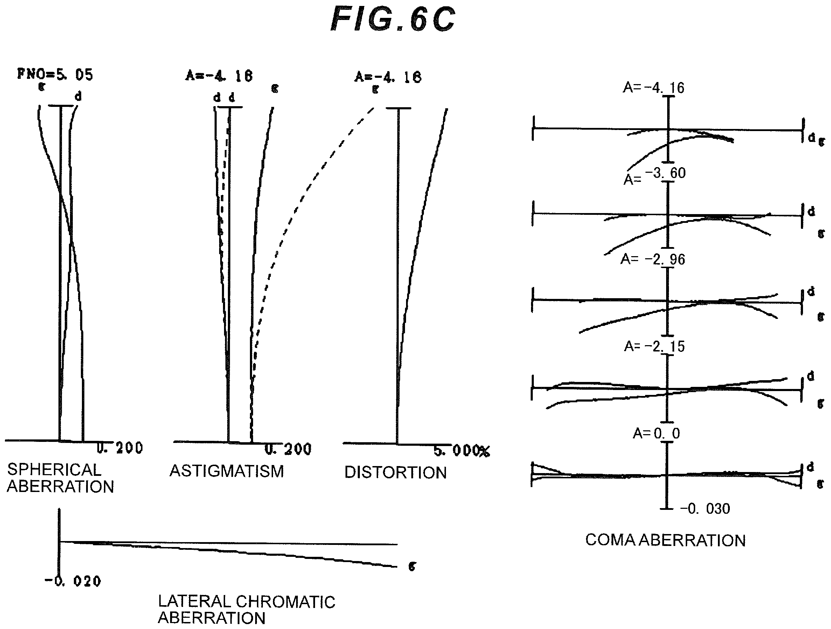

FIGs. 6A, 6B, and 6C are various aberration graphs (a spherical aberration graph, an astigmatism graph, a distortion graph, a coma aberration graph, and a lateral chromatic aberration graph) of the zoom lens ZL3 according to Example 3 upon focusing on infinity with FIG. 6A corresponding to the wide angle end state, FIG. 6B corresponding to the intermediate focal length state, and FIG. 6C corresponding to the telephoto end state.

It can be seen in the aberration graphs in FIGs. 6A, 6B, and 6C that the zoom lens ZL3 according to Example 3 can achieve an excellent imaging performance with various aberrations successfully corrected from the wide angle end state to the telephoto end state.

(Example 4)

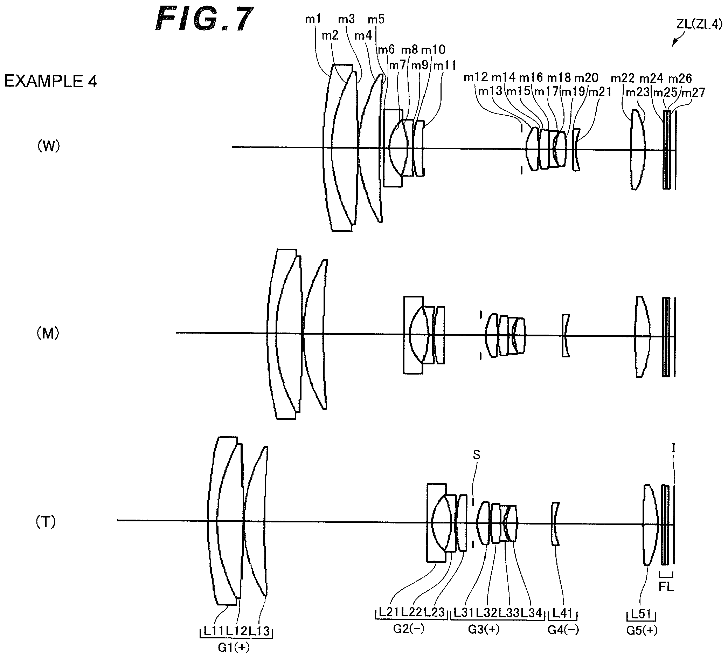

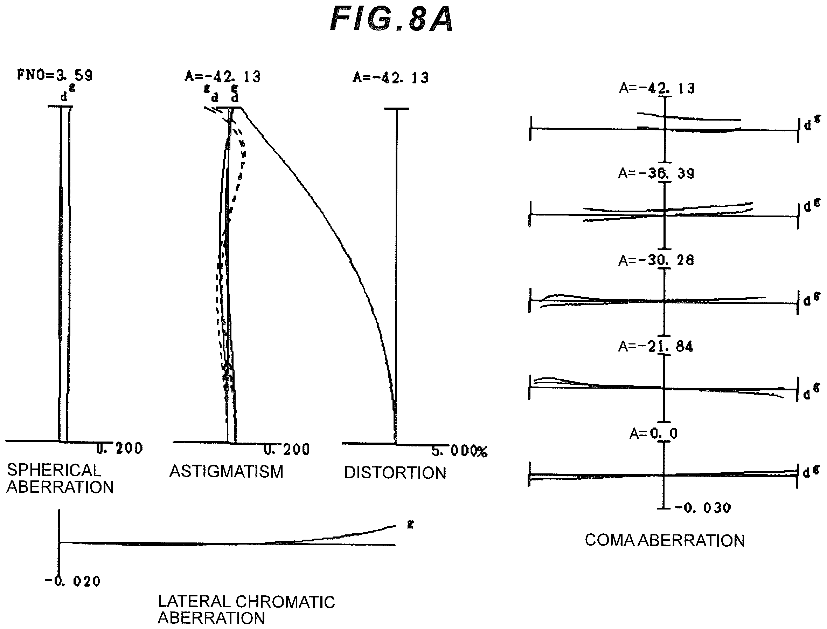

Example 4 is described with reference to FIG. 7, FIGs. 8A-8C, and Table 4. As illustrated in FIG. 7, a zoom lens ZL (ZL4) according to Example 4 includes: a first lens group G1 having positive refractive power; a second lens group G2 having negative refractive power; a third lens group G3 having positive refractive power; a fourth lens group G4 having negative refractive power; and a fifth lens group G5 having positive refractive power which are disposed in order from an object.

The first lens group G1 includes: a cemented lens including a negative meniscus lens L11 having a concave surface facing the image side and a biconvex lens L12; and a positive meniscus lens L13 having a convex surface facing the object side, which are disposed in order from the object.

The second lens group G2 includes: a biconcave lens L21; a biconcave lens L22; and a positive meniscus lens L23 having a convex surface facing the object side which are arranged in order from an object. The biconcave lens L21 has an aspherical surface on the image side.

The third lens group G3 includes: a biconvex lens L31; a cemented lens including a biconvex lens L32 and a biconcave lens L33; and a biconvex lens L34, which are disposed in order from an object. The biconvex lens L31 has aspherical surfaces on both sides.

The fourth lens group G4 includes a negative meniscus lens L41 having a concave surface facing the image side. The negative meniscus lens L41 has an aspherical surface on the image side.

The fifth lens group G5 includes a biconvex lens L51. The biconvex lens L51 has aspherical surfaces on the object side.

An aperture stop S, for adjusting the amount of light, is provided adjacent to and more on the object side than the third lens group G3.

A filter FL is disposed adjacent to and more on the image side than the fifth lens group G5. The filter FL includes a lowpass filter and an infrared cut filter for cutting the spatial frequency overwhelming the resolution limit of a solid-state image sensor such as a CCD provided on the image surface I.

The zoom lens ZL4 according to the present example performs zooming by changing the distances among the lens groups. Specifically, upon zooming from the wide angle end state to the telephoto end state, the first lens group G1 is moved toward the object side, the second lens group G2 is moved toward the image side, the third lens group G3 is moved toward the object side, the fourth lens group G4 is moved toward the object side, and the fifth lens group G5 is moved toward the image side. The aperture stop S integrally moves with the third lens group G3 toward the object side.

In Table 4 below, specification values in Example 4 are listed. Surface numbers 1 to 27 in Table 4 respectively correspond to the optical surfaces m1 to m27 in FIG. 7.

(Table 4)

[Lens specifications]

| Surface number | R | D | νd | nd |
|---|---|---|---|---|
| 1 | 79.8804 | 2.0000 | 35.73 | 1.902650 |
| 2 | 35.0803 | 5.8000 | 81.73 | 1.497000 |
| 3 | -301.4041 | 0.2000 | | |
| 4 | 32.5517 | 4.5000 | 65.44 | 1.603000 |
| 5 | 205.2803 | (D5=Variable) | | |
| 6 | -954.8817 | 1.2000 | 45.46 | 1.801390 |
| *7 | 8.5747 | 4.1517 | | |
| 8 | -14.5792 | 1.0000 | 65.44 | 1.603000 |
| 9 | 100.0656 | 0.2000 | | |
| 10 | 25.8431 | 2.2000 | 17.98 | 1.945950 |
| 11 | 669.0937 | (D11=Variable) | | |
| 12 | 0.0000 | 1.0000 | | |
| *13 | 8.8052 | 2.7000 | 55.48 | 1.696800 |
| *14 | -35.0925 | 0.2000 | | |
| 15 | 21.5007 | 2.2000 | 81.73 | 1.497000 |
| 16 | -39.3286 | 0.8000 | 35.25 | 1.910820 |
| 17 | 6.9715 | 0.5000 | | |
| 18 | 9.0203 | 2.4000 | 70.31 | 1.487490 |
| 19 | -20.8115 | (D19=Variable) | | |
| 20 | 109.9034 | 0.7000 | 81.49 | 1.497100 |
| *21 | 13.1034 | (D21=Variable) | | |
| *22 | 66.8446 | 3.3000 | 63.86 | 1.618810 |
| 23 | -22.9208 | (D23=Variable) | | |
| 24 | 0.0000 | 0.4700 | 63.88 | 1.516800 |
| 25 | 0.0000 | 0.1500 | | |
| 26 | 0.0000 | 0.7000 | 63.88 | 1.516800 |
| 27 | 0.0000 | (Bf) | | |

[Aspherical surface data]

7th surface

$\kappa = 1.1062$

A4 = -5.47187E-05

A6 = -2.04034E-07

(continued)

[Aspherical surface data]
A8 = 0.00000E+00

13th surface
κ = 1.4224
A4 = -1.69472E-04
A6 = -1.46252E-06
A8 = -1.40635E-08

14th surface
κ = 1.0000
A4 = 1.30671E-04
A6 = -4.78933E-07
A8 = 3.42870E-08

21th surface
κ = 1.0000
A4 = 2.58575E-05
A6 = 6.46545E-07
A8 = -4.56018E-08

22th surface
κ = 1.0000
A4 = -4.97075E-05
A6 = 2.11919E-07
A8 = 0.00000E+00

[Various data]
Zooming rate 11.90

|  | Wide angle | Intermediate | Telephoto |
|---|---|---|---|
| f | 9.05000 | 31.22000 | 107.63000 |
| FNO | 3.59 | 5.19 | 5.74 |
| ω | 42.13 | 13.87 | 4.15 |
| D5 | 1.00020 | 17.94742 | 36.02206 |
| D11 | 21.86565 | 8.23890 | 1.46641 |
| D19 | 1.50034 | 8.23008 | 7.62385 |
| D21 | 12.07988 | 15.43330 | 19.58032 |
| D23 | 4.18090 | 2.97206 | 1.00695 |
| Bf | 1.28000 | 1.28000 | 1.28000 |
| TL | 78.27867 | 90.47346 | 103.35129 |

| | Wide angle | Intermediate | Telephoto |
|---|---|---|---|
| Exit pupil position | -82.58509 | -973.07845 | 277.08493 |
| G4 image surface movement coefficient | -1.18488 | -1.42536 | -1.80649 |

(Upon focusing on infinity)

[Lens group data]

| Group number | Group starting surface | Group focal length |
|---|---|---|
| G1 | 1 | 58.57487 |
| G2 | 6 | -9.29335 |
| G3 | 13 | 13.91463 |
| G4 | 20 | -30.00000 |
| G5 | 22 | 27.97540 |

(continued)

[Lens group data]

| Group number | Group starting surface | Group focal length |
|---|---|---|

[Conditional expression corresponding value]

Conditional expression (1) f5/d4w = 2.316

Conditional expression (1) TLt×f3/(ft×ft) = 0.124

Conditional expression (1) ft×ft/{(-f4)×d3t} = 50.649

Conditional expression (1) $\omega$t = 4.15

Conditional expression (1) $\omega$w = 42.13

Conditional expression (1) f1/(fw×ft)$^{1/2}$ = 1.877

Conditional expression (1) f4/(fw×ft)$^{1/2}$ = 0.961

Conditional expression (1) Dm5/(fw×ft)$^{1/2}$ = 0.102

Conditional expression (1) -f2/ft = 0.086

Conditional expression (1) D5/ft = 0.031

Conditional expression (1) (-Dm4)/ft = 0.040

It can be seen in Table 4 that the zoom lens ZL4 according to Example 4 satisfies the conditional expressions (1) to (11).

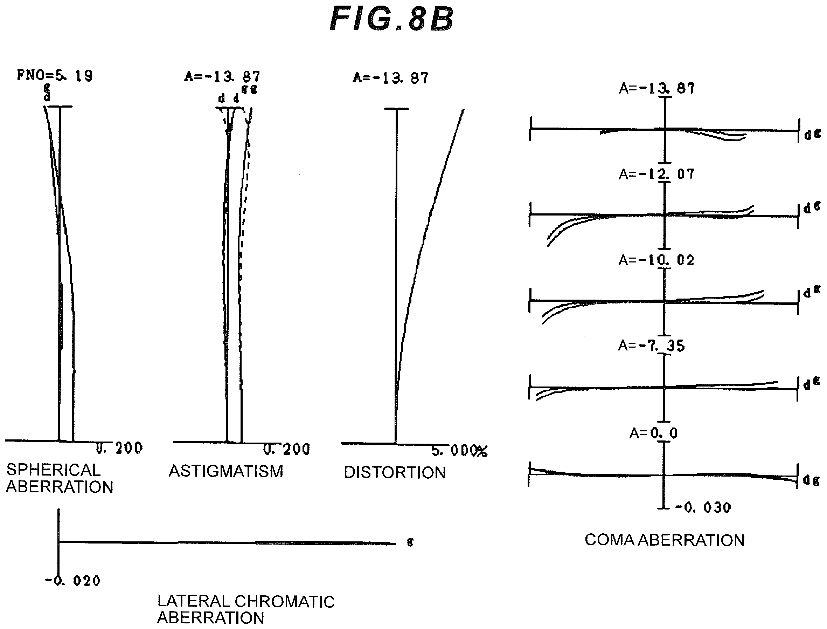

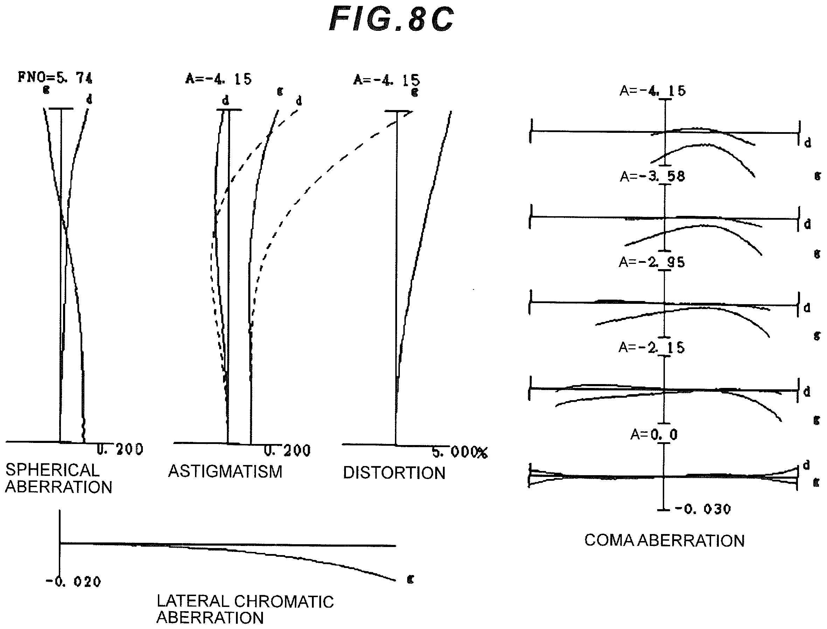

FIGs. 8A, 8B, and 8C are various aberration graphs (aspherical aberration graph, an astigmatism graph, a distortion graph, a coma aberration graph, and a lateral chromatic aberration graph) of the zoom lens ZL4 according to Example 4 upon focusing on infinity with FIG. 8A corresponding to the wide angle end state, FIG. 8B corresponding to the intermediate focal length state, and FIG. 8C corresponding to the telephoto end state.

It can be seen in the aberration graphs in FIGs. 8A, 8B, and 8C that the zoom lens ZL4 according to Example 4 can achieve an excellent imaging performance with various aberrations successfully corrected from the wide angle end state to the telephoto end state.

With the Examples according to the 1st embodiment described above, a zoom lens having a small size with an exit pupil position sufficiently distant from the image surface, and having high optical performance can be achieved.

Elements of the 1st embodiments are described above to facilitate the understanding of the present invention. It is a matter of course that the present invention is not limited to these. The following configurations can be appropriately employed without compromising the optical performance of the zoom lens according to the present application.

The numerical values of the configuration with the five groups are described as an example of values of the zoom lens ZL according to the 1st embodiment. However, this should not be construed in a limiting sense, and the present invention can be applied to a configuration with other number of groups (for example, six groups or the like). More specifically, a configuration further provided with a lens or a lens group closest to an object or further provided with a lens or a lens group closest to the image may be employed. The lens group is a portion including at least one lens separated from another lens with a distance varying upon zooming or focusing.

In the zoom lens ZL according to the 1st embodiment may have the following configuration. Specifically, upon focusing on a short-distant object from infinity, part of the lens groups of the first lens group G1 to the fifth lens group G5, one entire lens group, or a plurality of lens groups may be moved in the optical axis direction as the focusing lens group. The focusing lens group may be applied to auto focusing, and can be suitably driven by a motor (such as an ultrasonic motor for example) for auto focusing. The fourth lens group G4 is especially preferably used as the focusing lens group. The focusing may be performed with the fourth lens group G4 and the fifth lens group G5 simultaneously moved in an optical axis direction. The focusing may also be performed with the entire zoom lens ZL moved in the optical axis direction.

In the zoom lens ZL according to the 1st embodiment, the entire lens group of or part of any of the first lens group G1 to the fifth lens group G5 may be moved with a component in a direction orthogonal to the optical axis, or may be moved and rotated (swing) within an in-plane direction including the optical axis, to serve as the vibration-proof lens group for correcting image blur due to camera shake or the like.

In the zoom lens ZL according to the 1st embodiment, the lens surface may be formed to have a spherical surface or a planer surface, or may be formed to have an aspherical shape. The lens surface having a spherical surface or a planer surface features easy lens processing and assembly adjustment, which leads to the processing and assembly adjustment less likely to involve an error compromising the optical performance, and thus is preferable. Furthermore, there is an advantage that a rendering performance is not largely compromised even when the image surface is displaced. The lens surface having an aspherical shape may be achieved with any one of an aspherical shape formed by grinding, a glass-molded aspherical shape obtained by molding a glass piece into an aspherical shape, and a composite type aspherical surface obtained by providing an aspherical shape resin piece on a glass surface. A lens surface may be a diffractive surface. The lens may be a gradient index lens (GRIN lens) or a plastic lens.

In the zoom lens ZL according to the 1st embodiment, the aperture stop S is preferably disposed in the neighborhood of the third lens group G3. Alternatively, a lens frame may serve as the aperture stop so that the member serving as the aperture stop needs not to be provided.

In the zoom lens ZL according to the 1st embodiment, the lens surfaces may be provided with an antireflection film featuring high transmittance over a wide range of wavelengths to achieve an excellent optical performance with reduced flare and ghosting and increased contrast.

DESCRIPTION OF THE EMBODIMENTS (2nd EMBODIMENT)

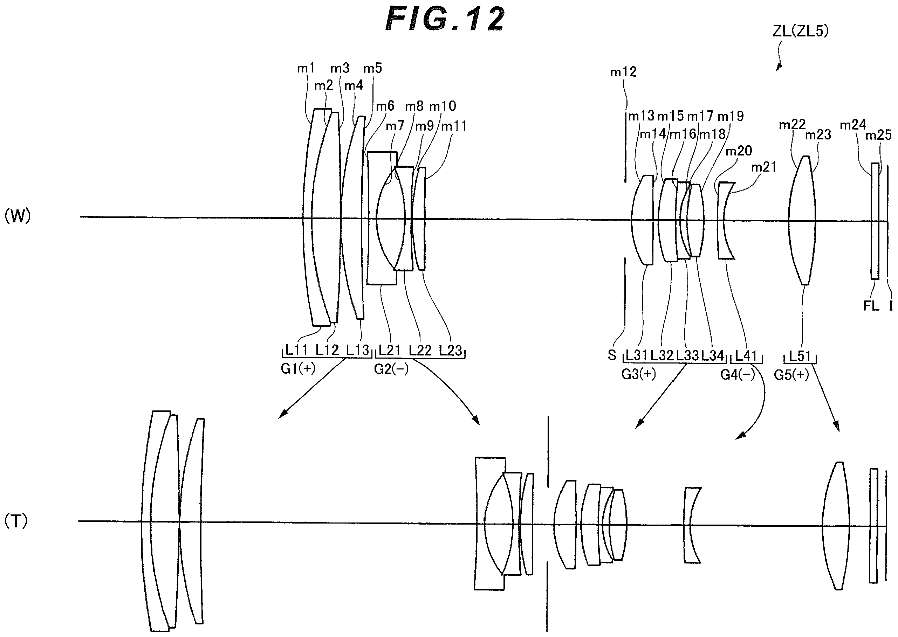

In the description below, a 2nd embodiment is described with reference to drawings. As illustrated in FIG. 12, a zoom lens ZL according to the 2nd embodiment includes a first lens group G1 having positive refractive power, a second lens group G2 having negative refractive power, a third lens group G3 having positive refractive power, a fourth lens group G4 having negative refractive power, and a fifth lens group G5 having positive refractive power, which are disposed in order from an object. Upon zooming from a wide angle end state to a telephoto end state, the fifth lens group G5 is moved toward an image side.

With such a configuration, a lens with a high zooming rate can be implemented.

The zoom lens ZL according to the 2nd embodiment having the configuration described above satisfies the following conditional expressions (12) and (13).

$$1.96 < f1/(fw \times ft)^{1/2} < 2.80 \ldots (12)$$

$$0.67 < f4/(fw \times ft)^{1/2} < 2.10 \ldots (13)$$

where,

f1 denotes a focal length of the first lens group G1,
f4 denotes a focal length of the fourth lens group G4,
fw denotes a focal length of the zoom lens ZL in the wide angle end state, and
ft denotes a focal length of the zoom lens ZL in the telephoto end state.

The conditional expression (12) is for setting a focal length of the first lens group G1. A spherical aberration and variation of aberration due to zooming can be reduced, when the conditional expression (12) is satisfied.

A value higher than the upper limit value of the conditional expression (12) leads to small refractive power of the first lens group G1, resulting in a large lens movement amount upon zooming and thus a large total length. Furthermore, the refractive power of the other lens groups increases, rendering various aberrations, such as curvature of field, in the telephoto end state difficult to correct.

To guarantee the effects of the 2nd embodiment, the upper limit value of the conditional expression (12) is preferably set to be 2.50.

A value lower than the lower limit value of the conditional expression (12) leads to large refractive power of the first lens group G1, rendering various aberrations, such as spherical aberration and curvature of field, in the telephoto end state difficult to correct.

To guarantee the effects of the 2nd embodiment, the lower limit value of the conditional expression (12) is preferably set to be 2.10.

The conditional expression (13) is for setting a focal length of the fourth lens group G4.

A value higher than the upper limit value of the conditional expression (13) renders various aberrations, such as curvature of field, difficult to correct.

To guarantee the effects of the 2nd embodiment, the upper limit value of the conditional expression (13) is preferably set to be 1.70.

A value lower than the lower limit value of the conditional expression (13) renders various aberrations, such as curvature of field, difficult to correct.

To guarantee the effects of the 2nd embodiment, the lower limit value of the conditional expression (13) is preferably set to be 0.75.

The zoom lens ZL according to the 2nd embodiment preferably has the distances among the lens groups changing upon zooming from the wide angle end state to the telephoto end state.

With such a configuration, a lens with a high zooming rate can be implemented.

The zoom lens ZL according to the 2nd embodiment preferably has the distance between the first lens group G1 and the second lens group G2 increasing and the distance between the second lens group G2 and the third lens group G3 decreasing upon zooming from the wide angle end state to the telephoto end state.

With such a configuration, a lens with a high zooming rate and excellent optical performance can be implemented.

In the zoom lens ZL according to the 2nd embodiment, the first lens group G1 preferably moves upon zooming from the wide angle end state to the telephoto end state.

With such a configuration, a lens with a high zooming rate and excellent optical performance can be implemented.

The zoom lens ZL according to the 2nd embodiment preferably satisfies the following conditional expression (14).

$$0.120 < Dm5/(fw \times ft)^{1/2} < 0.270 \ldots (14)$$

where,

Dm5 denotes a difference in the position of the fifth lens group G5 on the optical axis between the wide angle end state and the telephoto end state (with a value increasing in accordance with displacement toward the image side).

The conditional expression (14) is for setting a movement amount of the fifth lens group G5.

A value higher than the upper limit value of the conditional expression (14) renders various aberrations, such as curvature of field, in the wide angle end state difficult to correct.

To guarantee the effects of the 2nd embodiment, the upper limit value of the conditional expression (14) is preferably set to be 0.24.

A value lower than the lower limit value of the conditional expression (14) renders various aberrations, such as curvature of field, difficult to correct.

To guarantee the effects of the 2nd embodiment, the lower limit value of the conditional expression (14) is preferably set to be 0.16.

The zoom lens ZL according to the 2nd embodiment preferably satisfies the following conditional expression (15).

$$0.052 < (-f2)/ft < 0.150 \ldots (15)$$

where,

f2 denotes a focal length of the second lens group G2.

The conditional expression (15) is for setting relationship between the focal length of the second lens group G2 and the focal length of the zoom lens ZL in the telephoto end state. A spherical aberration and variation of aberration due to zooming can be reduced, when the conditional expression (15) is satisfied.

A value higher than the upper limit value of the conditional expression (15) leads to excessively small refractive power of the second lens group G2, resulting in larger refractive power of the other lens groups, rendering various aberrations, such as spherical aberration and curvature of field, difficult to correct. Furthermore, the movement amount of the second lens group G2 increases, leading to a larger optical total length and a large front lens diameter, rendering downsizing difficult.

To guarantee the effects of the 2nd embodiment, the upper limit value of the conditional expression (15) is preferably set to be 0.24.

A value lower than the lower limit value of the conditional expression (15) leads to excessively large refractive power of the second lens group G2, rendering various aberrations, such as astigmatism and curvature of field, difficult to correct.

To guarantee the effects of the 2nd embodiment, the lower limit value of the conditional expression (15) is preferably set to be 0.16.

The zoom lens ZL according to the 2nd embodiment preferably satisfies the following conditional expression (16).

$$0.020 < D5/ft < 0.050 \ldots (16)$$

where,

D5 denotes a thickness of the fifth lens group G5 on the optical axis.

The conditional expression (16) is for setting relationship between the thickness of the fifth lens group G5 on the optical axis and the focal length of the zoom lens ZL in the telephoto end state.

A value higher than the upper limit value of the conditional expression (16) results in an increase in the thickness of the fifth lens group G5 on the optical axis. An attempt to maintain distances among the groups renders various aberrations, such as a coma aberration, difficult to correct.

To guarantee the effects of the 2nd embodiment, the upper limit value of the conditional expression (16) is preferably set to be 0.041.

A value lower than the lower limit value of the conditional expression (16) leads to a small thickness of the fifth lens group G5 on the optical axis and small refractive power of the fifth lens group G5, rendering various aberrations, such as curvature of field, difficult to correct.

To guarantee the effects of the 2nd embodiment, the lower limit value of the conditional expression (16) is preferably set to be 0.025.

The zoom lens ZL according to the 2nd embodiment preferably satisfies the following conditional expression (17).

$$0.005 < (-Dm4)/ft < 0.080 \ \ldots \ (17)$$

where,

Dm4 denotes a difference in a position of the fourth lens group G4 on the optical axis between the wide angle end state and the telephoto end state (with a value increasing in accordance with displacement toward the image side).

The conditional expression (17) is for setting a movement amount of the fourth lens group G4.

A value higher than the upper limit value of the conditional expression (17) renders various aberrations, such as curvature of field and lateral chromatic aberration, difficult to correct, when the refractive power of the other lens groups is increased to maintain the entire optical length.

To guarantee the effects of the 2nd embodiment, the upper limit value of the conditional expression (17) is preferably set to be 0.075. To more effectively guarantee the effects of the 2nd embodiment, the upper limit value of the conditional expression (17) is preferably set to be 0.070.

A value lower than the lower limit value of the conditional expression (17) renders various aberrations, such as spherical aberration and on-axis chromatic aberration, difficult to correct.

To guarantee the effects of the 2nd embodiment, the lower limit value of the conditional expression (17) is preferably set to be 0.005.

In the zoom lens ZL according to the 2nd embodiment, the third lens group G3 preferably includes at least one aspherical lens.

With this configuration, various aberrations such as spherical aberration can be successfully corrected.

The zoom lens ZL according to the 2nd embodiment preferably satisfies the following conditional expression (18).

$$1.00° < ωt < 7.50° \ \ldots \ (18)$$

where,

ωt denotes a half angle of view in the telephoto end state.

The conditional expression (18) is for setting an optimum value of an angle of view in the telephoto end state. Various aberrations, such as a coma aberration, distortion, and curvature of field, can be successfully corrected, when the conditional expression (18) is satisfied.

To guarantee the effects of the 2nd embodiment, the upper limit value of the conditional expression (18) is preferably set to be 7.00°. To more effectively guarantee the effects of the 2nd embodiment, the upper limit value of the conditional expression (18) is preferably set to be 6.00°.

To guarantee the effects of the 2nd embodiment, the lower limit value of the conditional expression (18) is preferably set to be 2.00°.

The zoom lens ZL according to the 2nd embodiment preferably satisfies the following conditional expression (19).

$$32.00° < ωw < 47.00° \ \ldots \ (19)$$

where,

ωw denotes a half angle of view in the wide angle end state.

The conditional expression (19) is for setting an optimum value of an angle of view in the wide angle end state. Various aberrations, such as a coma aberration, distortion, and curvature of field, can be successfully corrected while guaranteeing a wide angle of view, when the conditional expression (19) is satisfied.

To guarantee the effects of the 2nd embodiment, the upper limit value of the conditional expression (19) is preferably set to be 45.00°.

To guarantee the effects of the 2nd embodiment, the lower limit value of the conditional expression (19) is preferably set to be 33.00°. To more effectively guarantee the effects of the 2nd embodiment, the lower limit value of the conditional expression (19) is preferably set to be 34.00°.

With the zoom lens ZL according to the 2nd embodiment having the configuration described above, a zoom lens having a high zooming rate, and having high optical performance can be achieved.

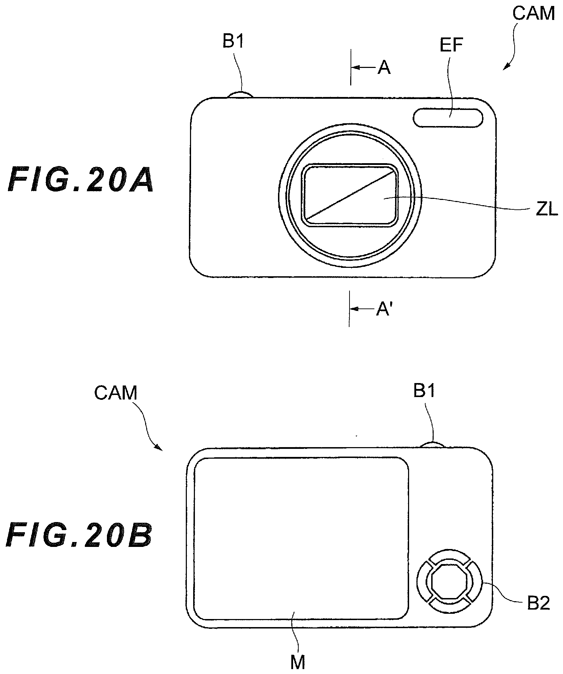

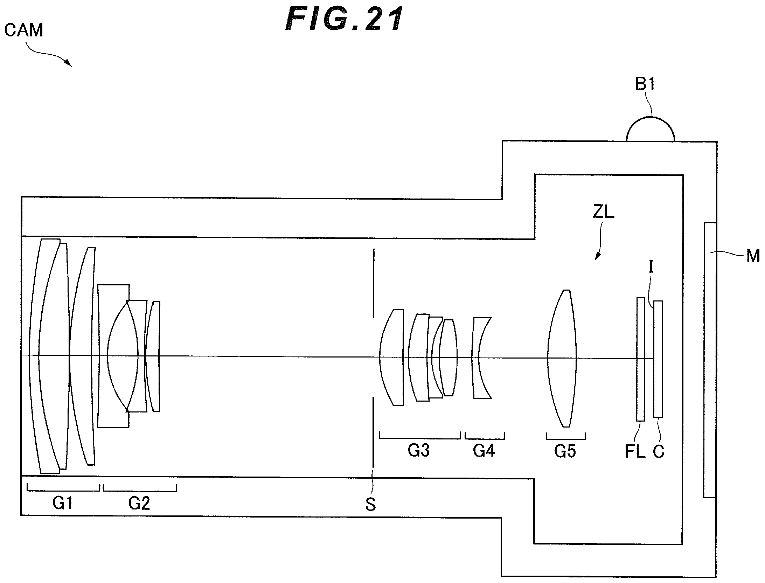

FIGS. 20A and 20B, and FIG. 21 illustrate a configuration of a digital still camera CAM (optical apparatus) that is an optical apparatus including the zoom lens ZL according to the 2nd embodiment. When a power button (not illustrated) is pressed, in the digital still camera CAM, a shutter (not illustrated) of an imaging lens (the zoom lens ZL) opens. Thus, light from a subject (object) is focused by the zoom lens ZL and formed on an image sensor C (such as a CCD or a CMOS for example) disposed on an image surface I (see FIG. 1). A subject image thus formed on the image sensor C is displayed on a liquid crystal monitor M provided on a back side of the digital still camera CAM. A photographer determines a composition of the subject image while viewing the liquid crystal monitor M, and thus presses down a release button B1 to capture the subject image with the image sensor C. The image is recorded and stored in a memory (not illustrated) . The photographer can capture an image of a subject with the camera CAM in the manner described above.

The camera CAM further includes: an auxiliary light emitting unit EF that emits auxiliary light when a subject is dark; and a function button B2 used for setting various conditions of the digital still camera CAM.

In this example, a compact type camera with the camera CAM and the zoom lens ZL integrally formed is described. The optical apparatus may also be a single-lens reflex camera with a lens barrel including the zoom lens ZL and a camera body that can be detachably attached to each other.

With the camera CAM according to the 2nd embodiment having the configuration described above including the zoom lens ZL according to the 2nd embodiment serving as the imaging lens, a camera having a high zooming rate, and having high optical performance can be achieved.

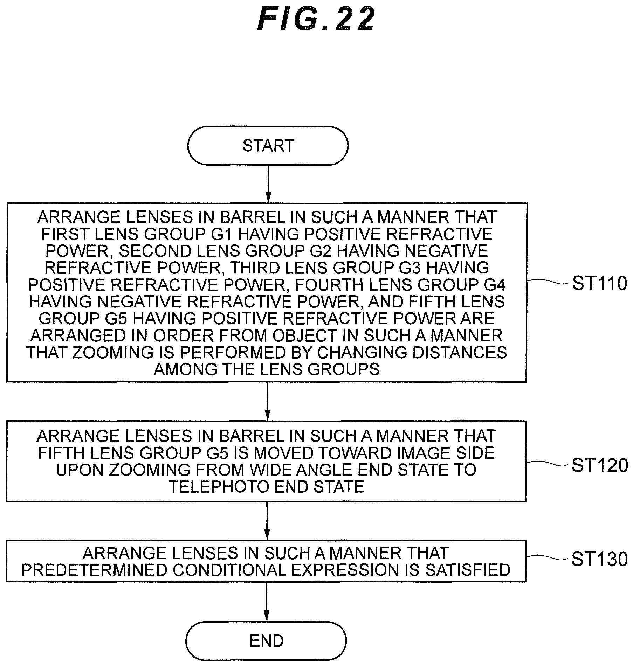

Next, a method for manufacturing the zoom lens ZL according to the 2nd embodiment is described with reference to FIG. 22. First of all, the lenses are arranged in a barrel in such a manner that the first lens group G1 having positive refractive power, the second lens group G2 having negative refractive power, the third lens group G3 having positive refractive power, the fourth lens group G4 having negative refractive power, and the fifth lens group G5 having positive refractive power are arranged in order from the object in such a manner that zooming is performed by changing the distances among the lens groups (step ST110). The lenses are arranged in such a manner that the fifth lens group G5 is moved toward the image side upon zooming from the wide angle end state to the telephoto end state (step ST120) . The lenses are arranged in such a manner that the following conditional expressions (12) and (13) are satisfied (step ST130).

$$1.96 < f1/(fw \times ft)^{1/2} < 2.80 \ldots (12)$$

$$0.67 < f4/(fw \times ft)^{1/2} < 2.10 \ldots (13)$$

where,

f1 denotes a focal length of the first lens group G1,
f4 denotes a focal length of the fourth lens group G4,
fw denotes a focal length of the zoom lens ZL in the wide angle end state, and
ft denotes a focal length of the zoom lens ZL in the telephoto end state.

An example of the lens arrangement according to the 2nd embodiment is described. Specifically, as illustrated in FIG. 12, the first to the fifth lens groups G1 - G5 are disposed in order from the object. The first lens group G1 includes: a cemented lens including a negative meniscus lens L11 having a concave surface facing the image side and a positive lens L12 having a biconvex shape; and a positive meniscus lens L13 having a convex surface facing the object side, disposed in order from the object. The second lens group G2 includes: a negative lens L21 having a biconcave shape; a negative lens L22 having a biconcave shape; and a positive meniscus lens L23 having a convex surface facing the object side, disposed in order from the object. The third lens group G3 includes: a positive lens L31 having a biconvex shape; a cemented lens including a positive meniscus lens L32 having a convex surface facing the object side and a negative meniscus lens L33 having a concave surface facing the image side; and a positive lens L34 having a biconvex shape disposed in order from the object. The fourth lens group G4 includes a negative meniscus lens L41 having a concave surface facing the image side. The fifth lens group G5 includes a positive lens L51 having a biconvex shape. The zoom lens ZL is manufactured by arranging lens groups thus prepared in the manner described above.

With the manufacturing method according to the 2nd embodiment as described above, the zoom lens ZL having a high zooming rate, and having high optical performance can be manufactured.

Example according to 2nd embodiment

Examples according to the 2nd embodiment are described with reference to the drawings. FIGS. 12, 14, 16, and 18 are cross-sectional views illustrating configurations and refractive power distributions of zoom lenses ZL (ZL5 to ZL8) according to Examples. Each cross-sectional view illustrates the positions of the lens groups in a process of zooming from the wide angle end state (W) to the telephoto end state(T).

Reference signs in FIG. 12 corresponding to Example 5 are independently provided for each Example, to avoid complication of description due to increase in the number of digits of the reference signs. Thus, reference signs that are the same as those in a drawing corresponding to another Example do not necessarily indicate a configuration that is the same as that in the other Example.

Table 5 to Table 8 described below are specification tables of Examples 5 to 8.

InExamples, d-line (wavelength 587.6nm), g-line (wavelength 435.8 nm), a C-line (wavelength 656.3 nm), and an F-line (wavelength 486.1 nm) are selected as calculation targets of the aberration characteristics.

In [Lens specifications] in the tables, a surface number represents an order of an optical surface from the object side in a traveling direction of a light beam, R represents a radius of curvature of each optical surface, D represents a distance between each optical surface and the next optical surface (or the image surface) on the optical axis, nd represents a refractive index of a material of an optical member with respect to the d-line, and $\nu$d represents Abbe number of the material of the optical member based on the d-line. Furthermore, obj surface represents an object surface, Di represents a distance between an ith surface and an (i + 1) th surface, (stop S) represents the aperture stop S, Bf represents back focus (a distance between a lens last surface and a paraxial image surface on the optical axis), and img surface represents the image surface I. Furthermore, "∞" and "0.00000" of a radius of curvature represents a plane or an aperture. The refractive index "1.000000" of air is omitted. An aspherical optical surface has a * mark in the field of surface number and has a paraxial radius of curvature in the field of radius of curvature R.

In the table, [Aspherical surface data] has the following formula (b) indicating the shape of an aspherical surface in [Lens specifications]. In the formula, X(y) represents a distance between the tangent plane at the vertex of the aspherical surface and a position on the aspherical surface at a height y along the optical axis direction, R represents a radius of curvature (paraxial radius of curvature) of a reference spherical surface, $\kappa$ represents a conical coefficient, and Ai represents an ith aspherical coefficient. In the formula, "E-n" represents "$\times 10^{-n}$". For example, $1.234E\text{-}05 = 1.234 \times 10^{-5}$. A secondary aspherical coefficient A2 is 0, and thus is omitted.

$$X(y) = (y^2 / R)/\{1 + (1 - \kappa \times y^2 / R^2)^{1/2}\} + A4 \times y^4 + A6 \times y^6 + A8 \times y^8 + A10 \times y^{10} \dots (b)$$

Specifically, in [Overall specifications] in the tables, f represents a focal length of the whole zoom lens, FNo represents F number, $\omega$ represents a half angle of view (unit: °), TL represents optical total length (the distance between the lens forefront surface and the paraxial image surface on the optical axis), and Bf represents back focus (a distance between a lens last surface and a paraxial image surface on the optical axis).

In the tables, [Zooming data] includes the surface distance Di in the wide-angle end state, the intermediate focal length state, and the telephoto end state. Note that Di represents the distance between the ith surface and the (i+1)th surface.

In [Zoom lens group data] in the tables, G represents a group number, group starting surface indicates the number of the surface closest to the object in each group, group focal length represents the focal length of each group, and lens configuration length represents the distance on the optical axis between the lens surface closest to the object and the lens surface closest to the image in each group.

In [Conditional expression] in the tables, values corresponding to the conditional expressions (12) to (19) are described.

The focal length f, the radius of curvature R, the surface distance D and the other units of length described below as all the specification values, which are generally described with "mm" unless otherwise noted should not be construed in a limiting sense because the optical system proportionally expanded or reduced can have a similar or the same optical performance. The unit is not limited to "mm", and other appropriate units may be used.

The description on the tables described above commonly applies to all Examples 5 to 8, and thus will not be described below.

(Example 5)

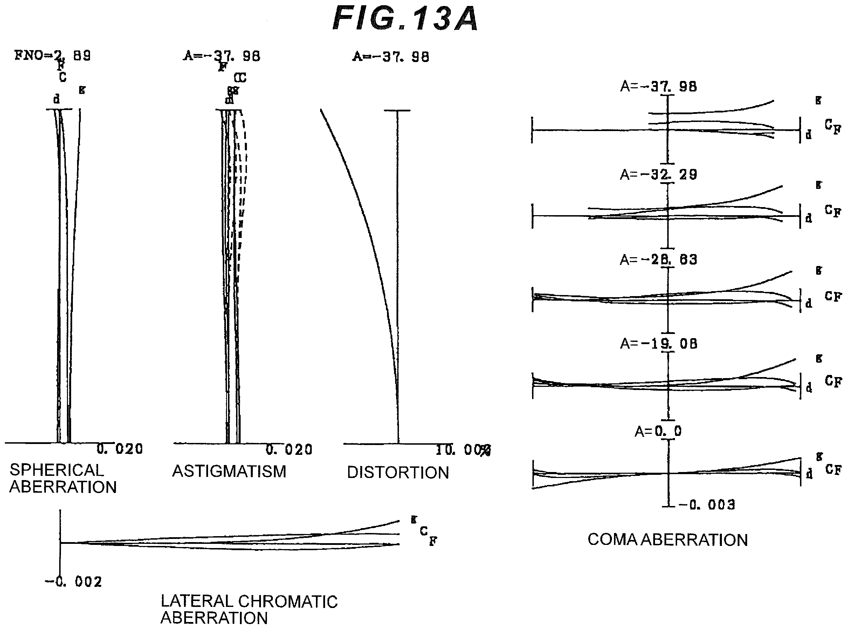

Example 5 is describedwith reference to FIG. 12, FIGs. 13A-13C, and Table 5. As illustrated in FIG. 12, a zoom lens ZL (ZL5) according to Example 5 includes: a first lens group G1 having positive refractive power; a second lens group G2 having negative refractive power; a third lens group G3 having positive refractive power; a fourth lens group G4 having negative refractive power; and a fifth lens group G5 having positive refractive power which are disposed in order from an object.

The first lens group G1 includes: a cemented lens including a negative meniscus lens L11 having a concave surface facing the image side and a positive lens L12 having a biconvex shape; and a positive meniscus lens L13 having a convex surface facing the object side, which are disposed in order from the object.

The second lens group G2 includes: a negative lens L21 having a biconcave shape; a negative lens L22 having a biconcave shape; and a positive meniscus lens L23 having a convex surface facing the object side which are disposed in order from an object. The negative lens L21 having a biconcave shape has an aspherical surface on the image side.

The third lens group G3 includes: a positive lens L31 having a biconvex shape; a cemented lens including a positive meniscus lens L32 having a convex surface facing the object side and a negative meniscus lens L33 having a concave surface facing the image side; and a positive lens L34 having a biconvex shape arranged in order from the object. The positive lens L31 having a biconvex shape has aspherical surfaces on both of the object side and the image side.

The fourth lens group G4 includes a negative meniscus lens L41 having a concave surface facing the image side. The negative meniscus lens L41 has an aspherical surface on the image side.

The fifth lens group G5 includes a positive lens L51 having a biconvex shape. The positive lens L51 having a biconvex shape has an aspherical surface on the object side.

An aperture stop S, for determining the brightness, is provided adjacent to and more on the object side than the third lens group G3.

A filter group FL is provided between the fifth lens group G5 and the image surface I. The filter group FL includes a glass block such as a lowpass filter and an infrared cut filter for cutting the spatial frequency overwhelming the resolution limit of a solid-state imaging device such as a CCD provided on the image surface I.

The zoom lens ZL5 according to the present example moves all the five lens groups G1 to G5 in such a manner that upon zooming from the wide angle end state to the telephoto end state, a distance between the first lens group G1 and the second lens group G2 increases, a distance between the second lens group G2 and the third lens group G3 decreases, a distance between the third lens group G3 and the fourth lens group G4 changes, and a distance between the fourth lens group G4 and the fifth lens group G5 increases. Specifically, upon zooming, the first lens group G1 is moved toward the object side, the second lens group G2 is moved toward the image side, the third lens group G3 is moved toward the object side, the fourth lens group G4 is moved toward the image side and then moved toward the object side, and the fifth lens group G5 is moved toward the image side. The aperture stop S integrally moves with the third lens group G3 toward the object side upon zooming.

In Table 5 below, specification values in Example 5 are listed. Surface numbers 1 to 25 in Table 5 respectively correspond to the optical surfaces m1 to m25 in FIG. 12.

(Table 5)

[Lens specifications]

| Surface number | R | D | nd | νd |
|---|---|---|---|---|
| Obj surface | ∞ | | | |
| 1 | 8.89769 | 0.13208 | 1.795040 | 28.69 |
| 2 | 4.70388 | 0.42925 | 1.497000 | 81.73 |
| 3 | -31.96674 | 0.00943 | | |
| 4 | 5.03309 | 0.31132 | 1.603000 | 65.44 |
| 5 | 30.43269 | D5 (Variable) | | |
| 6 | -18.42636 | 0.11321 | 1.772500 | 49.49 |
| *7 | 1.22318 | 0.42925 | | |
| 8 | -2.05202 | 0.09434 | 1.622990 | 58.12 |
| 9 | 10.31827 | 0.01887 | | |

(continued)

[Lens specifications]

| Surface number | R | D | nd | νd |
|---|---|---|---|---|
| 10 | 3.18337 | 0.18396 | 1.945950 | 17.98 |
| 11 | 66.33739 | D11 (Variable) | | |
| 12 | ∞ | 0.09434 | (Stop S) | |
| *13 | 1.32166 | 0.33019 | 1.693500 | 53.22 |
| *14 | -12.40396 | 0.07547 | | |
| 15 | 1.89257 | 0.25943 | 1.497000 | 81.73 |
| 16 | 5.87646 | 0.06604 | 1.784720 | 25.64 |
| 17 | 1.05410 | 0.10377 | | |
| 18 | 2.05301 | 0.25943 | 1.487490 | 70.31 |
| 19 | -2.27354 | D19(Variable) | | |
| 20 | 7.30761 | 0.09434 | 1.553320 | 71.67 |
| *21 | 1.13060 | D21(Variable) | | |
| *22 | 2.51284 | 0.40566 | 1.618810 | 63.86 |
| 23 | -4.69410 | D23 (Variable) | | |
| 24 | 0.00000 | 0.11038 | 1.516800 | 63.88 |
| 25 | 0.00000 | Bf | | |
| Img surface | ∞ | | | |

[Aspherical surface data]

7th surface
κ = 0.0000,A4=-1.49952E-02,A6=-3.16087E-03, A8= 0.00000E+00,A10= 0.00000E+00

13th surface
κ = 0.0000,A4=-3.17644E-02,A6= 0.00000E+00,A8= 0.00000E+00,A10= 0.00000E+00

14th surface
κ = 0.0000,A4= 5.13219E-02,A6= 0.00000E+00,A8= 0.00000E+00,A10= 0.00000E+00

21th surface
κ = 0.0000,A4= 0.00000E+00,A6=-1.62856E-02,A8=-1.21206E-02,A10= 0.00000E+00

22th surface
κ = 0.0000,A4=-2.28761E-04,A6= 1.25152E-02,A8= 0.00000E+00,A10= 0.00000E+00

[Overall specifications]
Zooming rate 10.015094

| | Wide angle end | Intermediate | Telephoto end |
|---|---|---|---|
| f | 1.00000 | 3.18605 | 10.015094 |
| FNo | 2.88705 | 3.87123 | 4.09587 |
| ω | 37.97787 | 13.00106 | 4.15018 |
| TL | 8.81848 | 8.92665 | 11.21378 |
| Bf | 0.13487 | 0.13487 | 0.13488 |

[Zooming data]

| | Wide angle end | Intermediate | Telephoto end |
|---|---|---|---|
| D5 | 0.11164 | 1.71345 | 4.15984 |
| D11 | 3.02327 | 0.79251 | 0.22933 |
| D19 | 0.20518 | 1.23512 | 0.85812 |
| D21 | 0.97206 | 0.86800 | 1.99592 |
| D23 | 0.85069 | 0.66195 | 0.31493 |

(continued)

[Zoom lens group data]

| Group number | Group starting surface | Group focal length | Lens configuration length |
|---|---|---|---|
| G1 | 1 | 7.09770 | 0.88208 |
| G2 | 6 | -1.31403 | 0.83962 |
| G3 | 13 | 1.66449 | 1.09434 |
| G4 | 20 | -2.43052 | 0.09434 |
| G5 | 22 | 2.70306 | 0.40566 |

[Conditional expression]

Conditional expression (12) $f1/(fw \times ft)^{1/2}$ = 2.228

Conditional expression (13) $f4/(fw \times ft)^{1/2}$ = 0.763

Conditional expression (14) $Dm5/(fw \times ft)^{1/2}$ = 0.168

Conditional expression (15) $-f2/ft$ = 0.129

Conditional expression (16) $D5/ft$ = 0.040

Conditional expression (17) $(-Dm4)/ft$ = 0.048

Conditional expression (18) $\omega t$ = 4.15018

Conditional expression (19) $\omega w$ = 37.97787

It can be seen in Table 5 that the zoom lens ZL5 according to Example 5 satisfies the conditional expressions (12) to (19).

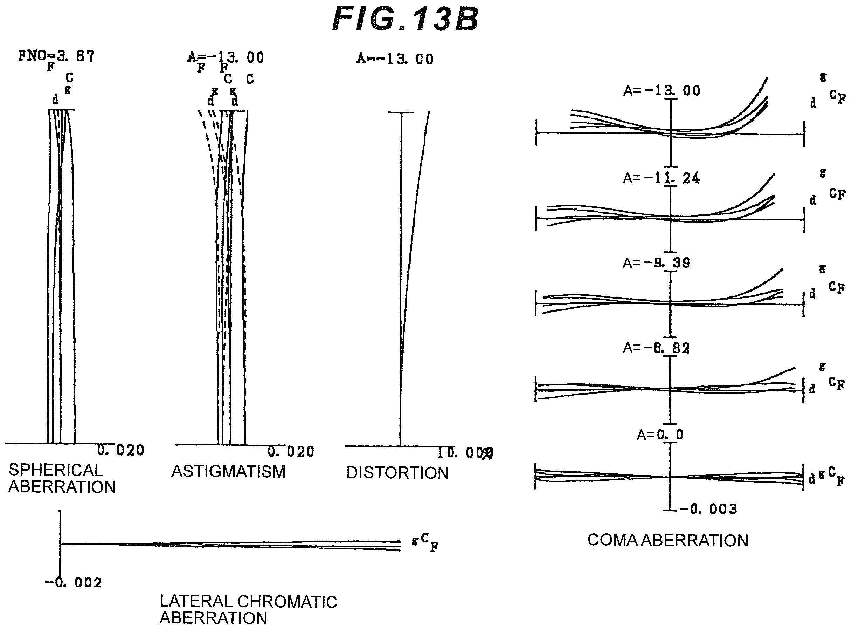

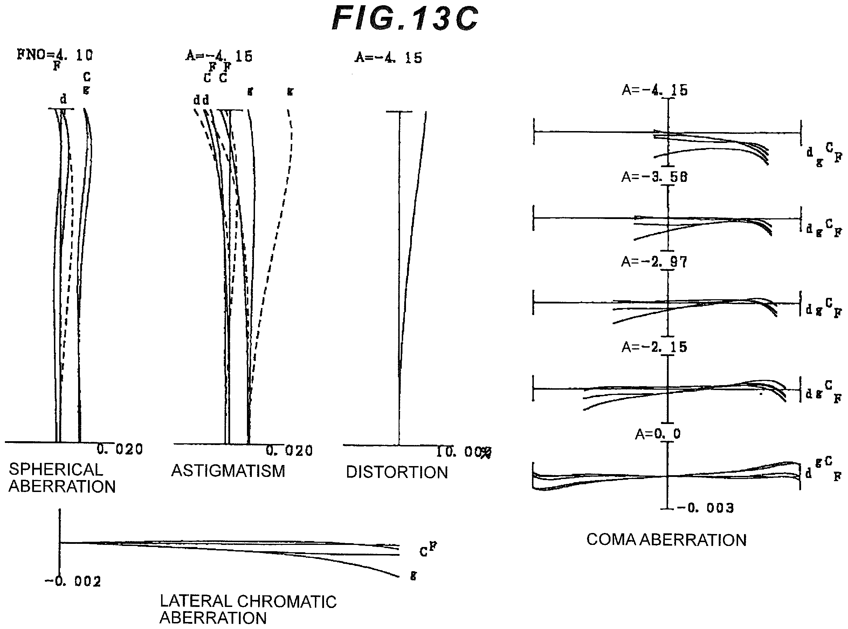

FIGs. 13A, 13B, and 13C are various aberration graphs (a spherical aberration graph, an astigmatism graph, a distortion graph, a coma aberration graph, and a lateral chromatic aberration graph) of the zoom lens ZL5 according to Example 5 upon focusing on infinity with FIG. 13A corresponding to the wide angle end state, FIG. 13B corresponding to the intermediate focal length state, and FIG. 13C corresponding to the telephoto end state.

In the aberration graphs, FNO represents an F number, A represents a half angle of view (unit: °), and d, g, C, and F respectively represent aberrations on the d-line, the g-line, the C-line, and the F-line. Those denoted with none of the above represent aberrations on the d-line. In an aberration graph, a solid line represents a spherical aberration, and a broken line represents a sine condition. In an astigmatism graph, a solid line represents a sagittal image surface, and a broken line represents a meridional image surface. In a coma aberration graph, a solid line represents a meridional coma. The lateral chromatic aberration graph is illustrated based on the d-line. In aberration graphs in Examples described below, the same reference signs as in this Example are used.

It can be seen in the aberration graphs in FIGs. 13A, 13B, and 13C that the zoom lens ZL5 according to Example 5 can achieve an excellent imaging performance with various aberrations successfully corrected from the wide angle end state to the telephoto end state.

(Example 6)

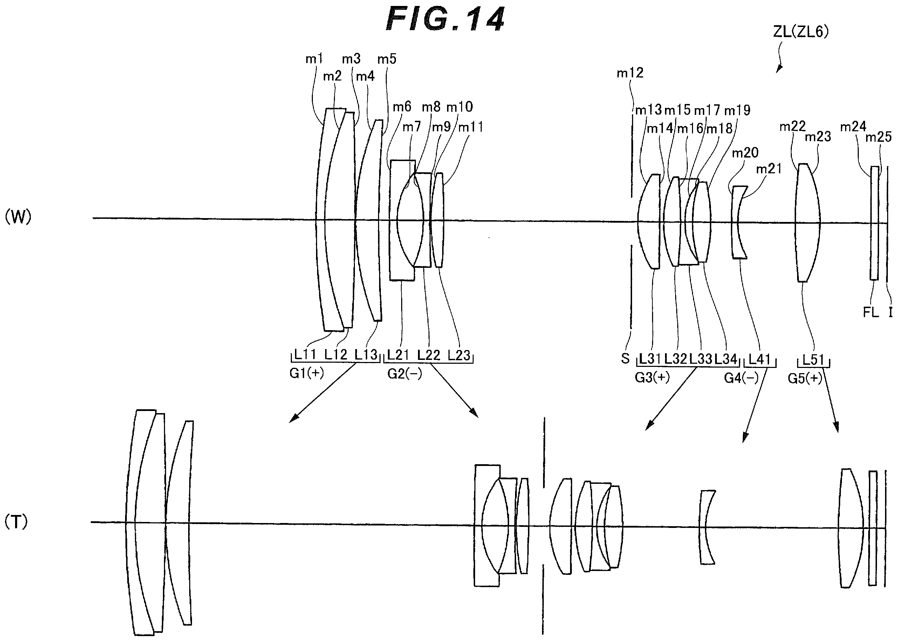

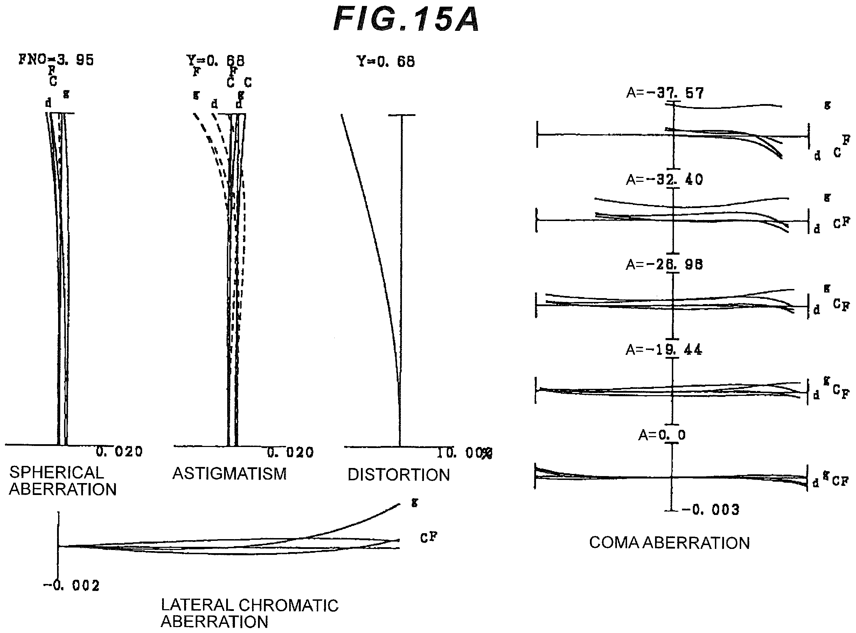

Example 6 is describedwith reference to FIG. 14, FIGs. 15A-15C, and Table 6. As illustrated in FIG. 14, a zoom lens ZL (ZL6) according to Example 6 includes: a first lens group G1 having positive refractive power; a second lens group G2 having negative refractive power; a third lens group G3 having positive refractive power; a fourth lens group G4 having negative refractive power; and a fifth lens group G5 having positive refractive power which are disposed in order from an object.

The first lens group G1 includes: a cemented lens including a negative meniscus lens L11 having a concave surface facing the image side and a positive lens L12 having a biconvex shape; and a positive meniscus lens L13 having a convex surface facing the object side, which are disposed in order from the object.

The second lens group G2 includes: a negative meniscus lens L21 having a concave surface facing the image side; a negative lens L22 having a biconcave shape; and a positive lens L23 having a biconvex shape, which are disposed in order from the object. The negative lens L22 having a biconcave shape has aspherical surfaces on both of the object side and the image side.

The third lens group G3 includes: a positive lens L31 having a biconvex shape; a cemented lens including a positive lens L32 having a biconvex shape and a negative lens L33 having a biconcave shape; and a positive lens L34 having a biconvex shape, which are disposed in order from an object. The positive lens L31 having a biconvex shape has aspherical surfaces on both of the object side and the image side.

The fourth lens group G4 includes a negative meniscus lens L41 having a concave surface facing the image side. The negative meniscus lens L41 has an aspherical surface on the image side.

The fifth lens group G5 includes a positive lens L51 having a biconvex shape. The positive lens L51 having a biconvex shape has an aspherical surface on the object side.

An aperture stop S, for determining the brightness, is provided adjacent to and more on the object side than the third lens group G3.

A filter group FL is provided between the fifth lens group G5 and the image surface I. The filter group FL includes a glass block such as a lowpass filter and an infrared cut filter for cutting the spatial frequency overwhelming the resolution limit of a solid-state imaging device such as a CCD provided on the image surface I.

The zoom lens ZL6 according to the present example moves all the five lens groups G1 to G5 in such a manner that upon zooming from the wide angle end state to the telephoto end state, a distance between the first lens group G1 and the second lens group G2 increases, a distance between the second lens group G2 and the third lens group G3 decreases, a distance between the third lens group G3 and the fourth lens group G4 changes, and a distance between the fourth lens group G4 and the fifth lens group G5 increases. Specifically, upon zooming, the first lens group G1 is moved toward the object side, the second lens group G2 is moved toward the image side, the third lens group G3 is moved toward the object side, the fourth lens group G4 is moved toward the object side, and the fifth lens group G5 is moved toward the image side. The aperture stop S integrally moves with the third lens group G3 toward the object side upon zooming.

In Table 6 below, specification values in Example 6 are listed. Surface numbers 1 to 25 in Table 6 respectively correspond to the optical surfaces m1 to m25 in FIG. 14.

(Table 6)

[Lens specifications]

| Surface number | R | D | nd | νd |
|---|---|---|---|---|
| Obj surface | ∞ | | | |
| 1 | 10.48948 | 0.13208 | 1.850260 | 32.35 |
| 2 | 4.77283 | 0.45755 | 1.497000 | 81.73 |
| 3 | -44.21095 | 0.00943 | | |
| 4 | 4.32871 | 0.34906 | 1.603000 | 65.44 |
| 5 | 22.14886 | D5(Variable) | | |
| 6 | 33.20405 | 0.11321 | 1.799520 | 42.09 |
| 7 | 1.18686 | 0.40094 | | |
| *8 | -1.72595 | 0.09434 | 1.768020 | 49.23 |
| *9 | 17.68559 | 0.01887 | | |
| 10 | 3.43418 | 0.18868 | 1.945944 | 17.98 |
| 11 | -11.82097 | D11 (Variable) | | |
| 12 | ∞ | 0.09434 | (Stop S) | |
| *13 | 1.35910 | 0.33019 | 1.693500 | 53.22 |
| *14 | -14.77673 | 0.05660 | | |
| 15 | 1.71011 | 0.25943 | 1.497000 | 81.73 |
| 16 | -6.50727 | 0.06604 | 1.688930 | 31.16 |
| 17 | 1.00973 | 0.11792 | | |
| 18 | 2.11806 | 0.27358 | 1.603000 | 65.44 |
| 19 | -2.81605 | D19(Variable) | | |
| 20 | 5.46298 | 0.09434 | 1.583130 | 59.44 |
| *21 | 1.10425 | D21(Variable) | | |
| *22 | 6.14744 | 0.37736 | 1.592010 | 67.05 |
| 23 | -2.14882 | D23(Variable) | | |
| 24 | 0.00000 | 0.11038 | 1.516800 | 63.88 |
| 25 | 0.00000 | Bf | | |
| Img surface | ∞ | | | |

[Aspherical surface data]

8th surface

$\kappa$ = 0.0000, A4 = 2.50272E-02, A6 = 0.00000E+00, A8 = 0.00000E+00, A10 = 0.00000E+00

(continued)

[Aspherical surface data]

9th surface

$\kappa$ = 0.0000,A4= 2.45863E-02,A6= 0.00000E+00,A8= 0.00000E+00,A10= 0.00000E+00

13th surface

$\kappa$ = 0.0000,A4=-2.18620E-02,A6= 8.87111E-03,A8= 0.00000E+00,A10 = 0.00000E+00

14th surface

$\kappa$ = 0.0000,A4= 4.76381E-02,A6= 2.17581E-03,A8= 0.00000E+00,A10= 0.00000E+00

21th surface

$\kappa$ = 0.0000,A4= 0.00000E+00,A6= 7.51204E-03,A8=-2.45863E-01,A10= 0.00000E+00

22th surface

$\kappa$ = 0.0000,A4=-2.78834E-02,A6= 6.18823E-03,A8= 0.00000E+00,A10= 0.00000E+00

[Overall specifications]

Zooming rate 10.015094

|  | Wide angle end | Intermediate | Telephoto end |
|---|---|---|---|
| f | 1.00000 | 3.18605 | 10.015094 |
| FNo | 3.95801 | 4.42171 | 4.50956 |
| $\omega$ | 37.57318 | 12.98250 | 4.19937 |
| TL | 8.62204 | 9.69400 | 11.31174 |
| Bf | 0.13481 | 0.13481 | 0.13470 |

[Zooming data]

|  | Wide angle end | Intermediate | Telephoto end |
|---|---|---|---|
| D5 | 0.15727 | 2.17201 | 4.29591 |
| D11 | 2.84103 | 1.07226 | 0.22574 |
| D19 | 0.31295 | 0.94759 | 1.16038 |
| D21 | 0.85974 | 1.37340 | 1.99514 |
| D23 | 0.77190 | 0.44960 | 0.09024 |

[Zoom lens group data]

| Group number | Group starting surface | Group focal length | Lens configuration length |
|---|---|---|---|
| G1 | 1 | 7.65078 | 0.88208 |
| G2 | 6 | -1.28158 | 0.83962 |
| G3 | 13 | 1.61492 | 1.09434 |
| G4 | 20 | -2.39248 | 0.09434 |
| G5 | 22 | 2.73585 | 0.40566 |

[Conditional expression]

Conditional expression (12) $f1/(fw \times ft)^{1/2}$ = 2.401

Conditional expression (13) $f4/(fw \times ft)^{1/2}$ = 0.751

Conditional expression (14) $Dm5/(fw \times ft)^{1/2}$ = 0.214

Conditional expression (15) -f2/ft = 0.126

Conditional expression (16) D5/ft = 0.037

Conditional expression (17) (-Dm4)/ft = 0.045

Conditional expression (18) $\omega$t = 4.19937

Conditional expression (19) $\omega$w = 37.57318

It can be seen in Table 6 that the zoom lens ZL6 according to Example 6 satisfies the conditional expressions (12) to (19).

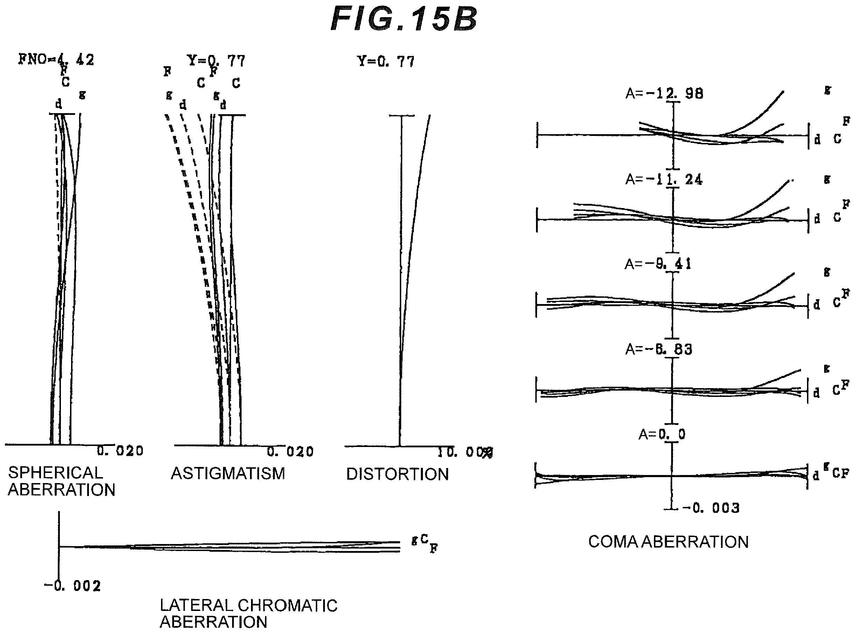

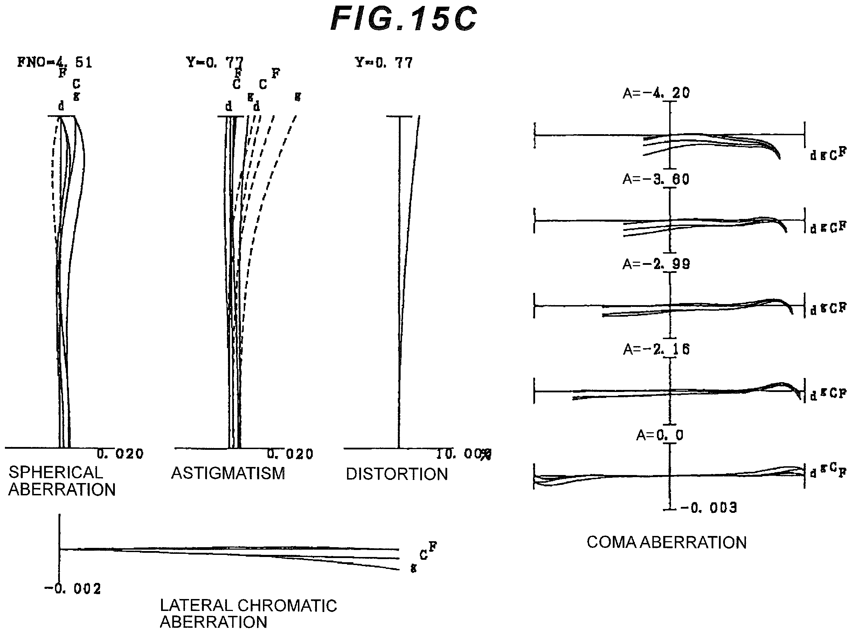

FIGs. 15A, 15B, and 15C are various aberration graphs (a spherical aberration graph, an astigmatism graph, a distortion graph, a coma aberration graph, and a lateral chromatic aberration graph) of the zoom lens ZL6 according to Example 6 upon focusing on infinity with FIG. 15A corresponding to the wide angle end state, FIG. 15B corresponding to the intermediate focal length state, and FIG. 15C corresponding to the telephoto end state.

It can be seen in the aberration graphs in FIGs. 15A, 15B, and 15C that the zoom lens ZL6 according to Example 6 can achieve an excellent imaging performance with various aberrations successfully corrected from the wide angle end state to the telephoto end state.

(Example 7)

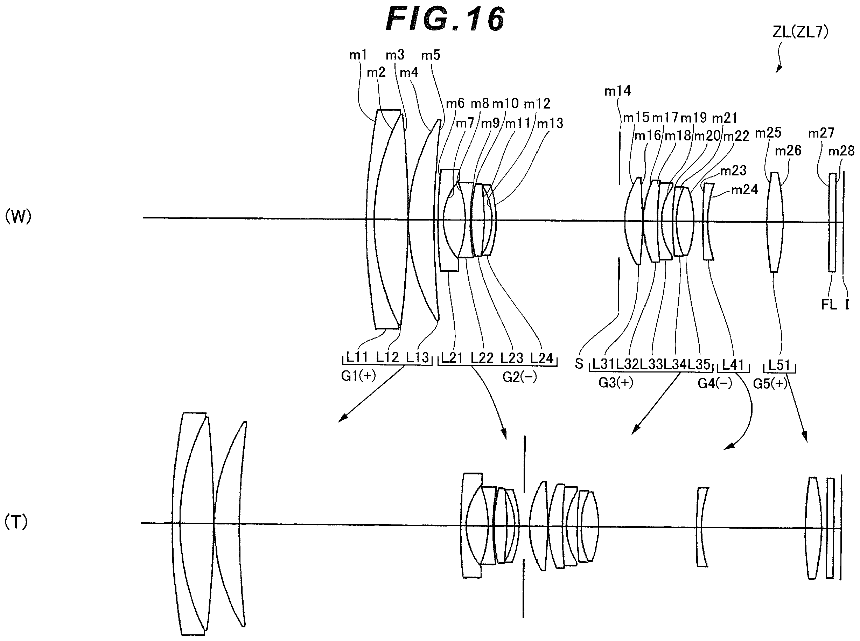

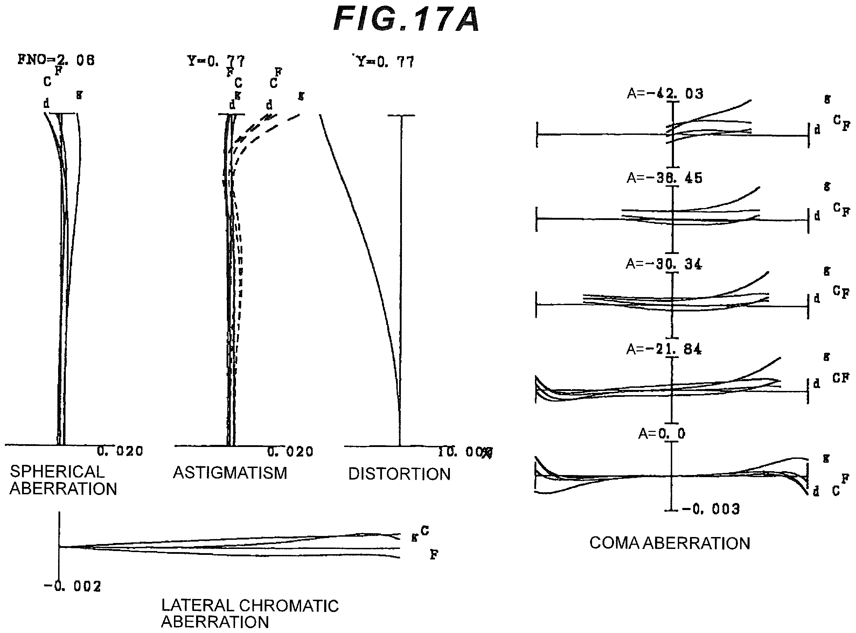

Example 7 is describedwith reference to FIG. 16, FIGs. 17A-17C, and Table 7. As illustrated in FIG. 16, a zoom lens ZL (ZL7) according to Example 7 includes: a first lens group G1 having positive refractive power; a second lens group G2 having negative refractive power; a third lens group G3 having positive refractive power; a fourth lens group G4 having negative refractive power; and a fifth lens group G5 having positive refractive power which are disposed in order from an object.

The first lens group G1 includes: a cemented lens including a negative meniscus lens L11 having a concave surface facing the image side and a positive lens L12 having a biconvex shape; and a positive meniscus lens L13 having a convex surface facing the object side, which are disposed in order from the object.

The second lens group G2 includes: a negative meniscus lens L21 having a concave surface facing the image side; a negative lens L22 having a biconcave shape; a positive lens L23 having a biconvex shape; and a negative meniscus lens L24 having a concave surface facing the object side, which are disposed in order from the object. The negative meniscus lens L21 has aspherical surfaces on both of the object side and the image side.

The third lens group G3 includes: a positive lens L31 having a biconvex shape; a cemented lens including a positive meniscus lens L32 having a convex surface facing the object side and a negative meniscus lens L33 having a concave surface facing the image side; a cemented lens including a negative meniscus lens L34 having a concave surface facing the image side; and a positive lens L35 having a biconvex shape, which are disposed in order from the object. The positive lens L31 having a biconvex shape has aspherical surfaces on both of the object side and the image side.

The fourth lens group G4 includes a negative meniscus lens L41 having a concave surface facing the image side. The negative meniscus lens L41 has an aspherical surface on the image side.

The fifth lens group G5 includes a positive lens L51 having a biconvex shape. The positive lens L51 having a biconvex shape has an aspherical surface on the object side.

An aperture stop S, for determining the brightness, is provided adjacent to and more on the object side than the third lens group G3.

A filter group FL is provided between the fifth lens group G5 and the image surface I. The filter group FL includes a glass block such as a lowpass filter and an infrared cut filter for cutting the spatial frequency overwhelming the resolution limit of a solid-state imaging device such as a CCD provided on the image surface I.

The zoom lens ZL7 according to the present example moves all the five lens groups G1 to G5 in such a manner that upon zooming from the wide angle end state to the telephoto end state, a distance between the first lens group G1 and the second lens group G2 increases, a distance between the second lens group G2 and the third lens group G3 decreases, a distance between the third lens group G3 and the fourth lens group G4 changes, and a distance between the fourth lens group G4 and the fifth lens group G5 increases. Specifically, upon zooming, the first lens group G1 is moved toward the object side, the second lens group G2 is moved toward the image side, the third lens group G3 is moved toward the object side, the fourth lens group G4 is moved toward the image side and then moved toward the object side, and the fifth lens group G5 is moved toward the image side. The aperture stop S integrally moves with the third lens group G3 toward the object side upon zooming.

In Table 7 below, specification values in Example 7 are listed. Surface numbers 1 to 28 in Table 7 respectively correspond to the optical surfaces m1 to m28 in FIG. 16.

(Table 7)

[Lens specifications]

| Surface number | R | D | nd | νd |
|---|---|---|---|---|
| Obj surface | ∞ | | | |
| 1 | 12.44522 | 0.15453 | 1.910820 | 35.25 |
| 2 | 4.86090 | 0.68433 | 1.497000 | 81.73 |
| 3 | -17.94869 | 0.01104 | | |
| 4 | 4.01822 | 0.50773 | 1.603000 | 65.44 |
| 5 | 17.63829 | D5 (Variable) | | |
| *6 | 13.14355 | 0.11038 | 1.851350 | 40.10 |

(continued)

[Lens specifications]

| Surface number | R | D | nd | νd |
|---|---|---|---|---|
| *7 | 1.27623 | 0.44150 | | |
| 8 | -2.13976 | 0.09934 | 1.834810 | 42.73 |
| 9 | 4.65876 | 0.02208 | | |
| 10 | 3.43355 | 0.25386 | 1.945950 | 17.98 |
| 11 | -5.09851 | 0.16004 | | |
| 12 | -1.40459 | 0.08830 | 1.603000 | 65.44 |
| 13 | -2.14672 | D13 (Variable) | | |
| 14 | ∞ | 0.11038 | (Stop S) | |
| *15 | 1.68325 | 0.36424 | 1.618810 | 63.86 |
| *16 | -5.55328 | 0.01104 | | |
| 17 | 2.14052 | 0.28698 | 1.603000 | 65.44 |
| 18 | 8.13453 | 0.07726 | 1.581440 | 40.98 |
| 19 | 1.31536 | 0.22075 | | |
| 20 | 6.12841 | 0.07726 | 1.755200 | 27.57 |
| 21 | 1.76906 | 0.35320 | 1.497000 | 81.73 |
| 22 | -1.96153 | D22 (Variable) | | |
| 23 | 11.43749 | 0.09934 | 1.592010 | 67.05 |
| *24 | 2.60133 | D24 (Variable) | | |
| *25 | 5.14219 | 0.33113 | 1.592010 | 67.05 |
| 26 | -4.33506 | D26 (Variable) | | |
| 27 | 0.00000 | 0.12914 | 1.516800 | 63.88 |
| 28 | 0.00000 | Bf | | |
| Img surface | ∞ | | | |

[Aspherical surface data]

6th surface

$\kappa$= 0.0000,A4= 1.23964E-02,A6= 0.00000E+00,A8= 0.00000E+00,A10= 0.00000E+00

7th surface

$\kappa$= 0.0000,A4= 5.79301E-03,A6= 1.11989E-02,A8= 0.00000E+00,A10= 0.00000E+00

15th surface

$\kappa$= 0.0000,A4=-2.11270E-02,A6= 3.00468E-03,A8= 0.00000E+00,A10= 0.00000E+00

16th surface

$\kappa$= 0.0000,A4= 4.55787E-02,A6= 0.00000E+00,A8= 0.00000E+00,A10= 0.00000E+00

24th surface

$\kappa$= 0.0000,A4= 3.72669E-03,A6= 0.00000E+00,A8= 0.00000E+00,A10= 0.00000E+00

25th surface

$\kappa$= 0.0000,A4=-2.03605E-02,A6= 0.00000E+00,A8= 0.00000E+00,A10= 0.00000E+00

[Overall specifications]

Zooming rate 11.87638

| | Wide angle end | Intermediate | Telephoto end |
|---|---|---|---|
| f | 1.00000 | 3.44621 | 11.87638 |
| FNo | 2.06367 | 3.24469 | 4.16656 |
| ω | 42.03372 | 13.97794 | 4.15396 |
| TL | 9.60800 | 11.33008 | 13.45283 |
| Bf | 0.15781 | 0.15781 | 0.15753 |

(continued)

[Zooming data]

| | Wide angle end | Intermediate | Telephoto end |
|---|---|---|---|
| D5 | 0.08358 | 2.34920 | 4.43766 |
| D13 | 2.47156 | 0.83323 | 0.09697 |
| D22 | 0.18188 | 1.90634 | 1.97053 |
| D24 | 1.19277 | 1.01980 | 2.08540 |
| D26 | 0.92658 | 0.46989 | 0.11091 |

[Zoom lens group data]

| Group number | Group starting surface | Group focal length | Lens configuration length |
|---|---|---|---|
| G1 | 1 | 7.47345 | 1.35762 |
| G2 | 6 | -1.11498 | 1.17550 |
| G3 | 15 | 1.91694 | 1.50110 |
| G4 | 23 | -5.71153 | 0.09934 |
| G5 | 25 | 4.02542 | 0.33113 |

[Conditional expression]

Conditional expression (12) $f1/(fw \times ft)^{1/2} = 2.169$

Conditional expression (13) $f4/(fw \times ft)^{1/2} = 1.657$

Conditional expression (14) $Dm5/(fw \times ft)^{1/2} = 0.237$

Conditional expression (15) $-f2/ft = 0.094$

Conditional expression (16) $D5/ft = 0.028$

Conditional expression (17) $(-Dm4)/ft = 0.069$

Conditional expression (18) $\omega t = 4.15396$

Conditional expression (19) $\omega w = 42.03372$

It can be seen in Table 7 that the zoom lens ZL7 according to Example 7 satisfies the conditional expressions (12) to (19).

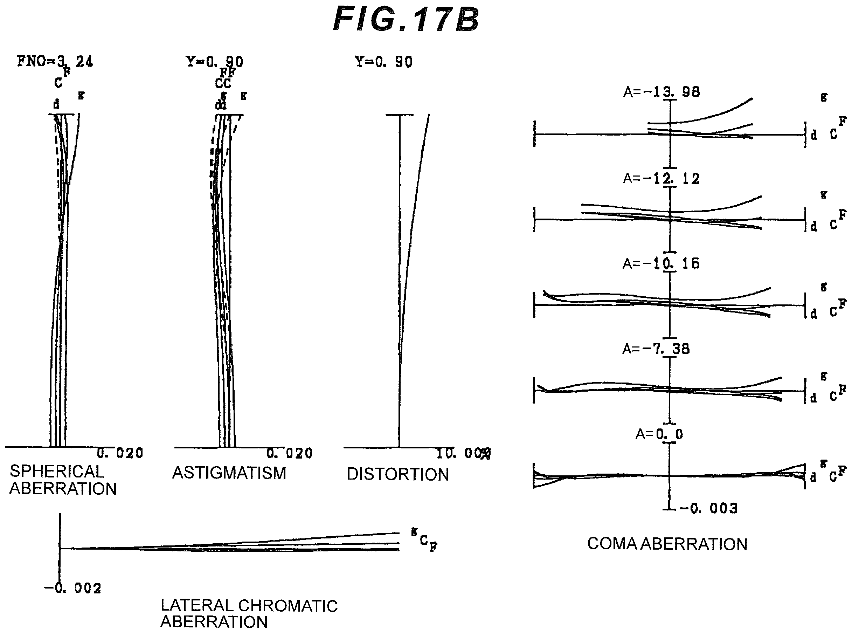

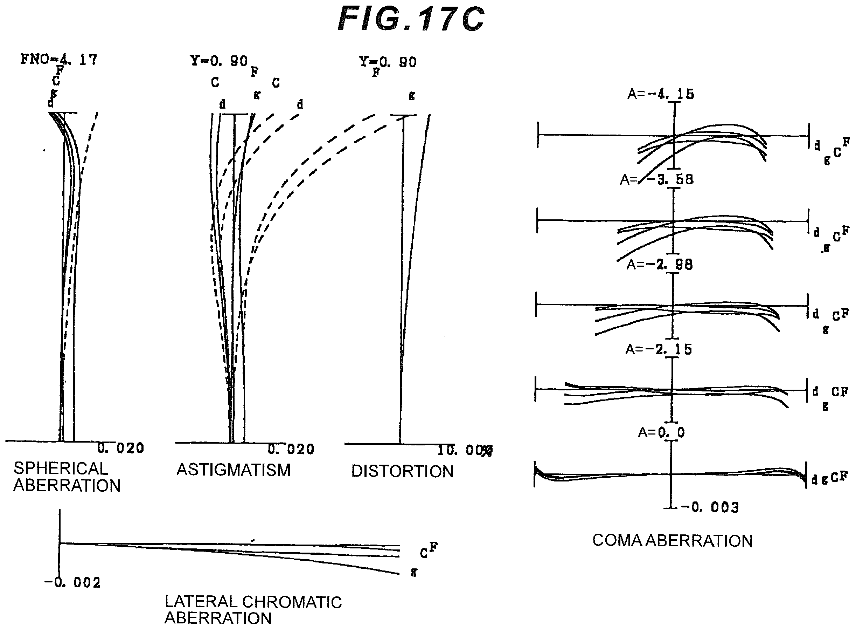

FIGs. 17A, 17B, and 17C are various aberration graphs (a spherical aberration graph, an astigmatism graph, a distortion graph, a coma aberration graph, and a lateral chromatic aberration graph) of the zoom lens ZL7 according to Example 7 upon focusing on infinity with FIG. 17A corresponding to the wide angle end state, FIG. 17B corresponding to the intermediate focal length state, and FIG. 17C corresponding to the telephoto end state.

It can be seen in the aberration graphs in FIGs. 17A, 17B, and 17C that the zoom lens ZL7 according to Example 7 can achieve an excellent imaging performance with various aberrations successfully corrected from the wide angle end state to the telephoto end state.

(Example 8)

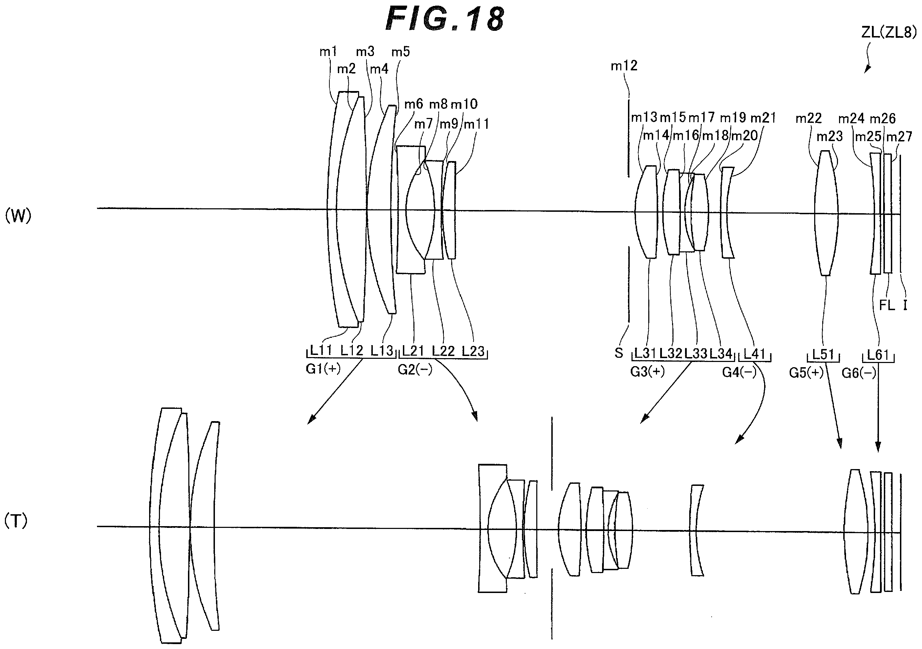

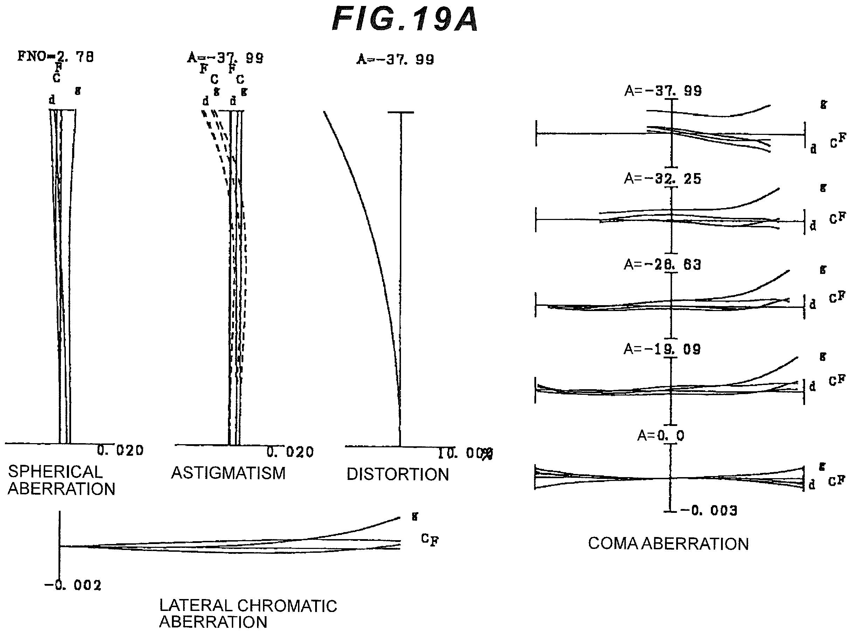

Example 8 is described with reference to FIG. 18, FIGs. 19A-19C, and Table 8. As illustrated in FIG. 18, a zoom lens ZL (ZL8) according to Example 8 includes: a first lens group G1 having positive refractive power; a second lens group G2 having negative refractive power; a third lens group G3 having positive refractive power; a fourth lens group G4 having negative refractive power; a fifth lens group G5 having positive refractive power; and a sixth lens group G6 having negative refractive power, which are disposed in order from an object.

The first lens group G1 includes: a cemented lens including a negative meniscus lens L11 having a concave surface facing the image side and a positive lens L12 having a biconvex shape; and a positive meniscus lens L13 having a convex surface facing the object side, which are disposed in order from the object.

The second lens group G2 includes: a negative lens L21 having a biconcave shape; a negative lens L22 having a biconcave shape; and a positive meniscus lens L23 having a convex surface facing the object side which are disposed in order from an object. The negative lens L21 having a biconcave shape has an aspherical surface on the image side.

The third lens group G3 includes: a positive lens L31 having a biconvex shape; a cemented lens including a positive lens L32 having a biconvex shape and a negative lens L33 having a biconcave shape; and a positive lens L34 having a biconvex shape, which are disposed in order from an object. The positive lens L31 having a biconvex shape has aspherical surfaces on both of the object side and the image side.

The fourth lens group G4 includes a negative meniscus lens L41 having a concave surface facing the image side. The negative meniscus lens L41 has an aspherical surface on the image side.

The fifth lens group G5 includes a positive lens L51 having a biconvex shape. The positive lens L51 having a biconvex shape has an aspherical surface on the object side.

The sixth lens group G6 includes a negative lens L61 having a biconcave shape.

An aperture stop S, for determining the brightness, is provided adjacent to and more on the object side than the third lens group G3.

A filter group FL is provided between the sixth lens group G6 and the image surface I. The filter group FL includes a glass block such as a lowpass filter and an infrared cut filter for cutting the spatial frequency overwhelming the resolution limit of a solid-state imaging device such as a CCD provided on the image surface I.

The zoom lens ZL8 according to the present example moves all the five lens groups G1 to G5 in such a manner that upon zooming from the wide angle end state to the telephoto end state, a distance between the first lens group G1 and the second lens group G2 increases, a distance between the second lens group G2 and the third lens group G3 decreases, a distance between the third lens group G3 and the fourth lens group G4 changes, a distance between the fourth lens group G4 and the fifth lens group G5 increases, and the distance between the fifth lens group G5 and the sixth lens group G6 changes, with the sixth lens group G6 fixed. Specifically, upon zooming, the first lens group G1 is moved toward the object side, the second lens group G2 is moved toward the image side, the third lens group G3 is moved toward the object side, the fourth lens group G4 is moved toward the image side and then is moved toward the object side, the fifth lens group G5 is moved toward the image side, and the sixth lens group G6 is fixed relative to the image surface I. The aperture stop S integrally moves with the third lens group G3 toward the object side upon zooming.

In Table 8 below, specification values in Example 8 are listed. Surface numbers 1 to 27 in Table 8 respectively correspond to the optical surfaces m1 to m27 in FIG. 18.

(Table 8)

[Lens specifications]

| Surface number | R | D | nd | νd |
|---|---|---|---|---|
| Obj surface | ∞ | | | |
| 1 | 8.89085 | 0.13208 | 1.795040 | 28.69 |
| 2 | 4.46088 | 0.43868 | 1.497000 | 81.73 |
| 3 | -31.62016 | 0.00943 | | |
| 4 | 3.84519 | 0.34906 | 1.603000 | 65.44 |
| 5 | 14.60955 | D5 (Variable) | | |
| 6 | -15.52439 | 0.11321 | 1.772502 | 49.50 |
| *7 | 1.10451 | 0.41981 | | |
| 8 | -1.86882 | 0.09434 | 1.603000 | 65.44 |
| 9 | 9.45792 | 0.01887 | | |
| 10 | 2.97124 | 0.18396 | 1.945944 | 17.98 |
| 11 | 53.16567 | D11 (Variable) | | |
| 12 | ∞ | 0.09434 | (Stop S) | |
| *13 | 1.38124 | 0.33019 | 1.693500 | 53.20 |
| *14 | -6.87672 | 0.07547 | | |
| 15 | 2.27290 | 0.25943 | 1.497000 | 81.73 |
| 16 | -10.35192 | 0.06604 | 1.728250 | 28.38 |
| 17 | 1.14816 | 0.09434 | | |
| 18 | 3.10652 | 0.25943 | 1.487490 | 70.32 |
| 19 | -2.26350 | D19 (Variable) | | |
| 20 | 7.07547 | 0.09434 | 1.553319 | 71.68 |
| *21 | 2.12367 | D21(Variable) | | |
| *22 | 3.49230 | 0.34906 | 1.618806 | 63.85 |
| 23 | -3.13357 | D23(Variable) | | |
| 24 | -6.15520 | 0.08491 | 1.516800 | 63.88 |
| 25 | 94.33962 | 0.05660 | | |
| 26 | 0.00000 | 0.11038 | 1.516800 | 63.88 |
| 27 | 0.00000 | Bf | | |

(continued)

[Lens specifications]

| Surface number | R | D | nd | νd |
|---|---|---|---|---|
| Img surface | ∞ | | | |

[Aspherical surface data]

7th surface

κ= 0.0000,A4=-1.62825E-02,A6=-9.14805E-03,A8= 0.00000E+00,A10= 0.00000E+00

13th surface

κ= 0.0000,A4=-3.43965E-02,A6= 0.00000E+00,A8= 0.00000E+00,A10= 0.00000E+00

14th surface

κ= 0.0000,A4= 3.97330E-02,A6= 0.00000E+00,A8= 0.00000E+00,A10= 0.00000E+00

21th surface

κ= 0.0000,A4= 0.00000E+00,A6= 4.43810E-02,A8=-5.14186E-02,A10 = 0.00000E+00

22th surface

κ= 0.0000,A4=-3.86599E-02,A6= 1.45631E-02,A8= 0.00000E+00,A10= 0.00000E+00

[Overall specifications]

Zooming rate 10.015094

| | Wide angle end | Intermediate | Telephoto end |
|---|---|---|---|
| f | 1.00000 | 2.17925 | 10.015094 |
| FNo | 2.78608 | 3.41054 | 3.83859 |
| ω | 37.99043 | 18.94664 | 4.14745 |
| TL | 8.44916 | 8.89612 | 11.03760 |
| Bf | 0.13481 | 0.13481 | 0.13458 |

[Zooming data]

| | Wide angle end | Intermediate | Telephoto end |
|---|---|---|---|
| D5 | 0.10879 | 1.28574 | 3.89850 |
| D11 | 2.54544 | 1.27004 | 0.22170 |
| D19 | 0.17547 | 1.16496 | 0.84167 |
| D21 | 1.31096 | 0.97360 | 2.20341 |
| D23 | 0.53972 | 0.43300 | 0.10377 |

[Zoom lens group data]

| Group number | Group starting surface | Group focal length | Lens configuration length |
|---|---|---|---|
| G1 | 1 | 6.48269 | 0.92925 |
| G2 | 6 | -1.18711 | 0.83019 |
| G3 | 13 | 1.80063 | 1.08491 |
| G4 | 20 | -5.52154 | 0.09434 |
| G5 | 22 | 2.72388 | 0.34906 |
| G6 | 24 | -11.17751 | 0.25189 |

[Conditional expression]

Conditional expression (12) $f1/(fw \times ft)^{1/2}$ = 2.033

Conditional expression (13) $f4/(fw \times ft)^{1/2}$ = 1.731

Conditional expression (14) $Dm5/(fw \times ft)^{1/2}$ = 0.137

Conditional expression (15) -f2/ft = 0.117

Conditional expression (16) D5/ft = 0.0343

Conditional expression (17) Dm4/ft = 0.045

Conditional expression (18) ωt = 4.14745

Conditional expression (19) ωw = 37.99043

It can be seen in Table 8 that the zoom lens ZL8 according to Example 8 satisfies the conditional expressions (12) to (19).

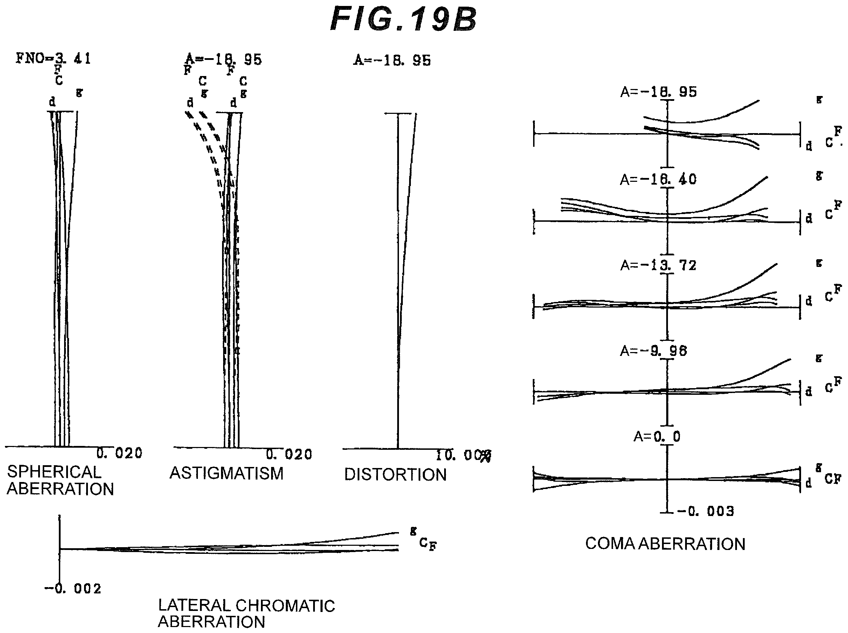

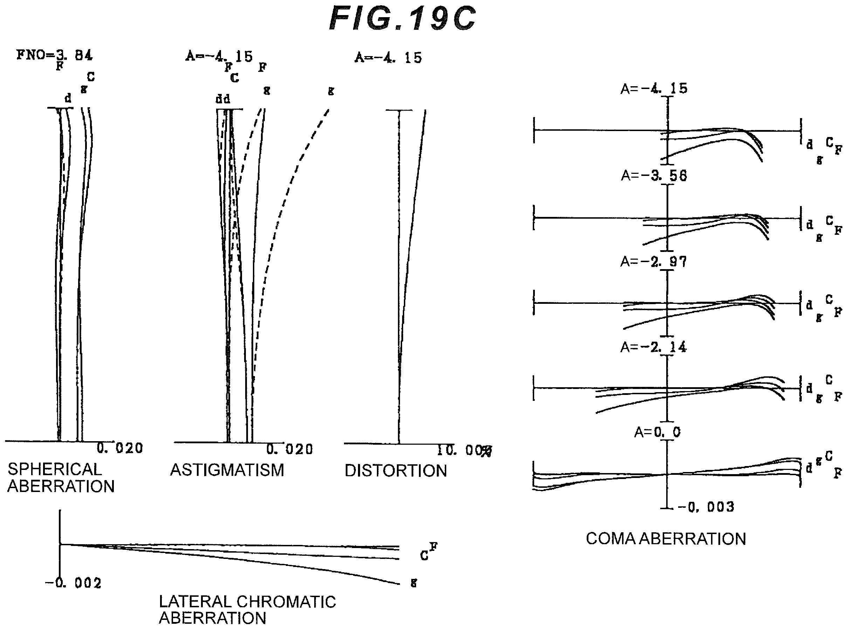

FIGs. 19A, 19B, and 19C are various aberration graphs (a spherical aberration graph, an astigmatism graph, a distortion graph, a coma aberration graph, and a lateral chromatic aberration graph) of the zoom lens ZL8 according to Example 8 upon focusing on infinity with FIG. 19A corresponding to the wide angle end state, FIG. 19B corresponding to the intermediate focal length state, and FIG. 19C corresponding to the telephoto end state.

It can be seen in the aberration graphs in FIGs. 19A, 19B, and 19C that the zoom lens ZL8 according to Example 8 can achieve an excellent imaging performance with various aberrations successfully corrected from the wide angle end state to the telephoto end state.

With the examples described above, a zoom lens having a high zooming rate, and having high optical performance can be provided.

Elements of the 2nd embodiment are described above to facilitate the understanding of the present invention. It is a matter of course that the present invention is not limited to these. The following configurations can be appropriately employed without compromising the optical performance of the zoom lens ZL according to the present application

The numerical values of the configurations with the five and six groups are described as an example of values of the zoom lens ZL according to the 2nd embodiment. However, this should not be construed in a limiting sense, and the present invention can be applied to a configuration with other number of groups (for example, seven groups or the like). More specifically, a configuration further provided with a lens or a lens group closest to an object or further provided with a lens or a lens group closest to the image may be employed. The lens group is a portion including at least one lens separated from another lens with a distance varying upon zooming or focusing.

The zoom lens ZL according to the 2nd embodiment may have the following configuration. Specifically, upon focusing on a short-distant object from infinity, part of a lens group, one entire lens group, or a plurality of lens groups may be moved in the optical axis direction as the focusing lens group. The focusing lens group may be applied to auto focusing, and can be suitably driven by a motor (such as an ultrasonic motor for example) for auto focusing. At least a part of the fourth lens group G4 is especially preferably used as the focusing lens group.

In the zoom lens ZL according to the 2nd embodiment, any of the lens groups may be entirely or partially moved with a component in a direction orthogonal to the optical axis, or may be moved and rotated (swing) within an in-plane direction including the optical axis, to serve as the vibration-proof lens group for correcting image blur due to camera shake or the like. At least a part of the third lens group G3 is especially preferably used as the vibration-proof lens group.

In the zoom lens ZL according to the 2nd embodiment, the lens surface may be formed to have a spherical surface or a planer surface, or may be formed to have an aspherical shape. The lens surface having a spherical surface or a planer surface features easy lens processing and assembly adjustment, which leads to the processing and assembly adjustment less likely to involve an error compromising the optical performance, and thus is preferable. Furthermore, there is an advantage that a rendering performance is not largely compromised even when the image surface is displaced. The lens surface having an aspherical shape may be achieved with any one of an aspherical shape formed by grinding, a glass-molded aspherical shape obtained by molding a glass piece into an aspherical shape, and a composite type aspherical surface obtained by providing an aspherical shape resin piece on a glass surface. A lens surface may be a diffractive surface. The lens may be a gradient index lens (GRIN lens) or a plastic lens.

In the zoom lens ZL according to the 2nd embodiment, the aperture stop S is preferably disposed in the neighborhood of the third lens group G3. Alternatively, a lens frame may serve as the aperture stop so that the member serving as the aperture stop needs not to be provided.

In the zoom lens ZL according to the 2nd embodiment, the lens surfaces may be provided with an antireflection film featuring high transmittance over a wide range of wavelengths to achieve an excellent optical performance with reduced flare and ghosting and increased contrast.

The zoom lens ZL according to the 2nd embodiment has a zooming rate in a range of approximately 5 to 20.


EXPLANATION OF NUMERALS AND CHARACTERS

ZL    (ZL1 to ZL8) zoom lens
G1    first lens group
G2    second lens group
G3    third lens group
G4    fourth lens group
G5    fifth lens group
G6    sixth lens group
S     aperture stop

FL      filter
I       image surface
CAM     digital still camera (optical apparatus)

**Claims**

1.  A zoom lens comprising: a first lens group having positive refractive power; a second lens group having negative refractive power; a third lens group having positive refractive power; a fourth lens group having negative refractive power; and a fifth lens group having positive refractive power which are disposed in order from an object, wherein upon zooming from a wide angle end state to a telephoto end state, the first lens group, the second lens group, the third lens group, the fourth lens group, and the fifth lens group are moved along an optical axis to change a distance between the first lens group and the second lens group, a distance between the second lens group and the third lens group, a distance between the third lens group and the fourth lens group, and a distance between the fourth lens group and the fifth lens group, and
    wherein a following conditional expression is satisfied

    $$2.30 < f5/d4w < 3.60$$

    where,

    f5 denotes a focal length of the fifth lens group, and
    d4w denotes a distance between the fourth lens group and the fifth lens group in the wide angle end state.

2.  The zoom lens according to claim 1, wherein a following conditional expression is satisfied

    $$0.110 < TLt \times f3/(ft \times ft) < 0.134$$

    where,

    TLt denotes the total length of the whole zoom lens in the telephoto end state,
    f3 denotes a focal length of the third lens group, and
    ft denotes a focal lengthof the whole zoom lens in the telephoto end state.

3.  The zoom lens according to claim 1 or 2, wherein upon focusing from infinity to a short-distant object, the fourth lens group is moved toward an image side as a focusing lens group.

4.  The zoom lens according to any one of claims 1 to 3, wherein a following conditional expression is satisfied

    $$32.96 < ft \times ft/\{(-f4) \times d3t\} < 59.21$$

    where,

    ft denotes the focal length of the whole zoom lens in the telephoto end state,
    f4 denotes a focal length of the fourth lens group,
    d3t denotes a distance between the third lens group and the fourth lens group in the telephoto end state.

5.  The zoom lens according to any one of claims 1 to 4, wherein a following conditional expression is satisfied

    $$1.00° < \omega t < 7.50°$$

    where,
    $\omega t$ denotes a half angle of view in the telephoto end state.

**6.** The zoom lens according to any one of claims 1 to 5, wherein a following conditional expression is satisfied

$$32.00° < \omega w < 47.00°$$

where,
$\omega w$ denotes a half angle of view in the wide angle end state.

**7.** The zoom lens according to any one of claims 1 to 6, wherein a following conditional expression is satisfied

$$1.70 < f1/(fw \times ft)^{1/2} < 2.80$$

where,

f1 denotes a focal length of the first lens group,
fw denotes a focal length of the zoom lens in the wide angle end state, and
ft denotes a focal length of the zoom lens in the telephoto end state.

**8.** The zoom lens according to any one of claims 1 to 7, wherein a following conditional expression is satisfied

$$0.67 < f4/(fw \times ft)^{1/2} < 2.10$$

where,

f4 denotes a focal length of the fourth lens group,
fw denotes a focal length of the zoom lens in the wide angle end state, and
ft denotes a focal length of the zoom lens in the telephoto end state.

**9.** The zoom lens according to any one of claims 1 to 8, wherein a following conditional expression is satisfied

$$0.100 < Dm5/(fw \times ft)^{1/2} < 0.270$$

where,

Dm5 denotes a difference in a position of the fifth lens group on the optical axis between the wide angle end state and the telephoto end state (with a value increasing in accordance with displacement toward the image side).
fw denotes a focal length of the zoom lens in the wide angle end state, and
ft denotes a focal length of the zoom lens in the telephoto end state.

**10.** The zoom lens according to any one of claims 1 to 9, wherein a following conditional expression is satisfied

$$0.052 < (-f2)/ft < 0.150$$

where,

f2 denotes a focal length of the second lens group, and
ft denotes a focal length of the zoom lens in the telephoto end state.

**11.** The zoom lens according to any one of claims 1 to 10, wherein a following conditional expression is satisfied

$$0.020 < D5/ft < 0.050$$

where,

D5 denotes a thickness of the fifth lens group on the optical axis, and
ft denotes a focal length of the zoom lens in the telephoto end state.

12. The zoom lens according to any one of claims 1 to 11, wherein a following conditional expression is satisfied

$$0.005 < (-Dm4)/ft < 0.100$$

where,

Dm4 denotes a difference in a position of the fourth lens group on the optical axis between the wide angle end state and the telephoto end state (with a value increasing in accordance with displacement toward the image side), and
ft denotes a focal length of the zoom lens in the telephoto end state.

13. An optical apparatus comprising the zoom lens according to any one of claims 1 to 12.

14. A zoom lens comprising: a first lens group having positive refractive power; a second lens group having negative refractive power; a third lens group having positive refractive power; a fourth lens group having negative refractive power; and a fifth lens group having positive refractive power which are disposed in order from an object, wherein the fifth lens group is moved toward an image side upon zooming from a wide angle end state to a telephoto end state, and
wherein a following conditional expression is satisfied

$$1.96 < f1/(fw \times ft)^{1/2} < 2.80$$

$$0.67 < f4/(fw \times ft)^{1/2} < 2.10$$

where,

f1 denotes a focal length of the first lens group,
f4 denotes a focal length of the fourth lens group,
fw denotes a focal length of the zoom lens in the wide angle end state, and
ft denotes a focal length of the zoom lens in the telephoto end state.

15. The zoom lens according to claim 14, wherein distances among the lens groups change upon zooming from the wide angle end state to the telephoto end state.

16. The zoom lens according to claim 14 or 15, wherein a distance between the first lens group and the second lens group increases and a distance between the second lens group and the third lens group decreases upon zooming from the wide angle end state to the telephoto end state.

17. The zoom lens according to any one of claims 14 to 16, wherein the first lens group moves upon zooming from the wide angle end state to the telephoto end state.

18. The zoom lens according to any one of claims 14 to 17, wherein a following conditional expression is satisfied

$$0.120 < Dm5/(fw \times ft)^{1/2} < 0.270$$

where,
Dm5 denotes a difference in a position of the fifth lens group on the optical axis between the wide angle end state and the telephoto end state (with avalue increasing in accordance with displacement toward the image side).

**19.** The zoom lens according to any one of claims 14 to 18, wherein a following conditional expression is satisfied

$$0.052 < (-f2)/ft < 0.150$$

where,
f2 denotes a focal length of the second lens group.

**20.** The zoom lens according to any one of claims 14 to 19, wherein a following conditional expression is satisfied

$$0.020 < D5/ft < 0.050$$

where,
D5 denotes a thickness of the fifth lens group on the optical axis.

**21.** The zoom lens according to any one of claims 14 to 20, wherein a following conditional expression is satisfied

$$0.005 < (-Dm4)/ft < 0.080$$

where,
Dm4 denotes a difference in a position of the fourth lens group on the optical axis between the wide angle end state and the telephoto end state (with a value increasing in accordance with displacement toward the image side).

**22.** The zoom lens according to any one of claims 14 to 21, wherein the third lens group includes at least one aspherical lens.

**23.** The zoom lens according to any one of claims 14 to 22, wherein a following conditional expression is satisfied

$$1.00° < \omega t < 7.50°$$

where,
$\omega t$ denotes a half angle of view in the telephoto end state.

**24.** The zoom lens according to any one of claims 14 to 23, wherein a following conditional expression is satisfied

$$32.00° < \omega w < 47.00°$$

where,
$\omega w$ denotes a half angle of view in the wide angle end state.

**25.** An optical apparatus comprising the zoom lens according to any one of claims 14 to 24.

**26.** A method for manufacturing a zoom lens including: a first lens group having positive refractive power; a second lens group having negative refractive power; a third lens group having positive refractive power; a fourth lens group having negative refractive power; and a fifth lens group having positive refractive power which are disposed in order from an object,
upon zooming from a wide angle end state to a telephoto end state, the first lens group, the second lens group, the third lens group, the fourth lens group, and the fifth lens group moving along an optical axis to change a distance between the first lens group and the second lens group, a distance between the second lens group and the third lens group, a distance between the third lens group and the fourth lens group, and a distance between the fourth lens group and the fifth lens group, the method comprising:

arranging

42

the lens groups in a lens barrel with a following conditional expression satisfied

$$2.30 < f5/d4w < 3.60$$

where,

f5 denotes a focal length of the fifth lens group, and
d4w denotes a distance between the fourth lens group and the fifth lens group in the wide angle end state.

27. The method for manufacturing a zoom lens according to claim 26, comprising: arranging the lens groups in a lens barrel with a following conditional expression satisfied

$$0.110 < TLt \times f3/(ft \times ft) < 0.134$$

where,

TLt denotes the total length of the whole zoom lens in the telephoto end state,
f3 denotes a focal length of the third lens group, and
ft denotes a focal length of the whole zoom lens in the telephoto end state.

28. The method for manufacturing a zoom lens according to claim 26 or 27, comprising: arranging the lens groups in a lens barrel with a following conditional expression satisfied

$$32.96 < ft \times ft/\{(-f4) \times d3t\} < 59.21$$

where,

ft denotes the focal length of the whole zoom lens in the telephoto end state,
f4 denotes a focal length of the fourth lens group,
d3t denotes a distance between the third lens group and the fourth lens group in the telephoto end state.

29. A method for manufacturing a zoom lens including: a first lens group having positive refractive power; a second lens group having negative refractive power; a third lens group having positive refractive power; a fourth lens group having negative refractive power; and a fifth lens group having positive refractive power which are disposed in order from an object,
the fifth lens group moving toward an image side upon zooming from a wide angle end state to a telephoto end state, the method comprising:

arranging
the lens groups in a lens barrel with a following conditional expression satisfied

$$1.96 < f1/(fw \times ft)^{1/2} < 2.80$$

$$0.67 < f4/(fw \times ft)^{1/2} < 2.10$$

where,

f1 denotes a focal length of the first lens group,
f4 denotes a focal length of the fourth lens group,
fw denotes a focal length of the zoom lens in the wide angle end state, and
ft denotes a focal length of the zoom lens in the telephoto end state.

**30.** The method for manufacturing a zoom lens according to claim 29, comprising: arranging the lens groups in a lens barrel with a following conditional expression satisfied

$$0.120 < \mathrm{Dm5}/(\mathrm{fw} \times \mathrm{ft})^{1/2} < 0.270$$

where,
Dm5 denotes a difference in a position of the fifth lens group on the optical axis between the wide angle end state and the telephoto end state (with a value increasing in accordance with displacement toward the image side).

FIG.1

EXAMPLE 1

(W)

(M)

(T)

ZL(ZL1)

m1 m2 m3 m4 m5 m6 m7 m8 m9 m10 m11 m12 m13 m14 m15 m16 m17 m18 m19 m20 m21 m22 m23 m24 m25 m26 m27

S

I

L11 L12 L13
G1(+)

L21 L22 L23
G2(−)

L31 L32 L33 L34
G3(+)

L41
G4(−)

FL

L51
G5(+)

EP 3 264 152 A1

FIG.2A

# FIG.2B

PNO=4.79

SPHERICAL
ABERRATION

A=-13.99

ASTIGMATISM

A=-13.99

DISTORTION

0.200     0.200     5.000%

LATERAL CHROMATIC
ABERRATION

-0.020

A=-14.06

A=-12.22

A=-10.11

A=-7.39

A=0.0

-0.030

COMA ABERRATION

EP 3 264 152 A1

# FIG.2C

SPHERICAL ABERRATION

PNO=5. 83

0. 200

ASTIGMATISM

A=-4. 18

0. 200

DISTORTION

A=-4. 18

5. 000%

LATERAL CHROMATIC ABERRATION

-0. 020

COMA ABERRATION

A=-4.16

A=-3.59

A=-2.95

A=-2.15

A=0.0

-0. 030

FIG.3

EXAMPLE 2

(W)

m1 m3 m5
m2 m4
m6 m8 m10
m7 m9 m11
m12 m14 m16 m18 m20
m13 m15 m17 m19 m21
m22 m24 m26 m28
m23 m25 m27 m29
ZL(ZL2)

(M)

(T)

S

I

L11 L12 L13
G1(+)

L21 L22 L23
G2(−)

L31 L32 L33 L34
G3(+)

L41
G4(−)

L51 L52
G5(+)

FL

# FIG.4A

COMA ABERRATION

A=-42. 13

A=-36. 51

A=-30. 36

A=-21. 91

A=0. 0

-0. 030

A=-42. 13

5. 000%

DISTORTION

A=-42. 13

0. 200

ASTIGMATISM

FNO=2. 84

0. 200

SPHERICAL ABERRATION

LATERAL CHROMATIC ABERRATION

-0. 020

# FIG.4B

PNO=4. 33

A=-13. 73

A=-13. 73

0. 200

0. 200

5. 000%

SPHERICAL ABERRATION

ASTIGMATISM

DISTORTION

-0. 020

LATERAL CHROMATIC ABERRATION

A=-13. 73

A=-12. 01

A=-10. 00

A=-7. 35

A=0. 0

-0. 030

COMA ABERRATION

EP 3 264 152 A1

# FIG.4C

FNO=5. 06

SPHERICAL
ABERRATION

A=-4. 16

ASTIGMATISM

A=-4. 16

DISTORTION

LATERAL CHROMATIC
ABERRATION

A=-4. 16

A=-3. 59

A=-2. 95

A=-2. 15

A=0. 0

COMA ABERRATION

EP 3 264 152 A1

*FIG.5*

EXAMPLE 3

ZL(ZL3)

(W)

(M)

(T)

m1 m2 m3 m4 m5 m6 m7 m8 m9 m10 m11 m12 m13 m14 m15 m16 m17 m18 m19 m20 m21 m22 m23 m24 m25 m26 m27 m28 m29

L11 L12 L13 / G1(+)
L21 L22 L23 / G2(−)
S
L31 L32 L33 L34 / G3(+)
L41 / G4(−)
L51 L52 / G5(+)
FL
I

FIG.6A

# FIG.6B

FNO=4.41

SPHERICAL
ABERRATION

A=-14.06

ASTIGMATISM

A=-14.06

DISTORTION

0.200

0.200

5.000%

-0.020

LATERAL CHROMATIC
ABERRATION

A=-14.06

A=-12.22

A=-10.11

A=-7.39

A=0.0

-0.030

COMA ABERRATION

EP 3 264 152 A1

*FIG.6C*

FIG.7

EXAMPLE 4

(W)

(M)

(T)

m1 m3 m5
m2 m4
m6 m8 m10
m7 m9 m11
m12 m14 m16 m18 m20   m22 m24 m26
m13 m15 m17 m19 m21   m23 m25 m27

ZL(ZL4)

S

I

FL

L11 L12 L13
G1(+)

L21 L22 L23
G2(−)

L31 L32 L33 L34
G3(+)

L41
G4(−)

L51
G5(+)

FIG.8A

FIG.8B

FNO=5.19
SPHERICAL ABERRATION

A=-13.87
ASTIGMATISM

A=-13.87
DISTORTION

LATERAL CHROMATIC ABERRATION

COMA ABERRATION

# FIG.8C

FNO=5.74

A=-4.15

A=-4.15

U. 200
SPHERICAL
ABERRATION

0.200
ASTIGMATISM

5.000%
DISTORTION

-0.020
LATERAL CHROMATIC
ABERRATION

A=-4.15

d

A=-3.58

g

d

A=-2.95

g

d

A=-2.15

g

d

A=0.0

g

d

-0.030

g

COMA ABERRATION

FIG.9A

FIG.9B

FIG.10

# FIG.11

START

ARRANGE LENSES IN BARREL IN SUCH A MANNER THAT FIRST LENS GROUP G1 HAVING POSITIVE REFRACTIVE POWER, SECOND LENS GROUP G2 HAVING NEGATIVE REFRACTIVE POWER, THIRD LENS GROUP G3 HAVING POSITIVE REFRACTIVE POWER, FOURTH LENS GROUP G4 HAVING NEGATIVE REFRACTIVE POWER, AND FIFTH LENS GROUP G5 HAVING POSITIVE REFRACTIVE POWER ARE DISPOSED IN ORDER FROM OBJECT — ST10

ARRANGE LENSES IN BARREL IN SUCH A MANNER THAT UPON ZOOMING FROM WIDE ANGLE END STATE TO TELEPHOTO END STATE, THE FIRST LENS GROUP G1 TO THE FIFTH LENS GROUP G5 ARE MOVED ALONG OPTICAL AXIS TO CHANGE DISTANCE BETWEEN FIRST LENS GROUP G1 AND SECOND LENS GROUP G2, DISTANCE BETWEEN SECOND LENS GROUP G2 AND THIRD LENS GROUP G3, DISTANCE BETWEEN THIRD LENS GROUP G3 AND FOURTH LENS GROUP G4, AND DISTANCE BETWEEN FOURTH LENS GROUP G4 AND FIFTH LENS GROUP G5 — ST20

ARRANGE LENSES IN SUCH A MANNER THAT PREDETERMINED CONDITIONAL EXPRESSION IS SATISFIED — ST30

END

# FIG.12

ZL(ZL5)

(W)

m1 m3 m5
m2 m4
m6 m8 m10
m7 m9 m11

m12
m13 m15 m17 m19
m14 m16 m18
m20
m21
m22 m23
m24 m25

FL I

L11 L12 L13 L21 L22 L23
G1(+) G2(−)

S L31 L32 L33 L34 L41 L51
G3(+) G4(−) G5(+)

(T)

EP 3 264 152 A1

# FIG.13A

SPHERICAL
ABERRATION

ASTIGMATISM

DISTORTION

LATERAL CHROMATIC
ABERRATION

COMA ABERRATION

EP 3 264 152 A1

# FIG.13B

FNO=3. 87

A=-13. 00

A=-13. 00

SPHERICAL
ABERRATION

ASTIGMATISM

DISTORTION

0. 020

0. 020

10. 00%

A=-13. 00

A=-11. 24

A=-9. 39

A=-6. 82

A=0. 0

-0. 003

COMA ABERRATION

-0. 002

LATERAL CHROMATIC
ABERRATION

EP 3 264 152 A1

# FIG.13C

FNO=4.10

A=−4.15

A=−4.15

SPHERICAL
ABERRATION

ASTIGMATISM

DISTORTION

0.020

0.020

10.00%

LATERAL CHROMATIC
ABERRATION

−0.002

A=−4.15

A=−3.56

A=−2.97

A=−2.15

A=0.0

−0.003

COMA ABERRATION

EP 3 264 152 A1

# FIG.14

EP 3 264 152 A1

*FIG.15A*

# FIG.15B

FNO=4.42

Y=0.77

Y=0.77

F
C
d g

F
C
F
C
g d g d

SPHERICAL
ABERRATION

ASTIGMATISM

DISTORTION

0.020

0.020

10.00%

A=-12.98

g
F
d C

A=-11.24

g
F
d C

A=-9.41

g
F
d C

A=-8.83

g
F
d C

A=0.0

g
d CF

-0.003

COMA ABERRATION

g C
F

-0.002

LATERAL CHROMATIC
ABERRATION

EP 3 264 152 A1

**FIG.15C**

FIG.16

# FIG.17A

FNO=2.06

SPHERICAL
ABERRATION

Y=0.77

ASTIGMATISM

Y=0.77

DISTORTION

LATERAL CHROMATIC
ABERRATION

A=-42.03

A=-38.45

A=-30.34

A=-21.84

A=0.0

COMA ABERRATION

EP 3 264 152 A1

*FIG.17B*

# FIG.17C

FNO=4.17

SPHERICAL
ABERRATION

Y=0.90

ASTIGMATISM

Y=0.90

DISTORTION

LATERAL CHROMATIC
ABERRATION

A=-4.15

A=-3.58

A=-2.98

A=-2.15

A=0.0

COMA ABERRATION

EP 3 264 152 A1

FIG.18

FIG.19A

*FIG.19B*

# FIG.19C

FNO=3.84    A=-4.15    A=-4.15

SPHERICAL
ABERRATION

ASTIGMATISM

DISTORTION

0.020    0.020    10.00%

LATERAL CHROMATIC
ABERRATION

-0.002

A=-4.15

A=-3.56

A=-2.97

A=-2.14

A=0.0

-0.003

COMA ABERRATION

EP 3 264 152 A1

*FIG.20A*

*FIG.20B*

## FIG.21

EP 3 264 152 A1

# FIG.22

START

ARRANGE LENSES IN BARREL IN SUCH A MANNER THAT FIRST LENS GROUP G1 HAVING POSITIVE REFRACTIVE POWER, SECOND LENS GROUP G2 HAVING NEGATIVE REFRACTIVE POWER, THIRD LENS GROUP G3 HAVING POSITIVE REFRACTIVE POWER, FOURTH LENS GROUP G4 HAVING NEGATIVE REFRACTIVE POWER, AND FIFTH LENS GROUP G5 HAVING POSITIVE REFRACTIVE POWER ARE ARRANGED IN ORDER FROM OBJECT IN SUCH A MANNER THAT ZOOMING IS PERFORMED BY CHANGING DISTANCES AMONG THE LENS GROUPS — ST110

ARRANGE LENSES IN BARREL IN SUCH A MANNER THAT FIFTH LENS GROUP G5 IS MOVED TOWARD IMAGE SIDE UPON ZOOMING FROM WIDE ANGLE END STATE TO TELEPHOTO END STATE — ST120

ARRANGE LENSES IN SUCH A MANNER THAT PREDETERMINED CONDITIONAL EXPRESSION IS SATISFIED — ST130

END

## INTERNATIONAL SEARCH REPORT

| | International application No. |
|---|---|
| | PCT/JP2016/054823 |

**A. CLASSIFICATION OF SUBJECT MATTER**
*G02B15/20*(2006.01)i

According to International Patent Classification (IPC) or to both national classification and IPC

**B. FIELDS SEARCHED**

Minimum documentation searched (classification system followed by classification symbols)
G02B9/00-17/08, G02B21/02-21/04, G02B25/00-25/04

Documentation searched other than minimum documentation to the extent that such documents are included in the fields searched
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>A | JP 2014-235238 A (Sony Corp.),<br>15 December 2014 (15.12.2014),<br>entire text; all drawings; particularly, 1st<br>carrying-out mode (numerical example 1); 5th<br>carrying-out mode (numerical example 5); 8th<br>carrying-out mode (numerical example 8)<br>& US 2014/0354857 A1<br>entire text; all drawings; particularly, first,<br>fifth, eighth embodiments<br>& US 9235036 B2       & CN 104216098 A | 1,3,5-8,10,<br>12-13,26<br>2,4,9,11,<br>27-28 |

| ☒ Further documents are listed in the continuation of Box C. | ☐ See patent family annex. |
|---|---|

| \* | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 28 April 2016 (28.04.16) | 17 May 2016 (17.05.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2016/054823 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2012-159580 A  (Olympus Imaging Corp.), 23 August 2012 (23.08.2012), | 1-5,9-13, 26-28 |
| A | entire text; all drawings; particularly, example 1 (numerical example 1) to  example 3 (numerical example 3) & US 2012/0194730 A1 entire text; all drawings; particularly, examples 2, 3, 6 & US 8564711 B2          & JP 5695433 B2 | 6-8 |
| X | JP 2012-48213 A  (Nikon Corp.), 08 March 2012 (08.03.2012), | 1-8,10,13, 26-28 |
| A | entire text; all drawings; particularly, 1st, 3rd, 4th examples & US 2012/0105966 A1 entire text; all drawings; particularly, examles 1, 6, 7 & CN 102346293 A | 9,11-12 |
| X | JP 2011-252962 A  (Olympus Imaging Corp.), 15 December 2011 (15.12.2011), | 1-2,4-8, 10-13,26-28 |
| A | entire text; all drawings; particularly, example 1 (numerical example 1); example 3 (numerical example 3) & US 2011/0292253 A1 entire text; all drawings; particularly, first embodiment (example 1), third embodiment (example 3) & US 8441556 B2 | 3,9 |
| X | JP 2011-90265 A  (Sony Corp.), 06 May 2011 (06.05.2011), | 1-2,5-13, 26-27 |
| A | entire text; all drawings; particularly, 1st, 3rd numerical examples & US 2011/0085248 A1 entire text; all drawings; particularly, first embodiment (first numerical example); third embodiment (third numerical example) & US 8228620 B2          & CN 102033306 A & CN 102033306 B | 3-4,28 |
| X | JP 2009-156890 A  (Nikon Corp.), 16 July 2009 (16.07.2009), | 1,3-8,10,13, 26,28 |
| A | entire text; all drawings; particularly, 1st to 5th examples & US 2009/0161227 A1 entire text; all drawings; particularly, examples 1 to 8 & US 7839577 B2          & EP 2075613 A2 & CN 101470255 A          & CN 101470255 B & CN 104777598 A          & JP 5152490 B2 | 2,9,11-12,27 |

Form PCT/ISA/210 (continuation of second sheet) (January 2015)

**INTERNATIONAL SEARCH REPORT**

International application No.

PCT/JP2016/054823

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2008-216440 A (Canon Inc.),<br>18 September 2008 (18.09.2008),<br>entire text; all drawings; particularly,<br>examples 1, 3 to 5<br>& US 2008/0212206 A1<br>entire text; all drawings; particularly,<br>numerical examples 1, 3 to 5<br>& US 7532412 B2        & EP 1965241 A1<br>& EP 1965241 B1        & CN 101256271 A<br>& CN 101256271 B        & JP 5064837 B2 | 1-3,5-6,<br>10-13,26-27<br>4,7-9,28 |
| X<br>A | US 2014/0078596 A1 (SAMSUNG ELECTRONICS CO.,<br>LTD.),<br>20 March 2014 (20.03.2014),<br>entire text; all drawings; particularly, first,<br>third embodiments<br>& US 8982475 B2        & EP 2708933 A1<br>& KR 10-2014-0035691 A   & CN 103676117 A | 1-2,4-8,<br>10-13,26-28<br>3,9 |

Form PCT/ISA/210 (continuation of second sheet) (January 2015)

**INTERNATIONAL SEARCH REPORT**

| International application No. |
|---|
| PCT/JP2016/054823 |

| **Box No. II** | **Observations where certain claims were found unsearchable (Continuation of item 2 of first sheet)** |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| **Box No. III** | **Observations where unity of invention is lacking (Continuation of item 3 of first sheet)** |
|---|---|

This International Searching Authority found multiple inventions in this international application, as follows:
     See extra sheet (continuation of Box No. III).

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
     1-13 and 26-28

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

| INTERNATIONAL SEARCH REPORT | International application No. |
|---|---|
| | PCT/JP2016/054823 |

Continuation of Box No.III of continuation of first sheet(2)

Document 1: JP 2013-140307 A (Canon Inc.), 18 July 2013 (18.07.2013), entire text; all drawings; particularly, numerical example 4 (Family: none)

Document 2: JP 2012-247564 A (Olympus Imaging Corp.), 13 December 2012 (13.12.2012), entire text; all drawings; particularly, numerical examples 1 to 10 & US 2012/0300096 A1 entire text; all drawings; particularly, examples 1 to 10 & US 8416505 B2 & JP 5695498 B2

Claims are classified into the following two inventions.

(Invention 1) claims 1-13 and 26-28

Claims 1 and 26 are classified into Invention 1 because the claims have a special technical feature, i.e., "a zoom lens comprising: a first lens group having positive refractive power, a second lens group having negative refractive power, a third lens group having positive refractive power, a fourth lens group having negative refractive power, and a fifth lens group having positive refractive power, which are arranged sequentially in that order from an object along an optical axis, the zoom lens being characterized in that the first lens group, the second lens group, the third lens group, the fourth lens group, and the fifth lens group are displaced along the optical axis so as to vary the separation between the first lens group and the second lens group, the separation between the second lens group and the third lens group, the separation between the third lens group and the fourth lens group, and the separation between the fourth lens group and the fifth lens group, thereby varying power from a wide-angle end state to a telephoto end state to satisfy the following conditional expression: $2.30 < f5/d4w < 3.60$, where $f5$ is the focal distance of the fifth lens group, and $d4w$ is the separation between the fourth lens group and the fifth lens group in a wide-angle end state."

(Invention 2) claims 14-25 and 29-30

Claims 14 to 25, and 29 to 30 have a technical feature common to claims 1 and 26 classified into Invention 1, i.e., "a zoom lens comprising: a first lens group having positive refractive power, a second lens group having negative refractive power, a third lens group having positive refractive power, a fourth lens group having negative refractive power, and a fifth lens group having positive refractive power, which are arranged sequentially in that order from an object along an optical axis, wherein the fifth lens group is displaced along the optical axis to thereby vary power from a wide-angle end state to a telephoto end state."

However, although the above-said technical feature has been already known and conventionally known technique without necessity for particular exemplification, said technical feature cannot be considered to be a special technical feature, since the technical feature does not make a contribution over the prior art in the light of the contents disclosed in, for example, the document 1 and the document 2 which are cited by the applicant as prior art documents.

Further, there is no other same or corresponding special technical feature between claims 14-25 and 29-30 and claim 1 or 26.

In addition, claims 14-25 and 29-30 are not dependent on claim 1 or 26.

Further, claims 14-25 and 29-30 have no relationship such that these claims are substantially same as or equivalent to any claim classified into Invention 1.

Consequently, claims 14-25 and 29-30 cannot be classified into Invention 1.

(Continued to next extra sheet)

Form PCT/ISA/210 (extra sheet) (January 2015)

**INTERNATIONAL SEARCH REPORT**

| International application No. |
| --- |
| PCT/JP2016/054823 |

Then, claims 14 to 25, and 29 to 30 are classified into Invention 2 because the claims have a special technical feature, i.e., "a zoom lens comprising: a first lens group having positive refractive power, a second lens group having negative refractive power, a third lens group having positive refractive power, a fourth lens group having negative refractive power, and a fifth lens group having positive refractive power, which are arranged sequentially in that order from an object along an optical axis, the zoom lens being characterized in that when power is varied from a wide-angle end state to a telephoto end state, the fifth lens group is displaced towards an image, and the following conditional expressions are satisfied: $1.96 < f1/(fw \times ft)^{1/2} < 2.80$, and $0.67 < f4/(fw \times ft)^{1/2} < 2.10$, where f1 is the focal distance of the first lens group, f4 is the focal distance of the fourth lens group, fw is the focal distance of the zoom lens in a wide-angle end state, and ft is the focal distance of the zoom lens in a telephoto end state."

Subject to be covered by this search:
Concerning the lens configuration of a zoom lens, specified in claim 1 is "having a fifth lens group...," and concerning the lens configuration of a zoom lens, specified in claim 26 is "having a fifth lens group..." It is thus understood that the inventions of claims 1 and 26 may include a zoom lens with another lens group further added to the zoom lens of the five-group structure. However, disclosed in the description as a specific example of a zoom lens is only a zoom lens comprising in the following order sequentially from an object along an optical axis: a first lens group having positive refractive power, a second lens group having negative refractive power, a third lens group having positive refractive power, a fourth lens group having negative refractive power, and a fifth lens group having positive refractive power.
Furthermore, in the technical field of optics, it is common general knowledge that a different lens configuration such as a different number of lens groups constituting an optical system may typically result in a different optical performance such as aberration. Furthermore, no evidence can be found to extend or generalize the contents disclosed in the description to the extent of the inventions according to claims 1 and 26.
Further, the above-said opinion may be also applied to claims dependent on claims 1 and 26.
Consequently, the inventions of claims 1-13 and 26-28 exceed the range set forth in the description, and do not comply with the requirement of the support prescribed under PCT Article 6.
Therefore, no meaningful search could be carried out on and thus no search was conducted on other than a zoom lens which comprises in the following order sequentially from an object along an optical axis: a first lens group having positive refractive power, a second lens group having negative refractive power, a third lens group having positive refractive power, a fourth lens group having negative refractive power, and a fifth lens group having positive refractive power.

Form PCT/ISA/210 (extra sheet) (January 2015)

**REFERENCES CITED IN THE DESCRIPTION**

**Patent documents cited in the description**

- JP 2013140307 A

- JP 2012247564 A